# EUROPEAN PATENT SPECIFICATION

(11) **EP 4 066 139 B1**
(45) Date of publication and mention of the grant of the patent: **25.02.2026**
(21) Application number: 20962739.7
(22) Date of filing: 25.11.2020
(51) Int. Cl.: G06F 21/62, H04L 9/32, H04L 9/00, G06F 21/64

(54) **BLOCKCHAIN-BASED TRUSTED PLATFORM**
BLOCKCHAIN-BASIERTE VERTRAUENSWÜRDIGE PLATTFORM
PLATEFORME DE CONFIANCE BASÉE SUR UNE CHAÎNE DE BLOCS

(43) Date of publication of application: 05.10.2022
(73) Proprietor: Ant Blockchain Technology (Shanghai) Co., Ltd., Shanghai 200010 (CN)
(72) Inventor: LI, Zhiguo, Hangzhou, Zhejiang 310000 (CN)
(74) Representative: Fish & Richardson P.C.
(86) International application number: PCT/CN2020/131398
(87) International publication number: WO 2022/109848

(56) References cited:
- EP-A1- 3 621 013
- WO-A1-2020/048054
- CN-A- 109 254 951
- CN-A- 110 427 774
- CN-A- 110 535 970
- CN-A- 110 941 840
- CN-A- 110 941 840

## Description

### TECHNICAL FIELD

This specification relates to blockchain-based trusted platforms for enabling trusted digital transactions.

### BACKGROUND

Distributed ledger systems (DLSs), which can also be referred to as consensus networks, and/or blockchain networks, enable participating entities to securely, and immutably store data. DLSs are commonly referred to as blockchain networks without referencing any particular user case. Examples of types of blockchain networks can include public blockchain networks, private blockchain networks, and consortium blockchain networks. A consortium blockchain network is provided for a select group of entities, which control the consensus process, and includes an access control layer.

In existing technologies, blockchain nodes can generally use a standardized format to record ledger data on a blockchain. If a blockchain node of a blockchain network receives a request from a requestor to record ledger data on a blockchain associated with the blockchain network, the requestor may not follow the standardized format of the blockchain network, and thus data fields included in the ledger data to be recorded may not be the same as data fields provided in the standardized format of the blockchain network. Consequently, the recording can fail because the ledger data to be recorded does not satisfy the standardized format of the blockchain node that is to record the ledger data.

It would be desirable to reduce recording failures due to not satisfying the standardized format of the blockchain node that is to record the ledger data.
CN 110941840 describes a data processing method to ensure that a platform protocol or activity announcement data of a user platform can be open and transparent and not tampered with.

### SUMMARY

Described embodiments of the subject matter can include one or more features, alone or in combination.

For example, in one embodiment, a method includes: receiving, from a client device and via a recording input interface, first ledger data to be recorded on a blockchain; determining whether original ledger data associated with the first ledger data satisfies a recording rule, wherein the recording rule comprises one or more recording input parameters associated with the recording input interface; in response to determining that the original
ledger data associated with the first ledger data satisfies the recording rule, recording the original ledger data on the blockchain; generating a recording receipt associated with the first ledger data; and transmitting, to the client device and via a recording output interface, the recording receipt.

In some embodiments, these general and specific aspects may be implemented using a system, a method, or a computer program, or any combination of systems, methods, and computer programs. The foregoing and other described embodiments can each, optionally, include one or more of the following aspects:

In some embodiments, the method further includes: receiving, from the client device and via a verification input interface, second ledger data; determining whether the second ledger data satisfies a verification rule, wherein the verification rule comprises one or more verification input parameters associated with the verification input interface; in response to determining that the second ledger data satisfies the verification rule, determining whether the second ledger data corresponds to the original ledger data recorded on the blockchain; in response to determining that the second ledger data corresponds to the original ledger data recorded on the blockchain, generating a verification receipt associated with the second ledger data, wherein the verification receipt indicates that raw data associated with the second ledger data is not tampered with; and transmitting, to the client device and via a verification output interface, the verification receipt.

In some embodiments, determining whether the second ledger data corresponds to the original ledger data comprises determining whether a first hash value comprised in the original ledger data matches a second hash value comprised in the second ledger data.

**In** some embodiments, the first ledger data comprises a bit stream, wherein before receiving the first ledger data, the client device converts the original ledger data to the bit stream based on a conversion rule, and wherein the computer-implemented method further comprises: converting, based on the conversion rule, the bit stream to obtain the original ledger data.

In some embodiments, the conversion rule comprises at least one of: a coding scheme corresponding to each recording input parameter of the one or more recording input parameters; or an order to arrange the one or more recording input parameters in the bit stream.

In some embodiments, the method further includes: invoking a trusted timing module to generate a first recording timestamp representing a time that the first ledger data is received; invoking a trusted identity module to verify a user identity associated with the client device; invoking the trusted timing module to generate a second recording timestamp representing a time that the original ledger data is recorded on the blockchain; and invoking a trusted computing module to generate a blockchain transaction comprising the original ledger data, the user identity, the first recording timestamp, and the second recording timestamp.

In some embodiments, the method further includes: before receiving the first ledger data, establishing a secure communication channel with the client device based on at least one of a two-way transport layer security (TLS) protocol, a two-way hypertext transfer protocol secure (HTTPS) protocol, or a one-way HTTPS protocol.

In some embodiments, the first ledger data is associated with a first data file, and wherein the one or more recording input parameters comprise one or more of a hash value of the first data file, attribute information of the first data file, service information of the first data file, a timestamp of the first data file, and signature data of the first data file.

In some embodiments, the second ledger data is associated with a second data file, and wherein the one or more verification input parameters comprise one or more of a hash value of the second data file, service information of the second data file, a timestamp of the second data file, and signature data of the second data file.

In some embodiments, the client device is associated with an additional blockchain that is different from the blockchain.

It is appreciated that methods in accordance with this specification may include any combination of the aspects and features described herein. That is, methods in accordance with this specification are not limited to the combinations of aspects and features specifically described herein, but also include any combination of the aspects and features provided.

The details of one or more embodiments of this specification are set forth in the accompanying drawings and the description below. Other features and advantages of this specification will be apparent from the description and drawings, and from the claims.

### BRIEF DESCRIPTION OF THE DRAWINGS

FIG. 1 is a diagram illustrating an example of an environment that can be used to execute embodiments of this specification.
FIG. 2 is a diagram illustrating an example of an architecture in accordance with embodiments of this specification.
FIG. 3 depicts an example of a system for blockchain transactions in accordance with embodiments of this specification.
FIG. 4 depicts an example of a blockchain data recordation process in a service system mode that can be executed in accordance with embodiments of this specification.
FIG. 5 depicts an example of a blockchain data verification process in the service system mode that can be executed in accordance with embodiments of this specification.
FIG. 6 depicts an example of a blockchain data recordation process in a blockchain platform mode that can be executed in accordance with embodiments of this specification.
FIG. 7 depicts an example of a blockchain data verification process in a blockchain-platform-mode that can be executed in accordance with embodiments of this specification.
FIG. 8 is a schematic diagram illustrating an example of a blockchain-based trusted platform in accordance with embodiments of this specification.
FIG. 9 is a diagram illustrating an example of a system for online transaction in accordance with embodiments of this specification.
FIG. 10 is a diagram illustrating an example of a system for providing trusted timing in accordance with embodiments of this specification.
FIG. 11 is a diagram illustrating an example of a system for providing trusted identity in accordance with embodiments of this specification.
FIG. 12 is a diagram illustrating an example of a system for trusted execution in accordance with embodiments of this specification.
FIG. 13 is a diagram illustrating an example of an architecture for blockchain security in accordance with embodiments of this specification.
FIG. 14 is a diagram illustrating an example of a cross-chain communication system in accordance with embodiments of this specification.
FIG. 15 depicts an example of a process for cross-chain communication that can be executed in accordance with embodiments of this specification.
FIG. 16 depicts an example of data storage in a blockchain-based trusted platform in accordance with embodiments of this specification.
FIG. 17 depicts an example of a system for implementing a blockchain-based trusted platform in accordance with embodiments of this specification.
FIG. 18 depicts an example of a process for recording ledger data in accordance with embodiments of this specification.
FIG. 19 depicts an example of a process for verifying ledger data in accordance with embodiments of this specification.
FIG. 20 depicts an example of cross-chain and cross-network data transmission in accordance with embodiments of this specification.
FIG. 21 depicts an example of a process of cross-chain and cross-network data transmission in accordance with embodiments of this specification.
FIG. 22 depicts an example of cross-network and cross-chain data communications, in accordance with embodiments of this specification.
FIG. 23 depicts an example of a blockchain-based trusted platform, in accordance with embodiments of this specification.
FIG. 24 depicts another example of a blockchain-based trusted platform, in accordance with embodiments of this specification.
FIG. 25 depicts an example of a process that can be executed in accordance with embodiments of this specification.
FIG. 26 depicts examples of modules of an apparatus in accordance with embodiments of this specification.

Like reference numbers and designations in the various drawings indicate like elements.

### DETAILED DESCRIPTION

This specification describes technologies for blockchain-based trusted platform. These technologies generally involve blockchain transactions in the blockchain-based trusted platform.

This specification also describes technologies for blockchain nodes to record or verify ledger data. In existing technologies, blockchain nodes can generally use a standardized format to record ledger data on a blockchain. For example, state data can be stored as key-value pairs in a tree structure. The tree structure can include one or more predetermined data fields. When a blockchain node of a blockchain network receives a request from a requestor to record ledger data on a blockchain associated with the blockchain network, the requestor may not follow the standardized format of the blockchain network, and thus data fields included in the ledger data to be recorded may not be the same as data fields provided in the standardized format of the blockchain network. For example, the requestor can be a different blockchain node of a different blockchain network, where the requestor's blockchain network uses a different standardized format and the ledger data to be recorded can include data fields that are different from the data fields provided in the standardized format of the blockchain node recording the ledger data. The request to record the ledger data on the blockchain can then fail due to the mismatch of data fields.

Even if the requestor generates original ledger data that satisfies the standardized format of the blockchain network, another problem can emerge when the requestor converts the original ledger data to a bit stream and sends the bit stream to the blockchain node that is to record the original ledger data, where the blockchain node needs to decode the bit stream to obtain the original ledger data and records the original ledger data. For example, the blockchain node to record the original ledger data and the blockchain node of the requestor can utilize different conversion rules for the conversions between original ledger data and bit streams, and as a result, ledger data that is decoded by the blockchain node for recording may not be the same as the original ledger data. Consequently, the recording can fail because the decoded ledger data may not satisfy the standardized format of the blockchain node that records the original ledger data, even though the original ledger data can satisfy the standardized format.

The current disclosure describes a possible solution to this problem. A blockchain node of a blockchain network can determine a recording rule that includes one or more recording input parameters for ledger data to be recorded. The recording rule can be made publicly available such that the requestor can include the one or more recording input parameters in the ledger data to be recorded. The recording rule can further include a bit stream conversion rule, such that the requestor and the blockchain node can use the same bit stream conversion rule in the conversions between original ledger data and bit streams.

This specification also describes technologies for cross-network and cross-chain communications. A blockchain node of a blockchain network can perform cross-network and cross-chain communications with a different blockchain node of a different blockchain network. For example, the lifecycle of a contract can involve a plurality of steps, such as negotiating the contract, signing the contract, recording the contract, enforcing the contract, etc., and the plurality of steps can involve a plurality of entities, such as parties of the contract, financial institutions, judicial institutes, government agencies, etc. Some entity, such as financial institutions, judicial institutes, and government agencies, can require a high standard of data privacy and security, so it can employ a secure private computer network, which is air gapped from the Internet, to connect its computing devices, such that a computing device of the Internet cannot exchange data with a computing device of the private network without permission. Some entity, such as a party of the contract, may not require such high standard of data privacy and security, so it can rely on the Internet to connect its computing devices. The isolation of the Internet and the private network creates a technical problem of transferring data between the Internet and the private network, in particular when an entity associated with the Internet needs to communicate with an entity associated with the private network. The existing approaches can require using an external storage, such as a USB flash drive, an external hard disk, or other removable media, to transfer data between the Internet and the private network.

This problem can be magnified when the two computing devices of two different computer networks are associated with two different blockchain networks. For example, the computing device associated with the Internet can be a blockchain node of a blockchain network and the computing device associated with the private network can be a different blockchain node of a different blockchain network. There can be challenges in the cross-chain communications between the blockchain node associated with the Internet and the blockchain node associated with the private network. For example, raw data can be stored on the blockchain associated with the Internet in a standardized format that includes one or more data fields. However, the blockchain network associated with the private network can only parse a different standardized format. As a result, the blockchain node associated with the private network may not be able to parse the raw data that is sent by the blockchain node associated with the Internet.

To handle data transfers between two blockchain nodes that are associated with two different computer networks and two different blockchain networks, existing technologies can require an entity associated with a blockchain network to apply for permission to transfer data with the other blockchain network. For example, an entity needs to fill out a plurality of application forms for the data transfer and the application forms require manual reviews. Also, a conversion rule may need to be negotiated to format the data to be transferred such that the blockchain node receiving the data can use the conversion rule to convert the data into a standardized format that can be parsed by the blockchain node. The manual review process and the negotiation of the conversion rule generally take a long time to complete and thus reduce the efficiencies of data transfers. Further, as the data transfer can rely on removable media and manual shipping of the removable media, the data being transferred can have a risk of leaking from the removable media in the shipping process, and thus the data privacy and security are low.

The current disclosure describes a possible solution to this problem. A gateway can be deployed to interconnect the Internet and the private network. When raw data is being transferred from a blockchain node to another blockchain node, the blockchain node sending the raw data can encrypt the raw data and send the cyphertext to the gateway, such that the plaintext of the raw data is not exposed in the data transfer. The other blockchain node can then obtain the cyphertext from the gateway and decrypt the cyphertext to obtain the raw data. Further, the blockchain node sending the raw data can convert the raw data based on a predetermined conversion rule to obtain converted raw data that can be parsed by the other blockchain node.

The techniques described in this specification produce several technical effects. In some embodiments, the described techniques can be applied in various applications and scenarios to provide efficient, trusted, scalable, and high-performance blockchain-based environment for online transactions. The described techniques provide a blockchain-based trusted platform that allows users to conduct transactions (e.g., legal proceedings, commercial contract execution) in the blockchain-based environment in an efficient and secure manner. In some embodiments, the described techniques allow users to access blockchain nodes deployed in the blockchain-based trusted platform through a service system external to the blockchain-based trusted platform. This can prevent the users from directly accessing the blockchain nodes, hence reduce the possibility that data stored in the blockchain nodes may be compromised by a malicious actor. In some embodiments, the described techniques support encryption and authentication between the service systems and the blockchain-based trusted platform using secret key pairs. For example, a service system may send a public-key-encrypted data to the blockchain-based trusted platform so that the blockchain-based trusted platform can use a private key to decrypt the encrypted data. In the example, the blockchain-based trusted platform may send a private-key-based digital signature to the service system so that the service system can authenticate the digital signature using a public key. This can provide an extra layer of data security in the data transmission between the service systems and the blockchain-based trusted platform. In some embodiments, hash function or algorithm are used to verify whether data stored in the system has been changed. In one example, the service system or the blockchain-based trusted platform may compute a hash value of received data and compare the hash value with a previously stored hash value. If the two hash values match, it may be determined that the data has not been changed. If the two hash values do not match, it may be determined that the data has been changed. This can reduce the probability of forgery or tempering of the data stored in the system.

In some embodiments, the blockchain-based trusted platform can be implemented in a trusted execution environment (TEE). TEE is a trusted environment within hardware (one or more processors, memory) that is isolated from the hardware's operating environment (e.g., operating system (OS), basic input/output system (BIOS)). A TEE is a separate, secure area of a processor that ensures the confidentiality, and integrity of code executing, and data loaded within the main processor. The blockchain and TEE technologies described herein can be used to generate highly reliable records related to online transactions. In addition to the TEE, the described techniques allow blockchain-based trusted platform to utilize function of a trusted timing module, a trusted identity module, and a trusted computing module to authenticate documents and/or identities of users in a manner that complies with relevant evidentiary rules. This can enable application programs of the blockchain-based trusted platform that provide services to preserve verified records of information (e.g., who, what, and when) about events that occur during each of multiple steps or critical time points of the services in ways that comply (or are more compliant compared to previous systems) with the evidentiary rules. Hence, trustworthiness of data produced by an application program that runs in the blockchain-based trusted platform can be enhanced.

In some embodiments, the described techniques provide a cross-chain communication system that allows reliable and efficient data transmission between two blockchain networks. In one example, the cross-chain communication system may utilize functions of a service smart contract and a cross-chain smart contract executing in a blockchain node of the blockchain networks. In the example, cross-chain communication system may further utilize functions of a cross-chain relay component and an oracle machine that are implemented in a cross-chain communication component of blockchain networks. The smart contracts and the cross-chain communication components enable automatic and efficient cross-chain data transmission, for example, by converting ledger data to a unified data format.

In some embodiments, the described techniques provide a predetermined recording rule for the blockchain-based trusted platform to record ledger data, where the recording rule provides one or more recording input parameters for ledger data to be recorded and the input formats associated with the one or more recording input parameters. This allows a requestor who intends to record ledger data on the blockchain-based trusted platform to include the one or more recording input parameters in the ledger data and ensure that the requestor's input values of the one or more recording input parameters satisfy the input formats. In some embodiments, a verification rule is also predetermined for the blockchain-based trusted platform, where the verification rule provides one or more verification input parameters for ledger data to be verified and the input formats associated with the one or more verification input parameters. This allows a requestor, who intends to verify ledger data on the blockchain-based trusted platform, to include the one or more verification input parameters in the ledger data and ensure that the requestor's input values of the one or more verification input parameters satisfy the input formats. In some embodiments, a bit stream conversion rule is predetermined for the blockchain-based trusted platform, such that the requestor and the blockchain node that records or verifies the ledger data can use the same bit stream conversion rule in the conversions between original ledger data and bit streams. Thus, the described techniques can prevent the recording or verification failures due to the mismatch of data fields, data formats, and/or bit stream conversion rules. The described techniques can thereby reduce the data retransmissions and data reprocessing due to the recording or verification failures, and thus reduce the consumptions of computing, memory, and networking resources of blockchain nodes.

In some embodiments, the described techniques enable a secure communication channel to be established between the blockchain-based trusted platform and the requestor. The secure communication channel can be established based on, e.g., a two-way transport layer security (TLS) protocol, a two-way hypertext transfer protocol secure (HTTPS) protocol, a one-way HTTPS protocol, etc. This can enhance data security in transferring the ledger data between the blockchain-based trusted platform and the requestor.

In some embodiments, the described techniques provide a trusted timing module to generate recording timestamps, a trusted identity module to verify user identities associated with the requestors, and a trusted computing module to generate blockchain transactions in recording the original ledger data. This can enable the blockchain-based trusted platform to preserve verified records of information (e.g., who, what, and when) about events that occur during recording of the original ledger data. Hence, trustworthiness of original ledger data recorded by the blockchain-based trusted platform can be enhanced.

In some embodiments, the described techniques enable the blockchain-based trusted platform to verify that raw data, e.g., a data file, associated with the ledger data is not tampered with based on a hash value of the raw data. The blockchain-based trusted platform can compare the hash value of the raw data with hash values recorded in the blockchain-based trusted platform. If the blockchain-based trusted platform finds a match between the hash value of the raw data and a hash value recorded in the blockchain-based trusted platform, the blockchain-based trusted platform can determine that the raw data is not tampered with. This allows the blockchain-based trusted platform to verify raw data without a need for the requestor to send the raw data itself to the blockchain-based trusted platform. Therefore, the data privacy and data security of the raw data can be enhanced.

In some embodiments, the described techniques provide a gateway to interconnect a blockchain network associated with the Internet and another blockchain network associated with the private network. When a blockchain node of a blockchain network sends raw data to another blockchain node of another blockchain network, the blockchain node sending the raw data can encrypt the raw data and send the cyphertext to the gateway. The blockchain node that is to receive the raw data can then obtain the cyphertext from the gateway. It allows the cyphertext to remain encrypted in the data transfer between the two blockchain nodes, and thus the data privacy and security of the raw data is improved. In some embodiments, the blockchain node sending the cyphertext can generate one or more zero-knowledge proofs (ZKPs) associated with the raw data, where the one or more ZKPs can be used to determine that data to be decrypted from the cyphertext is secure without a need to decrypt the cyphertext. This can decrease the security risks to the private network and the Internet, e.g., by decreasing the risks of virus or malwares. As the cyphertext can be verified without decrypting it, the data privacy and data security of the raw data can also be enhanced. In some embodiments, the blockchain node sending the raw data can convert the raw data based on a predetermined conversion rule to obtain converted raw data that can be parsed by another blockchain node of another blockchain network. This can prevent the parsing failures due to mismatch of data fields, data formats, and/or bit stream conversion rules between the two blockchain nodes. This can reduce data retransmissions and data reprocessing due to the parsing failures, and thus reduce the consumptions of computing, memory, and networking resources of the blockchain nodes.

To provide further context for embodiments of this specification, and as introduced above, distributed ledger systems (DLSs), which can also be referred to as consensus networks (e.g., made up of peer-to-peer nodes), and blockchain networks, enable participating entities to securely, and immutably conduct transactions, and store data. Although the term blockchain is generally associated with particular networks, and/or use cases, blockchain is used herein to generally refer to a DLS without reference to any particular use case.

A blockchain is a data structure that stores transactions in a way that the transactions are immutable. Thus, transactions recorded on a blockchain are reliable and trustworthy. A blockchain includes one or more blocks. Each block in the chain is linked to a previous block immediately before it in the chain by including a cryptographic hash of the previous block. Each block also includes a timestamp, its own cryptographic hash, and one or more transactions. The transactions, which have already been verified by the nodes of the blockchain network, are hashed and encoded into a Merkle tree. A Merkle tree is a data structure in which data at the leaf nodes of the tree is hashed, and all hashes in each branch of the tree are concatenated at the root of the branch. This process continues up the tree to the root of the entire tree, which stores a hash that is representative of all data in the tree. A hash purporting to be of a transaction stored in the tree can be quickly verified by determining whether it is consistent with the structure of the tree.

Whereas a blockchain is a decentralized or at least partially decentralized data structure for storing transactions, a blockchain network is a network of computing nodes that manage, update, and maintain one or more blockchains by broadcasting, verifying and validating transactions, etc. As introduced above, a blockchain network can be provided as a public blockchain network, a private blockchain network, or a consortium blockchain network. Embodiments of this specification are described in further detail herein with reference to a consortium blockchain network. It is contemplated, however, that embodiments of this specification can be realized in any appropriate type of blockchain network.

In general, a consortium blockchain network is private among the participating entities. In a consortium blockchain network, the consensus process is controlled by an authorized set of nodes, which can be referred to as consensus nodes, one or more consensus nodes being operated by a respective entity (e.g., a financial institution, insurance company). For example, a consortium of ten (10) entities (e.g., financial institutions, insurance companies) can operate a consortium blockchain network, each of which operates at least one node in the consortium blockchain network.

In some examples, within a consortium blockchain network, a global blockchain is provided as a blockchain that is replicated across all nodes. That is, all consensus nodes are in perfect state consensus with respect to the global blockchain. To achieve consensus (e.g., agreement to the addition of a block to a blockchain), a consensus protocol is implemented within the consortium blockchain network. For example, the consortium blockchain network can implement a practical Byzantine fault tolerance (PBFT) consensus, described in further detail below.

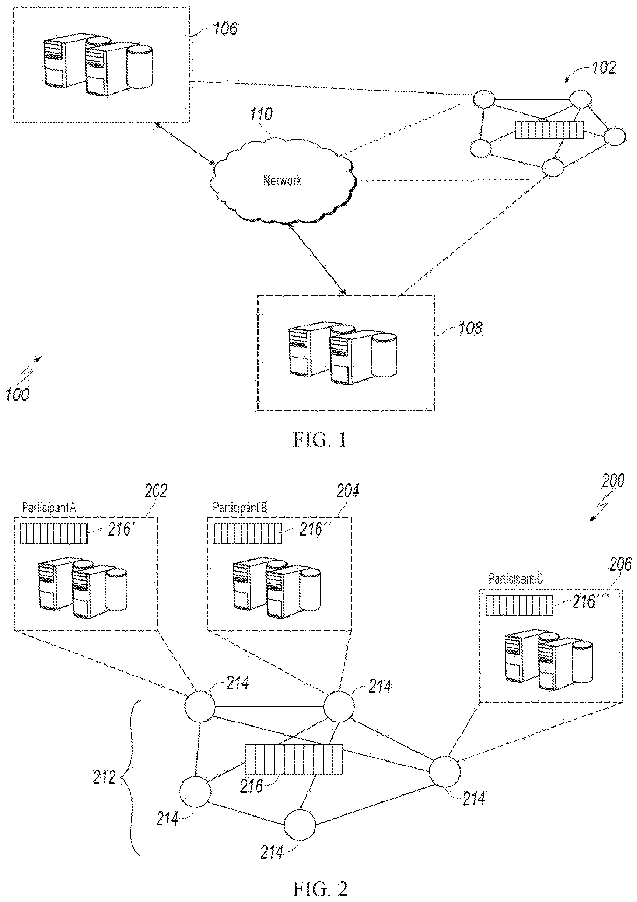

FIG. 1 is a diagram illustrating an example of an environment 100 that can be used to execute embodiments of this specification. In some examples, the environment 100 enables entities to participate in a consortium blockchain network 102. The environment 100 includes computing systems106, 108, and a network 110. In some examples, the network 110 includes a local area network (LAN), wide area network (WAN), the Internet, or a combination thereof, and connects web sites, user devices (e.g., computing devices), and back-end systems. In some examples, the network 110 can be accessed over a wired and/or a wireless communications link. In some examples, the network 110 enables communication with, and within the consortium blockchain network 102. In general the network 110 represents one or more communication networks. In some cases, the computing systems 106, 108 can be nodes of a cloud computing system (not shown), or each of the computing systems 106, 108 can be a separate cloud computing system including a number of computers interconnected by a network and functioning as a distributed processing system.

In the depicted example, the computing systems 106, 108 can each include any appropriate computing device that enables participation as a node in the consortium blockchain network 102. Examples of computing devices include, without limitation, a server, a desktop computer, a laptop computer, a tablet computing device, and a smartphone. In some examples, the computing systems 106, 108 host one or more computer-implemented services for interacting with the consortium blockchain network 102. For example, the computing system 106 can host computer-implemented services of a first entity (e.g., user A), such as a transaction management system that the first entity uses to manage its transactions with one or more other entities (e.g., other users). The computing system 108 can host computer-implemented services of a second entity (e.g., user B), such as a transaction management system that the second entity uses to manage its transactions with one or more other entities (e.g., other users). In the example of FIG. 1, the consortium blockchain network 102 is represented as a peer-to-peer network of nodes, and the computing systems 106, 108 provide nodes of the first entity, and second entity respectively, which participate in the consortium blockchain network 102.

FIG. 2 depicts an example of an architecture 200 in accordance with embodiments of this specification. The example conceptual architecture 200 includes participant systems 202, 204, 206 that correspond to Participant A, Participant B, and Participant C, respectively. Each participant (e.g., user, enterprise) participates in a blockchain network 212 provided as a peer-to-peer network including a plurality of nodes 214, at least some of which immutably record information in a blockchain 216. Although a single blockchain 216 is schematically depicted within the blockchain network 212, multiple copies of the blockchain 216 are provided, and are maintained across the blockchain network 212, as described in further detail herein.

In the depicted example, each participant system 202, 204, 206 is provided by, or on behalf of Participant A, Participant B, and Participant C, respectively, and functions as a respective node 214 within the blockchain network. As used herein, a node generally refers to an individual system (e.g., computer, server) that is connected to the blockchain network 212, and enables a respective participant to participate in the blockchain network. In the example of FIG. 2, a participant corresponds to each node 214. It is contemplated, however, that a participant can operate multiple nodes 214 within the blockchain network 212, and/or multiple participants can share a node 214. In some examples, the participant systems 202, 204, 206 communicate with, or through the blockchain network 212 using a protocol (e.g., hypertext transfer protocol secure (HTTPS)), and/or using remote procedure calls (RPCs).

Nodes 214 can have varying degrees of participation within the blockchain network 212. For example, some nodes 214 can participate in the consensus process (e.g., as miner nodes that add blocks to the blockchain 216), while other nodes 214 do not participate in the consensus process. As another example, some nodes 214 store a complete copy of the blockchain 216, while other nodes 214 only store copies of portions of the blockchain 216. For example, data access privileges can limit the blockchain data that a respective participant stores within its respective system. In the example of FIG. 2, the participant systems 202, 204, and 206 store respective, complete copies 216', 216", and 216‴ of the blockchain 216.

A blockchain (e.g., the blockchain 216 of FIG. 2) is made up of a chain of blocks, each block storing data. Examples of data include transaction data representative of a transaction between two or more participants. While transactions are used herein by way of non-limiting example, it is contemplated that any appropriate data can be stored in a blockchain (e.g., documents, images, videos, audio). Examples of a transaction can include, without limitation, exchanges of something of value (e.g., assets, products, services, currency). The transaction data is immutably stored within the blockchain. That is, the transaction data cannot be changed.

Before storing in a block, the transaction data is hashed. Hashing is a process of transforming the transaction data (provided as string data) into a fixed-length hash value (also provided as string data). It is not possible to un-hash the hash value to obtain the transaction data. Hashing ensures that even a slight change in the transaction data results in a completely different hash value. Further, and as noted above, the hash value is of fixed length. That is, no matter the size of the transaction data the length of the hash value is fixed. Hashing includes processing the transaction data through a hash function to generate the hash value. An example of a hash function includes, without limitation, the secure hash algorithm (SHA)-256, which outputs 256-bit hash values.

Transaction data of multiple transactions are hashed and stored in a block. For example, hash values of two transactions are provided, and are themselves hashed to provide another hash. This process is repeated until, for all transactions to be stored in a block, a single hash value is provided. This hash value is referred to as a Merkle root hash, and is stored in a header of the block. A change in any of the transactions will result in change in its hash value, and ultimately, a change in the Merkle root hash.

Blocks are added to the blockchain through a consensus protocol. Multiple nodes within the blockchain network participate in the consensus protocol, and perform work to have a block added to the blockchain. Such nodes are referred to as consensus nodes. PBFT, introduced above, is used as a non-limiting example of a consensus protocol. The consensus nodes execute the consensus protocol to add transactions to the blockchain, and update the overall state of the blockchain network.

**In** further detail, the consensus node generates a block header, hashes all of the transactions in the block, and combines the hash value in pairs to generate further hash values until a single hash value is provided for all transactions in the block (the Merkle root hash). This hash is added to the block header. The consensus node also determines the hash value of the most recent block in the blockchain (i.e., the last block added to the blockchain). The consensus node also adds a nonce value, and a timestamp to the block header.

**In** general, PBFT provides a practical Byzantine state machine replication that tolerates Byzantine faults (e.g., malfunctioning nodes, malicious nodes). This is achieved in PBFT by assuming that faults will occur (e.g., assuming the existence of independent node failures, and/or manipulated messages sent by consensus nodes). In PBFT, the consensus nodes are provided in a sequence that includes a primary consensus node, and backup consensus nodes. The primary consensus node is periodically changed. Transactions are added to the blockchain by all consensus nodes within the blockchain network reaching an agreement as to the world state of the blockchain network. In this process, messages are transmitted between consensus nodes, and each consensus nodes proves that a message is received from a specified peer node, and verifies that the message was not modified during transmission.

In PBFT, the consensus protocol is provided in multiple phases with all consensus nodes beginning in the same state. To begin, a client sends a request to the primary consensus node to invoke a service operation (e.g., execute a transaction within the blockchain network). In response to receiving the request, the primary consensus node multicasts the request to the backup consensus nodes. The backup consensus nodes execute the request, and each sends a reply to the client. The client waits until a threshold number of replies are received. In some examples, the client waits for f+1 replies to be received, where f is the maximum number of faulty consensus nodes that can be tolerated within the blockchain network. The final result is that a sufficient number of consensus nodes come to an agreement on the order of the record that is to be added to the blockchain, and the record is either accepted, or rejected.

In some blockchain networks, cryptography is implemented to maintain privacy of transactions. For example, if two nodes want to keep a transaction private, such that other nodes in the blockchain network cannot discern details of the transaction, the nodes can encrypt the transaction data. An example of cryptography includes, without limitation, symmetric encryption, and asymmetric encryption. Symmetric encryption refers to an encryption process that uses a single key for both encryption (generating ciphertext from plaintext), and decryption (generating plaintext from ciphertext). In symmetric encryption, the same key is available to multiple nodes, so each node can en-/de-crypt transaction data.

Asymmetric encryption uses keys pairs that each include a private key, and a public key, the private key being known only to a respective node, and the public key being known to any or all other nodes in the blockchain network. A node can use the public key of another node to encrypt data, and the encrypted data can be decrypted using other node's private key. For example, and referring again to FIG. 2, Participant A can use Participant B's public key to encrypt data, and send the encrypted data to Participant B. Participant B can use its private key to decrypt the encrypted data (ciphertext) and extract the original data (plaintext). Messages encrypted with a node's public key can only be decrypted using the node's private key.

Asymmetric encryption is used to provide digital signatures, which enables participants in a transaction to confirm other participants in the transaction, as well as the validity of the transaction. For example, a node can digitally sign a message, and another node can confirm that the message was sent by the node based on the digital signature of Participant A. Digital signatures can also be used to ensure that messages are not tampered with in transit. For example, and again referencing FIG. 2, Participant A is to send a message to Participant B. Participant A generates a hash of the message, and then, using its private key, encrypts the hash to provide a digital signature as the encrypted hash. Participant A appends the digital signature to the message, and sends the message with digital signature to Participant B. Participant B decrypts the digital signature using the public key of Participant A, and extracts the hash. Participant B hashes the message and compares the hashes. If the hashes are same, Participant B can confirm that the message was indeed from Participant A, and was not tampered with.

In some embodiments, nodes of the blockchain network, and/or nodes that communicate with the blockchain network can operate using trusted execution environments (TEEs). At a high-level, a TEE is a trusted environment within hardware (one or more processors, memory) that is isolated from the hardware's operating environment (e.g., operating system (OS), basic input/output system (BIOS)). In further detail, a TEE is a separate, secure area of a processor that ensures the confidentiality, and integrity of code executing, and data loaded within the main processor. Within a processor, the TEE runs in parallel with the OS. At least portions of so-called trusted applications (TAs) execute within the TEE, and have access to the processor and memory. Through the TEE, the TAs are protected from other applications running in the main OS. Further, the TEE cryptographically isolates TAs from one another inside the TEE.

An example of a TEE includes Software Guard Extensions (SGX) provided by Intel Corporation of Santa Clara, California, United States. Although SGX is discussed herein by way of example, it is contemplated that embodiments of this specification can be realized using any appropriate TEE.

SGX provides a hardware-based TEE. In SGX, the trusted hardware is the die of the central processing until (CPU), and a portion of physical memory is isolated to protect select code and data. The isolated portions of memory are referred to as enclaves. More particularly, an enclave is provided as an enclave page cache (EPC) in memory and is mapped to an application address space. The memory (e.g., DRAM) includes a preserved random memory (PRM) for SGX. The PRM is a continuous memory space in the lowest BIOS level and cannot be accessed by any software. Each EPC is a memory set (e.g., 4 KB) that is allocated by an OS to load application data and code in the PRM. EPC metadata (EPCM) is the entry address for respective EPCs and ensures that each EPC can only be shared by one enclave. That is, a single enclave can use multiple EPCs, while an EPC is dedicated to a single enclave.

During execution of a TA, the processor operates in a so-called enclave mode when accessing data stored in an enclave. Operation in the enclave mode enforces an extra hardware check to each memory access. In SGX, a TA is compiled to a trusted portion, and an untrusted portion. The trusted portion is inaccessible by, for example, OS, BIOS, privileged system code, virtual machine manager (VMM), system management mode (SMM), and the like. In operation, the TA runs and creates an enclave within the PRM of the memory. A trusted function executed by the trusted portion within the enclave is called by the untrusted portion, and code executing within the enclave sees the data as plaintext data (unencrypted), and external access to the data is denied. The trusted portion provides an encrypted response to the call, and the TA continues to execute.

An attestation process can be performed to verify that expected code (e.g., the trusted portion of the TA) is securely executing within the SGX-provided TEE. In general, the attestation process includes a TA receiving an attestation request from a challenger (e.g., another node in the blockchain network, a key management system (KMS) of the blockchain network). In response, the TA requests that its enclave produce a remote-attestation, also referred to as a quote. Producing the remote-attestation includes a local-attestation being sent from the enclave to a so-called quoting enclave, which verifies the local-attestation, and converts the local-attestation into the remote-attestation by signing the local-attestation using an asymmetric attestation key. The remote-attestation (quote) is provided to the challenger (e.g., KMS of the blockchain network).

The challenger uses an attestation verification service to verify the remote-attestation. For SGX, Intel provides the Intel Attestation Service (IAS), which receives the remote-attestation from the challenger, and verifies the remote-attestation. More particularly, the IAS processes the remote-attestation, and provides a report (e.g., attestation verification report (AVR)), which indicates whether the remote-attestation is verified. If not verified, an error can be indicated. If verified (the expected code is securely executing in the TEE), the challenger can start, or continue interactions with the TA. For example, in response to the verification, the KMS (as challenger) can issue asymmetric encryption keys (e.g., a public-key and private-key pair) to the node executing the TEE (e.g., through a key exchange process, such as elliptical curve Diffie-Hellman (ECDH)) to enable the node to securely communicate with other nodes, and/or clients.

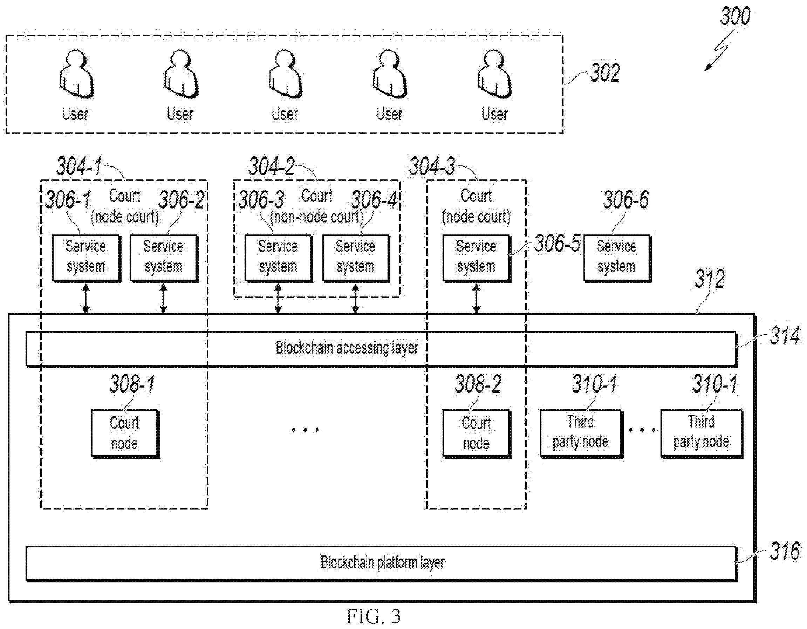

This specification describes technologies for enabling a blockchain-based system (which can be an online system) that enhances trust among users and provides various service or process tools to allow users to conduct transactions (e.g., legal proceedings, commercial contract execution) in a blockchain-based environment in an efficient manner. Referring to FIG. 3, FIG. 3 depicts an example of a system 300 for blockchain transactions. In some embodiments, the system 300 can be a blockchain system associated with judicial institutions and/or users of judicial services. The system 300 can be deployed on a private network or the Internet. In some embodiments, the system 300 can be a blockchain system used for executing and recording contracts or agreements (e.g., real estate contracts) between parties. In the shown example in FIG. 3, the system 300 includes a blockchain-based trusted platform/system 312 which includes a blockchain accessing layer 314, participating nodes (e.g., nodes 308-1, 308-2, 310-1, and 310-2), and blockchain platform layer 316. In some embodiments, the blockchain accessing layer 314 can include communication interfaces that allow entities external to the blockchain-based trusted platform 312 to communicate with the participating nodes of the blockchain-based trusted platform 312. The blockchain accessing layer 314 can include one or more of graphical user interfaces (GUI), command lines, scripts, and application programming interfaces (APIs). In some embodiments, the blockchain platform layer 316 can provide service capabilities of Internet information infrastructure and can support cloud storage deployment such as public cloud and private cloud. The blockchain platform layer 316 can further provide support for the secure storage, analysis, and computation of data stored in the trusted platform 312.

The participating nodes of the blockchain-based trusted platform 312 includes blockchain nodes such as nodes 308-1 and 308-2. In the shown example, the blockchain nodes 308-1 and 308-2 can be blockchain nodes deployed for courts or judicial institutions. The blockchain-based trusted platform 312 further includes third-party blockchain nodes such as nodes 310-1 and 310-2. In some embodiments, the third-party blockchain nodes can have identity management, permission control functions such as permission management based on smart contracts, users, blockchains, and hierarchical access control. In some examples, the third party nodes 310-1 and 310-2 can include blockchain nodes such as certificate authority nodes, time service nodes, and forensic expertise nodes. Note that blockchain-based trusted platform 312 is shown to include nodes 308-1, 308-1, 310-1, and 310-2 for illustrative purposes. The blockchain-based trusted platform 312 can include any suitable number of non-third-party nodes and third-party nodes. In some embodiments, one or more of the nodes 308-1, 308-1, 310-1, and 310-2 can be consensus nodes that participate in a consensus process of the blockchain-based trusted platform 312.

As noted previously, the blockchain accessing layer 314 can include communication interfaces that allow entities external to the blockchain-based trusted platform 312 to communicate with the participating nodes of the blockchain-based trusted platform 312. In the shown example, the blockchain accessing layer 314 can be configured to allow the external service systems, e.g., service systems, 306-1~6, to communicate with the participating blockchain nodes, e.g., nodes 308-1, 308-1, 310-1, and 310-2, in the blockchain-based trusted platform 312. In some embodiments, the service systems 306-1~6 can include computer systems that do not participate in the consensus process of the blockchain-based trusted platform 312. The service systems 306-1~6 can be configured to provide services to users 302 by accessing the blockchain-based trusted platform 312. In some examples, a service system, e.g., service system 306-1, can allow a user to fill out and submit legal documents digitally in ways that comply with relevant legal requirements based on a consensus process performed by the participating nodes of the blockchain-based trusted platform 312. In some examples, a service system, e.g., service system 306-2, can allow a party to execute a court order, such as serving a bank levy court order to an opposing party's bank digitally, in a way that complies with relevant legal requirements. In some embodiments, one or more service system and a blockchain node of the blockchain-based trusted platform 312 can form a sub-system. In the shown example, the service systems 306-1 and 306-2, and the blockchain node 308-1 can form a sub-system 304-1 deployed in a judicial institution, e.g., a court. Note that the sub-system 304-1 is shown to be deployed in a judicial institution (e.g., a court) for illustrative purposes only. The sub-system 304-1, as well as other sub-systems 304-2 and 304-3, can be a system deployed in any suitable type of institutions or facilities, such as a real estate agency, a broker, a commercial bank, an escrow, police departments, or government agencies, etc. In some embodiments, a sub-system that includes at least a blockchain node of the blockchain-based trusted platform 312 can be referred to as a node sub-system, while a sub-system that does not include any blockchain node of the blockchain-based trusted platform 312 can be referred to as a non-node sub-system. In the shown example, the sub-system 304-1 includes the blockchain node 308-1 in the blockchain-based trusted platform 312, hence the court where the sub-system 304-1 is deployed can be referred to as a court connected to blockchain (e.g., node court). The sub-system 304-2 does not include any blockchain node of the blockchain-based trusted platform 312, hence the court where the sub-system 304-2 is deployed is called a court not connected to blockchain (e.g., non-node court).

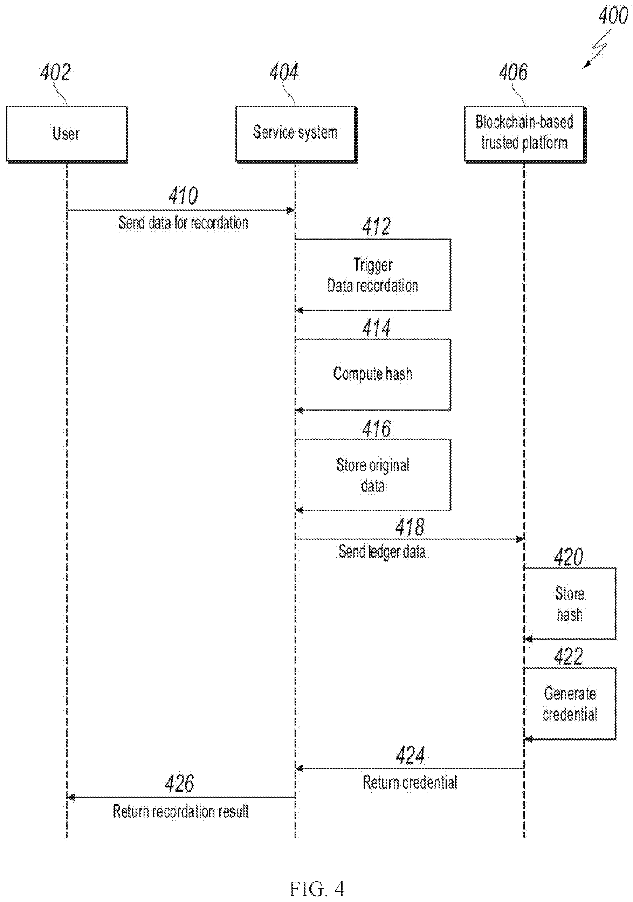

In some embodiments, the services provided by the service systems 306-1~6 can include two types: blockchain data recordation and blockchain data verification. In some examples, a blockchain data recordation service can be initiated by a user 302 sending data in digital documents or files (e.g., legal documents, commercial contract) to a service system (e.g., service system 306-1). The data can be processed by the service system and recorded to a blockchain stored in a blockchain node (e.g. blockchain node 308-1) in the blockchain-based trusted platform 312. A blockchain data verification service can be initiated by a user sending a request for verifying data to a service system. The service system receiving the request can process the request and verify the data. In some embodiments, ledger data can be generated during the blockchain data recordation and verification process. In some embodiments, the blockchain data recordation and verification process can be performed in one or more of a service system mode and a blockchain platform mode. In the service system mode, a service system (e.g., service system 306-1) can generate the ledger data based on data received from a user (e.g., user 302) and send the ledger data to a blockchain node (e.g., blockchain node 308-1) for recordation. In the blockchain platform based mode, a blockchain node (e.g., blockchain node 308-2) can generate the ledger data based on data received from a user (e.g., user 302) and record the ledger data to a blockchain stored in the blockchain node. The blockchain data recordation verification process in the two modes will be described below in greater detail with reference to FIGS. 4-7.

FIG. 4 depicts an example of a blockchain data recordation process 400 in a service system mode that can be executed in accordance with embodiments of this specification. For convenience, the process 400 will be described as being performed by a system of one or more computers, located in one or more locations, and programmed appropriately in accordance with this specification. For example, a blockchain-based system, e.g., the system 300 of FIG. 3, appropriately programmed, can perform the process 400.

The process 400 starts at step 410 where a user 402 sends data for recordation to a service system 404. In some embodiments, the user 402 can send a request for recording the data to the service system 404, where the request includes the data. In some embodiments, the data can be in the format of digital documents (e.g., commercial agreements), or digital files (e.g., forensic images, video, etc.).

The user 402 can be a user 302 as described in the descriptions of FIG. 3. In some embodiments, the user 402 can include, for example, any computer, module, server, or computing element programmed to perform methods described herein. In some examples, the user 402 can include a web browser and software applications for providing various functions of a client computing device. In some embodiments, the service system 404 can be a service system (e.g., service system 306-1) as described in the descriptions of FIG. 3.

At step 412, the service system 404 can trigger data recordation after receiving the data from the user 402. In some embodiments, the service system 404 can automatically trigger data recordation in response to receiving the data or request from the user 402. In some examples, the service system 404 can include a smart contract for processing the data or request received from the user 402. Once the smart contract receives the data or request from the user, the smart contract can be automatically executed to perform the following data recordation process.

In some embodiments, the service system 404 can verify an identity of the user 402 after receiving the data from the user 402. In some examples, the user 402 can send a user identifier along with the data to the service system 404 so that the service system 404 can compare the received user identifier with user identifiers of authorized users stored in the service system 404. If the user 402 is determined to be an unauthorized user, the service system 404 can ignore the request from the user 402 and discard the data. If the user 402 is determined to be an authorized user, the service system 404 can continue to process the received data.

At step 414, the service system 404 computes a hash value based on the data received from the user 402. In some embodiments, the hash value can be computed according to a predetermined cryptographic hash function or algorithm, such as MD5 message-digest algorithm, SHA-1 (Secure Hash Algorithm 1) hash function, and Whirlpool hash function, etc. In some examples, the service system 404 can apply a predetermined hash function on the data received from the user and generate a hash value of the data. In some examples, the service system 404 can generate a hash value based on the data received from the user 404 and the user identifier of the user 404.

At step 416, the service system 404 stores the data received from the user 402 in a local storage of the service system 404. In some embodiments, the service system 404 can further include a local storage sub-system that comprises storage medium such as nonvolatile memory express (NVME), SSD, hard disk drive (HDD), or shingled magnetic recording (SMR). In some embodiments, the local storage sub-system of the service system 404 can be generated, or expanded for better availability, partition tolerance, flexibility, and cost. For example, the local storage sub-system of the service system 404 can allow scaling by adding more servers or storage nodes, hence increasing capacity and performance. The local storage sub-system can also use less expensive standard servers, drives, and network. In some embodiments, the local storage sub-system of the service system 404 can increase the utilization of standard servers, which can result in less power consumption, maintenance cost, better cooling efficiency, and space utilization, etc.

In some embodiments, the service system 404 can include a multi-tier storage subsystem which includes multiple storage devices that are configured to store data based on access frequency of data. In some examples, the service system 404 can include a first storage device, such as a cloud disk or cloud-based storage device (e.g., SSD cloud disk, embedded-SSD (ESSD) cloud disk) for storing most frequently accessed data. The service system 404 can include a second storage device, such as NAS (network attached storage) devices, for storing less frequently accessed data.

At step 418, the service system 404 generates ledger data based on the hash value as generated at step 414, and sends the ledger data to the blockchain-based trusted platform 406. In some embodiments, the blockchain-based trusted system 404 can be implemented as the blockchain-based trusted system 312 of FIG. 3. In some examples, the blockchain-based trusted system 406 can include one or more blockchain nodes (e.g., blockchain node 308-1), and the service system 404 can send the ledger data to one blockchain node of the blockchain-based trusted system 406. In some embodiments, the service system 404 can send the ledger data to the blockchain-based trusted system 406 via a communication interface, such as the blockchain accessing layer 314 of FIG. 3.

In some embodiments, the ledger data includes the hash value as generated at step 414. The ledger data can include additional information, such as the metadata of the data received from the user 402 and metadata of the hash value. In some examples, the metadata can include one or more of an author, a date created, a date modified, and a file size of the data or the hash value.

In some embodiments, the service system 404 can encrypt the ledger data according to a predetermined encryption function or algorithm. In some examples, the service system 404 can encrypt the ledger data using a public key of the blockchain-based trusted platform 406, and send the encrypted ledger data to the blockchain-based trusted platform 406 to decrypt the encrypted ledger data by using its private key.

At step 420, after receiving the ledger data from the service system 404, the blockchain-based trusted platform 406 stores the ledger data including the hash value in the blockchain-based trusted platform 406. In some embodiments, the blockchain-based trusted platform 406 can store the ledger data in one or more participating nodes of the blockchain-based trusted platform 406. In some embodiments, one or more of the participating nodes of the blockchain-based trusted platform 406 can be consensus nodes that participate in a consensus process of the blockchain. In some embodiments, the consensus nodes (e.g., blockchain nodes 308-1, 308-2, and/or third party blockchain nodes 310-1 and 310-2 of FIG.3) of the blockchain-based trusted platform 406 can perform a consensus process on the ledger data. Upon achieving a consensus among the consensus nodes, the blockchain-based trusted platform 406 can record the ledger data in a blockchain stored in one or more participating nodes of the blockchain-based trusted platform 406.

In some embodiments, the blockchain-based trusted platform 406 can receive encrypted ledger data from the service system 404. In some examples, the encrypted ledger data can be encrypted with a public key of the blockchain-based trusted platform 406 based on asymmetric key encryption. The blockchain-based trusted platform 406 can use a private key paired with the public key to decrypt the encrypted ledger data and obtain the ledger data.

At step 422, the blockchain-based trusted platform 406 generates a credential corresponding to the ledger data. In some embodiments, the credential can include any suitable type of certificate for recordation of the ledger data. In some examples, the credential can include an identifier of the ledger data can and/or a digital signature of the blockchain-based trusted platform 406 that is generated based on the ledger data using the private key of the blockchain-based trusted platform 406. In some embodiments, the credential can uniquely identify the ledger data.

At step 424, the blockchain-based trusted platform 406 returns the credential to the service system 404. In some examples, the credential can include a digital signature generated based on the ledger data using the private key of the blockchain-based trusted platform 406 so that the service system 404 can use the public key of the blockchain-based trusted platform 406 to verify the digital signature.

At step 426, after receiving the credential from the blockchain-based trusted platform 406, the service system 404 sends a recordation result to the user 402. In some embodiments, the recordation result comprises the credential. In some embodiments, the recordation result comprises a notification to the user 402 that indicates whether the data recordation is completed. In some embodiments, the service system 404 can verify the credential, for example, when the credential includes a digital signature of the blockchain-based trusted platform 406. In some examples, the service system 404 can use the public key of the blockchain-based trusted platform 406 to verify the digital signature. If the digital signature is valid, the service system 404 can send the credential in the recordation result to the user 402 and notify to the user 402 in the recordation result that the data recordation is completed. If the digital signature is not valid, the service system 404 may not send the credential to the user 402, or the service system 404 can notify the user 402 that the data recordation is not completed.

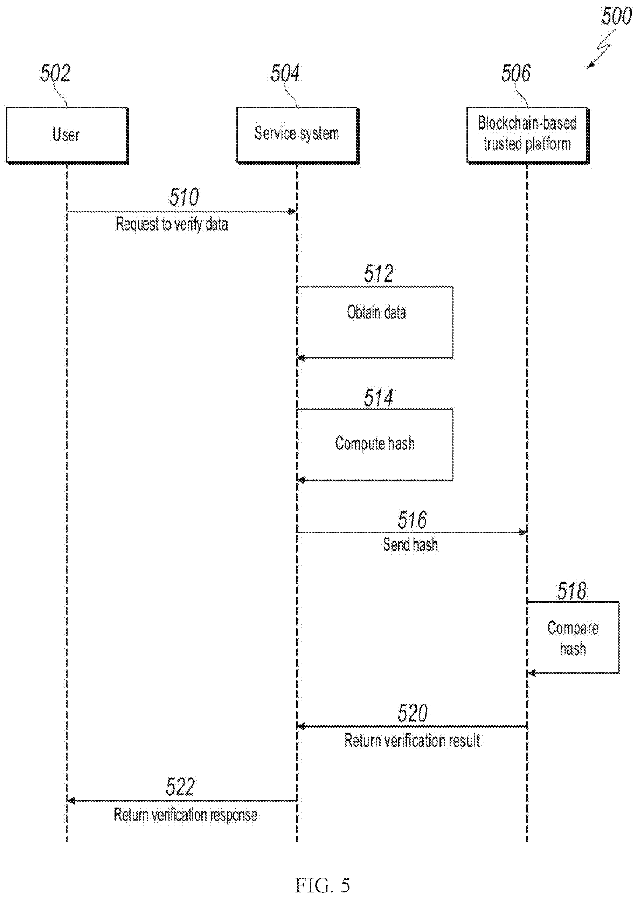

FIG. 5 depicts an example of a blockchain data verification process 500 in the service system mode that can be executed in accordance with embodiments of this specification. For convenience, the process 500 will be described as being performed by a system of one or more computers, located in one or more locations, and programmed appropriately in accordance with this specification. For example, a blockchain-based system, e.g., the system 300 of FIG. 3, appropriately programmed, can perform the process 500.

The process 500 starts at step 510 where a user 502 sends a request for verifying data to a service system 504. The user 502 can be a user 302 as described in FIG. 3. In some embodiments, the user 502 can include, for example, any suitable computer, module, server, or computing element programmed to perform methods described herein. In some examples, the user 502 can include a web browser and software applications for providing various functions of a client computing device. In some embodiments, the service system 504 can be implemented as a service system in FIG. 3, such as service system 306-1.

In some embodiments, the request for verifying the data can include a credential corresponding to a ledger data generated based on the data. In some embodiments, the credential can be configured to uniquely identify the data and the ledger data. In some example, the credential and the ledger data can be generated in a previous data recordation process similar to process 400 of FIG. 4. In this example, the ledger data can be generated by the service system 504 and recorded in the blockchain-based trusted platform 506 in the previous data recordation process. The ledger data can include a hash value of the data. In some embodiments, the hash value can be computed by the service system 504 according to a predetermined cryptographic hash function or algorithm, such as MD5 message-digest algorithm, SHA-1 (Secure flash Algorithm 1) hash function, and Whirlpool hash function, etc. The ledger data can include additional information, such as the metadata of the data. The metadata can include one or more of an author, a date created, a date modified, and a file size of the data.

In the above example, the credential can be generated by the blockchain-based trusted platform 506 and sent to the user 502 in the previous data recordation process. In some embodiments, the credential can include an identifier of the ledger data. In some embodiments, the credential can include a digital signature of the blockchain-based trusted platform 506 that is generated based on the ledger data using the private key of the blockchain-based trusted platform 506.

At step 512, the service system 504 obtains the data from a local storage of the service system 504 after receiving the request for verifying the data. In some embodiments, the local storage of service system 504 can include storage medium such as NVME, SSD, HDD, and SMR. In some embodiments, the service system 502 can obtain the data based on the credential included in the request.

At step 514, the service system 504 computes a hash value based on the data as obtained at step 512. In some embodiments, the hash value can be computed by the service system 504 according to a same cryptographic hash function or algorithm that was used to compute the hash value in the previous data recordation process.

At step 516, the service system 504 sends the computed hash value to the blockchain-based trusted platform 506. In some embodiments, the service system 504 can send the credential with the computed hash value to the blockchain-based trusted platform 506. In some embodiments, the service system 504 can encrypt the hash value and/or the credential and send the encrypted information to the blockchain-based trusted platform 506. In some examples, the service system 504 can encrypt the hash value and/or the credential using a public key of the blockchain-based trusted platform 506 so that the blockchain-based trusted platform 506 can decrypt the encrypted information using its private key.

At step 518, after receiving the hash value from the service system 504, the blockchain-based trusted platform 506 compares the received hash value with a hash value previously stored in the blockchain-based trusted platform 506. In some embodiments, the blockchain-based trusted platform 506 can receive encrypted hash value and/or credential from the service system 504. In some examples, the encrypted hash value and/or credential can be encrypted with a public key of the blockchain-based trusted platform 506. The blockchain-based trusted platform 506 can use a private key paired with the public key to decrypt the encrypted data and obtain the hash value and/or credential.

**In** some embodiments, the blockchain-based trusted platform 506 can obtain a ledger data from a local storage of the blockchain-based trusted platform 506 based on the credential received from the service system 504 and obtain the hash value in the ledger data. In some embodiments, the blockchain-based trusted platform 506 can obtain a ledger data from one or more participating blockchain nodes of the blockchain-based trusted platform 506 based on the credential and obtain the hash value in the ledger data.

At step 520, the blockchain-based trusted platform 506 sends a verification result to the service system 504. In some embodiments, the verification result includes a comparison result of the received hash value and the hash value in the hash data as in step 518. In some embodiments, the verification result can further include a digital signature of the blockchain-based trusted platform 506. In some examples, the digital signature of the blockchain-based trusted platform 506 can be generated using the private key of the blockchain-based trusted platform 506 based on at least one of the two hash values.

At step 522, after receiving the verification result from the blockchain-based trusted platform 506, the service system 504 sends a verification response to the user 502. In some embodiments, the service system 504 can verify a digital signature included in the verification result. In some examples, the service system 504 can verify the digital signature using the public key of the blockchain-based trusted platform 506. In this example, if the digital signature is determined to be invalid, the service system 504 can ignore the verification result. If the digital signature is determined to be valid, the service system can continue to process the verification result.

In some embodiments, the service system 504 determines whether the two hash values match based on the verification result. If the two hash values match, the service system 504 can determine that the data stored in the service system 504 has not been tampered with. The service system 504 can further include the data in the verification response and send the verification response to the user 502 that indicates that the data has not been tampered with. If the two hash values do not match, the service system 504 can notify the user 502 in the verification response that the data may have been tampered with.

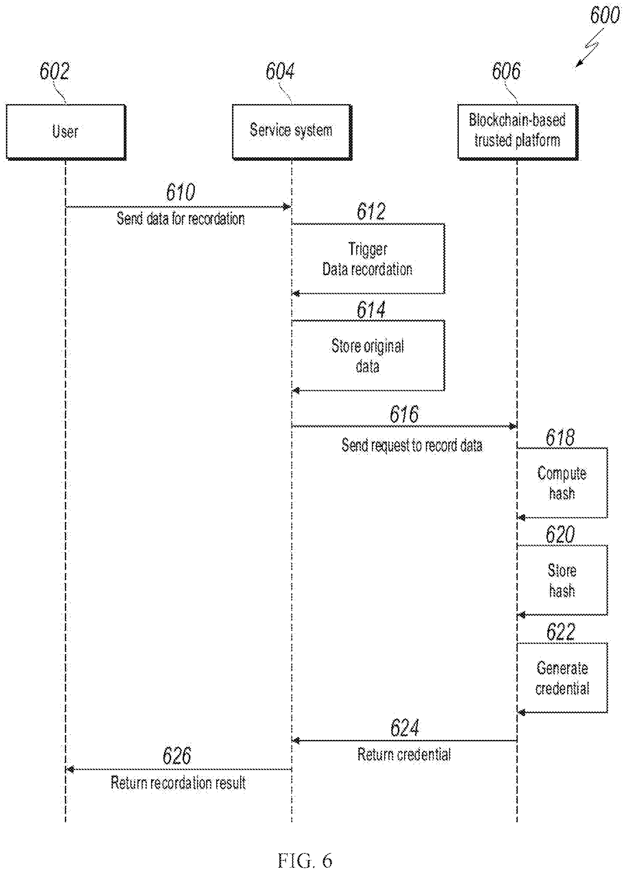

FIG. 6 depicts an example of a blockchain data recordation process 600 in a blockchain platform mode that can be executed in accordance with embodiments of this specification. For convenience, the process 600 will be described as being performed by a system of one or more computers, located in one or more locations, and programmed appropriately in accordance with this specification. For example, a blockchain-based system, e.g., the system 300 of FIG. 3, appropriately programmed, can perform the process 600.

The process 600 starts at step 610 where a user 602 sends the data for recordation to a service system 604. In some embodiments, the user 602 can send a request for recording the data to the service system 604, where the request includes the data. In some examples, the data can be included in digital files or documents such as legal documents, commercial contracts, images, video, web pages, spreadsheets, etc.

The user 602 can be user 302 as described in the description of FIG. 3. In some embodiments, the user 602 can include, for example, any suitable computer, module, server, or computing element programmed to perform methods described herein. In some examples, the user 602 can include a web browser and software applications for providing various functions of a client computing device. In some embodiments, the service system 604 can be implemented as a service system in FIG. 3, such as service system 306-1.

At step 612, the service system 404 triggers data recordation after receiving the data from the user 602. In some embodiments, the service system 604 can automatically triggers data recordation in response to receiving the data or request from the user 602. In some examples, the service system 604 can include a smart contract for processing the data or request received from the user 602. Once the smart contract receives the data or request from the user, the smart contract can be automatically executed to perform the following data recordation process.

In some embodiments, the service system 604 can verify an identity of the user 602 after receiving the data from the user 602. In some examples, the user 602 can send a user identifier along with the data to the service system so that the service system 604 can compare the received user identifier with user identifiers of authorized users that are stored in the service system 604. If the user 602 is determined to be an unauthorized user, the service system 604 can ignore the request from the user 602 and discard the data. If the user 602 is determined to be an authorized user, the service system 604 can continue to process the received data.

At step 614, the service system 604 stores the data received from the user 602 in a local storage of the service system 604. In some embodiments, the service system 604 can include a local storage sub-system which includes storage medium such as NVME, SSD, HDD, or SMR. In some embodiments, the local storage sub-system of the service system 604 can be generated, or expanded for better availability, partition tolerance, flexibility, and cost. For example, the local storage sub-system of the service system 604 can allow scaling by adding more servers or storage nodes and thus increasing capacity and performance linearly. It can use standard servers, drives, and network, which are less expensive. In some embodiments, the local storage sub-system of the service system 604 can increase the utilization of standard servers, which consequently result in less power consumption, better cooling efficiency, better space usage, less maintenance cost, etc.

In some embodiments, the service system 604 can include a multi-tier storage sub-system which includes multiple storage devices that are configured to store data based on access frequency of the data. In some examples, the service system 604 can include a first storage device, such as a cloud disk or cloud-based storage device (e.g., SSD cloud disk, ESSD cloud disk) for storing most frequently accessed data. The service system 604 can include a second storage device, such as NAS devices, for storing less frequently accessed data.

At step 616, the service system 604 sends a request for recording data to the blockchain-based trusted platform 606. In some embodiments, the blockchain-based trusted system 606 can be implemented as the blockchain-based trusted system 312 of FIG. 3. In some embodiments, the request includes the data received from the user 602.

In some embodiments, the service system 604 can send the data to the blockchain-based trusted system 606 via a communication interface, such as the blockchain accessing layer 314 of FIG. 3.

In some embodiments, the service system 604 can encrypt the data and send the encrypted data in the request to the blockchain-based trusted platform 606. In some embodiments, the service system 604 can encrypt the data according to a predetermined encryption function or algorithm. In some example, the service system 604 can encrypt the data using a public key of the blockchain-based trusted system 606 so that the blockchain-based trusted system 606 can use its private key to decrypt the encrypted data.

At step 618, the blockchain-based trusted system 606 computes a hash value based on the data received from the service system 604. In some embodiments, the blockchain-based trusted platform 606 can receive encrypted data from the service system 604. In some examples, the encrypted data can be encrypted with a public key of the blockchain-based trusted platform 606. The blockchain-based trusted platform 606 can use a private key paired with the public key to decrypt the encrypted data and obtain the data.

In some embodiments, the hash value can be computed according to a predetermined cryptographic hash function or algorithm, such as MD5 message-digest algorithm, SHA-1 (Secure Hash Algorithm 1) hash function, and Whirlpool hash function, etc. In some examples, the blockchain-based trusted system 606 can apply a predetermined hash function on the data received from the service system 604 and generate a hash value of the data.

At step 620, the blockchain-based trusted system 606 stores the hash value as generated at step 618. In some embodiments, the blockchain-based trusted system 606 can generate and store the ledger data based on the hash value. In some embodiments, the ledger data can include the hash value and/or additional data, such as the metadata of the data received from the user 602 or the metadata of the hash value. In some examples, the metadata can include one or more of an author, a date created, a date modified, and a file size of the data.

In some embodiments, the blockchain-based trusted platform 606 can store the ledger data in one or more participating nodes of the blockchain-based trusted platform 606. In some embodiments, the consensus nodes (e.g., blockchain nodes 308-1, 308-2, and/or third party blockchain nodes 310-1 and 310-2 of FIG.3) of the blockchain-based trusted platform 606 can perform a consensus process on the ledger data. Upon achieving a consensus among the consensus nodes, the blockchain-based trusted platform 606 can record the ledger data in a blockchain stored in one or more participating nodes of the blockchain-based trusted platform 606.

At step 622, the blockchain-based trusted platform 606 generates a credential corresponding to the ledger data. In some embodiments, the credential can include any suitable type of certificate for recordation of the ledger data. In some examples, the credential can include an identifier of the ledger data. In some examples, the credential can include a digital signature of the blockchain-based trusted platform 606 that is generated based on the ledger data using the private key of the blockchain-based trusted platform 606. In some embodiments, the credential can be configured to uniquely identify the data and the ledger data.

At step 624, the blockchain-based trusted platform 606 returns the credential to the service system 604. In some examples, the credential can include a digital signature that is generated based on the ledger data using the private key of the blockchain-based trusted platform 606 so that the service system 604 can use the public key of the blockchain-based trusted platform 606 to verify the digital signature.

At step 626, after receiving the credential from the blockchain-based trusted platform 606, the service system 604 sends a recordation result to the user 602. In some embodiments, the recordation result includes the credential. In some embodiments, the recordation result includes a notification to the user 602 that indicates whether the data recordation is completed. In some embodiments, the service system 604 can verify the credential, for example, when the credential includes a digital signature of the blockchain-based trusted platform 406. In some examples, the service system 604 can use the public key of the blockchain-based trusted platform 606 to verify the digital signature included in the credential. If the digital signature is valid, the service system 604 can send the credential in the recordation result to the user 602 and notify to the user 602 in the recordation result that the data recordation is completed. If the digital signature is not valid, the service system 604 may not send the credential to the user 602 and notify to the user 602 that the data recordation is not completed.

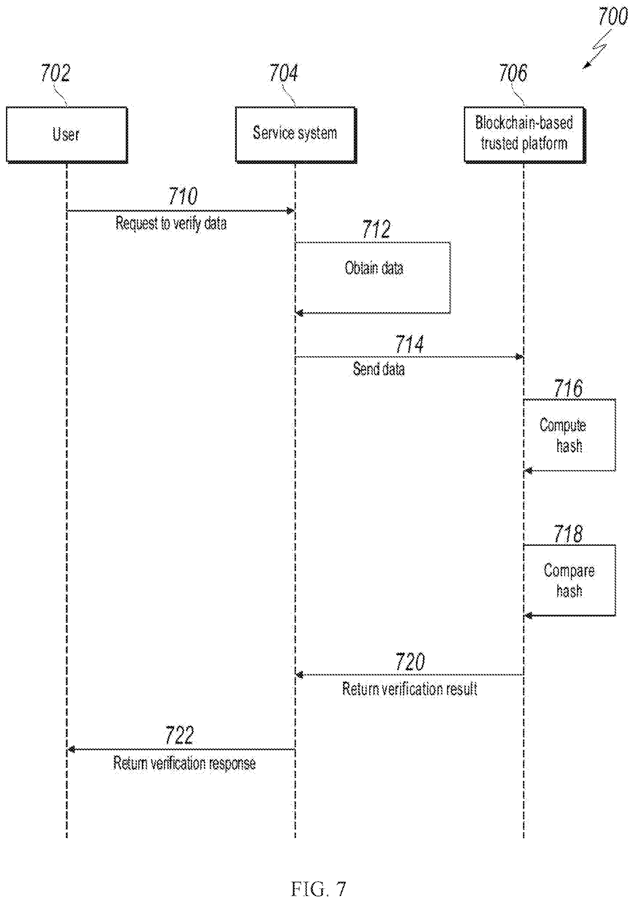

FIG. 7 depicts an example of a blockchain data verification process 700 in a blockchain-platform-mode that can be executed in accordance with embodiments of this specification. For convenience, the process 700 will be described as being performed by a system of one or more computers, located in one or more locations, and programmed appropriately in accordance with this specification. For example, a blockchain-based system, e.g., the system 300 of FIG. 3, appropriately programmed, can perform the process 700.

The process 700 starts at step 710 where a user 702 sends a request for verifying the data to a service system 704. The user 702 can be the user 302 as described in the description of FIG. 3. In some embodiments, the user 702 can include, for example, any suitable computer, module, server, or computing element programmed to perform methods described herein. In some examples, the user 702 can include web browsers and software applications for providing various functions of a computing device. In some embodiments, the service system 704 can be the service system (e.g., service system 306-1) 300 as described in FIG. 3, such as service system 306-1.

In some embodiments, the request for verifying the data can include a credential of ledger data. In some embodiments, the credential can be configured to uniquely identify the original data and the ledger data. In some example, the credential and the ledger data can be generated in a previous data recordation process similar to process 600 of FIG. 6. In this example, the ledger data can be generated by the service system 704 and recorded in the blockchain-based trusted platform 706 in the previous data recordation process. The ledger data can include a hash value of the original data. In some embodiments, the hash value can be computed by the service system 704 according to a predetermined cryptographic hash function or algorithm, such as MD5 message-digest algorithm, SHA-1 (Secure Hash Algorithm 1) hash function, and Whirlpool hash function, etc. The ledger data can include additional information, such as the metadata of the data and/or metadata of the hash value. The metadata can include one or more of an author, a date created, a date modified, and a file size of the data.

In the above example, the credential can be generated by the blockchain-based trusted platform 706 and sent to the user 702 in the previous data recordation process. In some embodiments, the credential can include an identifier of the ledger data. In some embodiments, the credential can include a digital signature of the blockchain-based trusted platform 706 generated based on the ledger data using the private key of the blockchain-based trusted platform 706.

At step 712, the service system 704 obtains the data from a local storage of the service system 704 after receiving the request from the user 702. In some embodiments, the local storage of service system 704 can include storage medium such as NVME, SSD, HDD, or SMR. In some embodiments, the service system 702 can obtain the data based on the credential included in the request.

At step 714, the service system 704 sends the data as obtained at step 712 to the blockchain-based trusted platform 706. In some embodiments, the service system 704 can send the credential with the obtained data to the blockchain-based trusted platform 706. In some embodiments, the service system 704 can encrypt the obtained data and/or the credential and send the encrypted information to the blockchain-based trusted platform 706. In some examples, the service system 704 can encrypt the obtained data and/or the credential using a public key of the blockchain-based trusted platform 706 so that the blockchain-based trusted platform 706 can decrypt the encrypted information using its private key.

At step 716, the blockchain-based trusted platform 706 computes a hash value based on the data received from the service system 704. In some embodiments, the hash value can be computed by the blockchain-based trusted platform 706 according to a same cryptographic hash function or algorithm used for computing the hash value in the previous data recordation process.

In some embodiments, the blockchain-based trusted platform 706 can receive encrypted data and/or credential from the service system 704. In some examples, the encrypted data and/or credential can be generated using a public key of the blockchain-based trusted platform 706. The blockchain-based trusted platform 706 can use a private key paired with the public key to decrypt the encrypted data and obtain the data and/or credential.

At step 718, the blockchain-based trusted platform 706 compares the computed hash value with a hash value previously stored in the blockchain-based trusted platform 706. In some embodiments, the blockchain-based trusted platform 706 can obtain ledger data from a local storage of the blockchain-based trusted platform 706 based on the credential received from the service system 704 and obtain the hash value in the ledger data. In some embodiments, the blockchain-based trusted platform 706 can obtain a ledger data from one or more participating blockchain nodes of the blockchain-based trusted platform 706 based on the credential and obtain the hash value in the ledger data. The obtained hash value can then be compared with the computed hash value. In some embodiments, the blockchain-based trusted platform 706 generate a verification result based on a comparison of the two hash values.

At step 720, the blockchain-based trusted platform 706 sends a verification result to the service system 704. In some embodiments, the verification result includes a comparison result of the two hash values as in step 718. In some embodiments, the verification result can further include a digital signature of the blockchain-based trusted platform 706. In some example, the digital signature of the blockchain-based trusted platform 706 can be generated using the private key of the blockchain-based trusted platform 706 based on at least one of the two hash values.

At step 722, after receiving the verification result from the blockchain-based trusted platform 706, the service system 704 sends a verification response to the user 702. In some embodiments, the service system 704 can verify a digital signature included in the verification result. In some examples, the service system 704 can verify the digital signature using the public key of the blockchain-based trusted platform 706. If the digital signature is determined to be invalid, the service system 704 can ignore the verification result. If the digital signature is determined to be valid, the service system 704 can continue to process the verification result.

In some embodiments, the service systems 704 determines whether the two hash values match based on the verification result. If the two hash values match, the service system 704 can determine that the data stored in the service system 704 has not been tampered. The service system 704 can further include the data in the verification response and send the verification response to the user 702 that indicates that the data has not been tampered. If the two hash values do not match, the service system 704 can notify to the user 702 in the verification response that the data has been tampered.

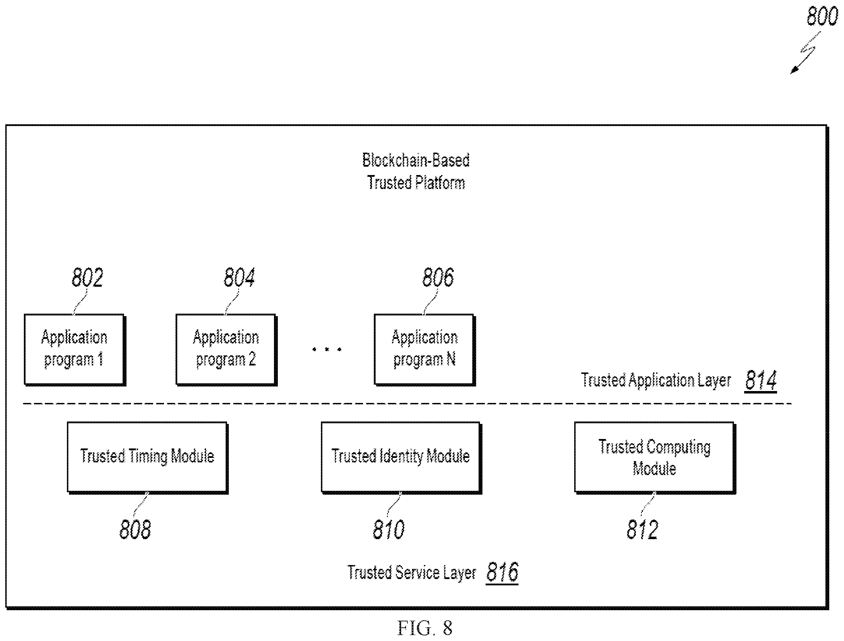

FIG. 8 is a schematic diagram illustrating an example of a blockchain-based trusted platform 800 in accordance with embodiments of this specification. In some embodiments, the blockchain-based trusted platform 800 can be implemented as the blockchain-based trusted platform 312 of FIG. 3. The blockchain-based trusted platform 800 as described herein can be implemented to enhance trust among users and provides various services or process tools to allow the users to perform online transactions in an efficient manner. In the shown example, the trusted platform 800 includes a trusted application layer 814 and a trusted service layer 816. The trusted application layer 814 includes multiple application programs, including a first application program 802, a second application program 804, up to an N-th application program 806 that utilize the functions of the trusted timing module 808, the trusted identity module 810, and the trusted computing module 812 in the trusted service layer 816. In some embodiments, the application programs 802, 804, 806, and the trusted timing module 808, the trusted identity module 810, and the trusted computing module 812 can be implemented in each participating blockchain node of the blockchain-based trusted platform.

The blockchain-based trusted platform 800 solves the problems described above by providing a suite of service application programs that utilize the functions of the trusted timing module 808, the trusted identity module 810, and the trusted computing module 812 to authenticate documents and/or identities of users in a manner that complies (or is more compliant compared with previous systems) with relevant evidentiary rules.

**In** some embodiments, a feature of the blockchain-based trusted platform 800 is that the platform provides trusted time, trusted identity, and trusted computing to enable application programs that provide services to preserve verified records of information (e.g., who, what, and when) about events that occur during each of multiple steps or important time points of the services in ways that comply (or are more compliant compared to previous systems) with evidentiary rules. These records can be added to a blockchain through consensus of blockchain nodes associated with legal, law enforcement, or dispute resolution authorities. Once added, the records become immutable and can be trusted by the court or the parties as evidence for the corresponding legal services or processes.

For example, there can be tools that provide hash and digital signature functions to allow a user to digitally sign data so that other users can verify that the data has not been changed since it is endorsed by digital signature, and to verify the identity of the user who signed the data. However, there remains the possibility that the digitally signed data contain errors, e.g., the data can be corrupted or tampered with unbeknownst to the signer before the data was signed, or that the original digitally signed data was intercepted by a hacker during transmission and replaced with forged digitally signed data. Based on the digitally signed data alone, it can be difficult to prove or disprove the authenticity and accuracy of the data. Thus, it can be difficult to use the digitally signed data in legal proceedings without further proof, such as an affidavit from a notary or a licensed attorney attesting to the authenticity and accuracy of the data. A technical problem to be solved is how to increase the confidence level of data produced by online application programs that provide legal services.

The blockchain-based trusted platform 800 enhances the trustworthiness of data produced by an application program that provides a service over the network and reduces the possibility of forgery or tampering by capturing snapshots of each of multiple steps (or at several important time points) in the process of providing the service. Each snapshot can include information provided by the trusted timing module 808 and/or the trusted identity module 810. The trusted platform 800 stores the snapshots in a blockchain using the trusted computing module 812 to process the blockchain data. The snapshots can include, e.g., information such as who, when, and what associated with the events that occur during the corresponding steps or time points. The probability of forgery or tampering in every one of the multiple steps (or time points) becomes smaller than the probability of forgery or tampering in a single step (or time point). The trusted time module 808 provides trusted or verified time stamps, the trusted identity module 810 provides trusted or verified identity information, and the trusted computing module 812 ensures trustworthiness of the data recorded in related blockchains.

In some embodiments, functions of the modules 808, 810, 812 can be invoked by one or more blockchain-based application programs or smart contract executed in a TEE. The TEE is hosted by one or more data processors isolated from the one or more data processors' operating system and is configured to provide enhanced confidentiality and integrity of code executing and data loading within the one or more data processors. In some examples, the application programs or smart contract can invoke the functions of the modules through an API.

The blockchain-based trusted platform 800 produces a technical effect in which data related to the service provided by the service application program supported by the blockchain-based trusted platform 800 have a higher level of trustworthiness (compared with previous systems). A highly reliable record of a history of transactions that occurred during the provision of the service, including a history of modifications to documents and responses from various parties, can be preserved.

In some embodiments, the trusted service layer 816 can include additional modules, such as a trusted positioning module, that provides a verified position indicating where a transaction occurred. For example, the trusted positioning module can be used to prove that an infringement action occurred in a certain geographical region, and that a complaint can be filed in the court that has jurisdiction. For example, the trusted positioning module can generate verified position information based on data provided by a verified global positioning system (GPS) receiver connected to a client terminal.

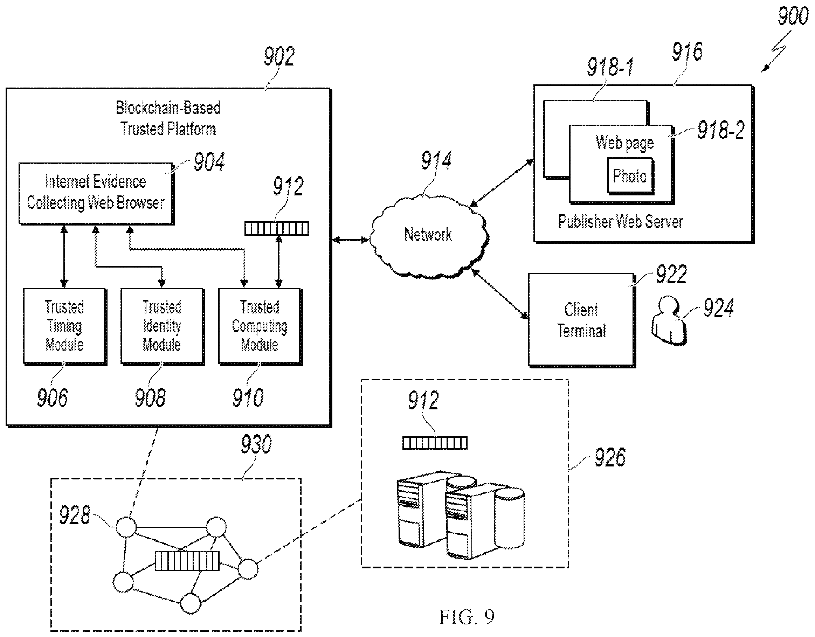

FIG. 9 is a diagram illustrating an example of a system 900 for online transaction in accordance with embodiments of this specification. In the shown example, the system 900 includes a blockchain-based trusted platform 902. In some embodiments, the blockchain-based trusted platform can be implemented as the blockchain-based trusted platform 312 of FIG. 3 or the blockchain-based trusted platform 800 of FIG. 8.

In some embodiments, the trusted platform 902 can be accessed through a network 914, such as the Internet. A user 924 accesses the trusted platform 902 using a client terminal 922, which can be, e.g., a mobile phone, a personal computer, or any computing device that can connect to the network 914. In some examples, the trusted platform 902 provides limited functions to users who have not registered with the platform 902.

Upon registration with the platform 902, the user has a user identifier (ID) that is used to identify the user 924 when the user 924 uses the tools and services of the platform 902. Each registered user has an account associated with the platform 902 and can access the functions of the platform 902 after logging into the account. In some examples, the user 924 can register with the platform 902 by providing personal information, such as a phone number and an e-mail address of the user. In some examples, the user 924 can register with the platform 902 by providing biometric information, such as one or more fingerprints, one or more voiceprints, or iris information through a fingerprint sensor, a microphone, or an iris scanner communicably coupled to the modules 906, 908, and 910. As the user 924 accesses functions of the trusted platform 902, the user can provide additional information to the trusted platform 902, and the trusted platform 902 associates the additional information with the user account.

For example, the user 924 can provide a mobile phone number so that the user 924 can receive messages from the trusted platform 902 on a mobile phone. The user 924 can provide payment account information so that the user 924 can pay for services on the trusted platform 902. For example, the user account can include one or more of the following information that can be used to verify the identity of the user 924: (i) a mobile phone number, (ii) a credit card number, (iii) a user ID associated with an online payment system, (iv) a user ID associated with an online shopping account, (v) a user ID associated with a music streaming or downloading account, (vi) a user IDS associated with a movie streaming or downloading account, (vii) a user ID associated with a messaging or chat account, (viii) a user ID associated with an online banking account, (ix) a user ID associated with a ride hailing service, (x) a user ID associated with an online food ordering service, (xi) a social security number, (xii) a driver's license number, (xiii) a passport number, (xiv) a user ID associated with an online gaming service, (xv) an ID issued by a government entity, (xvi) one or more fingerprints, (xvii) one or more voiceprints, or (xviii) iris information.

In the example of FIG. 9, the user 924 accesses the Internet evidence collecting web browser 904 to search for and view web pages on the Internet 914. A client component (not shown in the figure) of the web browser executes at the client terminal 922 and provides a user interface for displaying the web pages to the user 924 and receiving the user's instructions for handling the web pages, such as clicks for controlling navigation among the web pages.

In some examples, the user 924 uses the web browser 904 to access web pages 918 (including, e.g., web pages 918-1 and 918-2) hosted on a web server 916 of a publisher. The user 924 can initially provide the URL of the home page of the publisher, and click on web links to browse the web pages hosed on the web server 908. In some embodiments, when the user 924 uses the Internet evidence collecting web browser 904 to browse web pages, the web browser 904 invokes the trusted identity module 908 to verify the identity of the user 924. For example, the trusted identity module 908 can use any number of information associated with the user account to verify the identity of the user 924.

In the above example, each time a pre-specified type of event occurs in connection with the use of the web browser 904 by the user 924, the web browser 904 invokes the trusted timing module 906 to obtain a verified time stamp regarding when the event occurred. The pre-specified type of events can include, e.g., receiving an input from the user 924, providing an output to the user 924, and performing a pre-specified type of action or computation. Receiving an input from the user 924 can include, e.g., receiving a URL of a web page, receiving a click command or a selection command from the user 924, receiving an edit command, such as a copy command, from the user 924, or receiving a file command, such as a save command, from the user 924. Providing an output to the user 924 can include, e.g., displaying the contents of a web page to the user 924, playing an audio file to the user 924, or playing a video file to the user 924.

Thus, each time an event occurs, in which the user 924 performs a pre-specified type of action, such as providing a URL to the web browser 904, clicking on a web link on the web page 918, copying text or images from the web page 918, or downloading content from the web page 918, the web browser 904 performs the action requested by the user 924 and also invokes the trusted timing module 906 to obtain a verified time stamp indicating a time when the action was performed or when the event occurred. The web browser 904 invokes the trusted computing module 910 to generate a snapshot of the event, in which the snapshot can be in the format of a record that includes the identity of the user 924, a description of the event (such as a description of the action that was performed), a verified time stamp indicating when the event occurred (such as when the action was performed), and information (e.g., URL) about the web page associated with the action. The trusted computing module 910 generates a hash value of the record, and adds a block that includes the record and the hash value to a blockchain 912 that stores records associated with the user 924.

Upon the occurrence of each event, the web browser 904 invokes the trusted timing module 906 to obtain a verified time stamp indicating the time that the event occurred. The web browser 904 invokes the trusted computing module 910 to update the blockchain 912 to add a record having information about the event.

The trusted platform 902 is associated with one of the nodes (e.g., node 928) of a blockchain network 930 in which the blockchain 912 is replicated across the blockchain network 930. For example, one of the nodes can be associated with a computer server 926 that maintains a version of the blockchain 912.

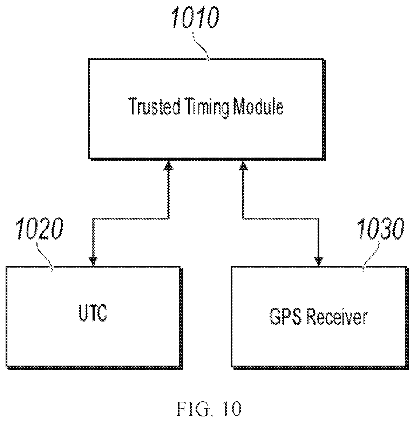

FIG. 10 is a diagram illustrating an example of a system for providing trusted timing in accordance with embodiments of this specification. In some embodiments, the trusted timing module 1010 generates verified time stamps based on the coordinated universal time (UTC) 1020 that is distributed by a national standard institution, or timing information generated by a GPS receiver 1030 that derives the timing information from positioning systems such as the BeiDou Navigation Satellite System maintained by China, the Global Positioning System maintained by the United States, the Galileo global navigation satellite system maintained by the European Union, the Global Orbiting Navigation Satellite System (GLONASS) maintained by Russia, and/or the Quasi-Zenith Satellite System) maintained by Japan.

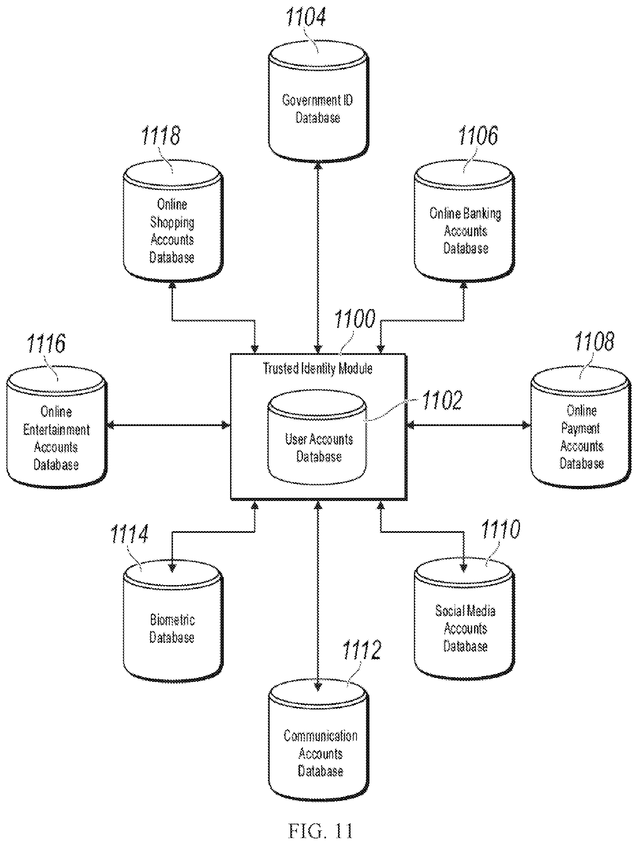

FIG. 11 is a diagram illustrating an example of a system for providing trusted identity in accordance with embodiments of this specification. In some embodiments, the trusted identity module 1100 maintains a user account database 1102 that includes information about registered users provided by the users themselves. The trusted identity module 1100 also accesses other databases to verify the account information provided by the users. For example, the trusted identity module 1100 can access a government ID database 1104 to verify the accuracy of the government ID provided by the user. If the trusted identity module 1100 determines that the government ID provided by the user matches the name or phone number of another user listed in the government ID database 1104, the trusted identity module 1100 can generate an alert message indicating the possibility of fraudulent identity. In some embodiments, the trusted identity module 1100 can access a database 1106 of the accounts of the users who access online banking services, such as Alipay, that allow users to digitally pay for services provided on the trusted platform. The trusted identity module 1100 can access a database 1108 of the accounts of the users who use the online payment services. The trusted identity module 1100 can access a database 1110 of the accounts of the users who use the social media services provided on the trusted platform. The trusted identity module 1100 can access a database 1112 of the accounts of the users who use the communication services provided on the trusted platform.

The trusted identity module 1100 can access a database 1118 of the accounts of the users who use the online shopping services that allow users to shop for products online. The trusted identity module 1100 can access can maintain a database 1116 of the accounts of the users who use the online entertainment services that allow users to listen to music or watch movies by downloading or streaming the music or movies. The trusted identity module 1100 can access a biometric database 1114 that stores biometric information, such as one or more fingerprints, one or more voiceprints, or iris information, provided by the users during registration.

In some embodiments, the trusted identity module 1100 can attempt to verify the identity of the user using multiple databases, thus increasing the trustworthiness of the verified identity information provided by the trusted identity module 1102.

In some embodiments, the various databases 1104, 1106, 1108, 1110, 1112, 1114, 1116, and 1118 can be maintained independently of one another. For example, a user can modify the information in the online banking account without modifying the information in the online shopping account. A user can update information in different accounts at different periods of time. The same user can use different user names or aliases for different services. Multiple users can share the same account, e.g., family members can share the same movie streaming account. The same user can open multiple accounts with a service, e.g., a user can have multiple mobile phone numbers, e-mail addresses, and/or messaging IDs. Thus, based on the information of a single database, it may not be sufficient to accurately verify the identity of a user. However, by combining information from multiple databases, the identity of the user can be more reliably verified.

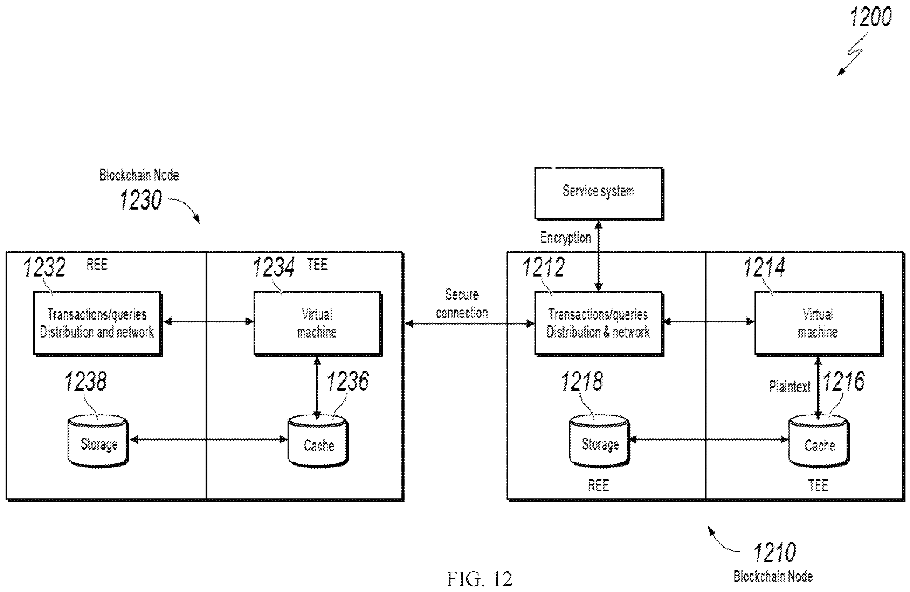

FIG. 12 is a diagram illustrating an example of a system 1200 for trusted execution in accordance with embodiments of this specification. In some embodiments, nodes of a blockchain network, and/or nodes that communicate with the blockchain network can operate using TEEs and/or rich execution environments (REEs). In general, a TEE is a secure, integrity-protected processing environment, consisting of processing, memory, and storage capabilities. In some embodiments, the TEE can be isolated from the "normal" processing environment, such as the REE, where the device operating system and applications run. TEEs can make it possible to build REE applications and services with better security and usability by partitioning them so that sensitive operations are restricted to the TEE and sensitive data, such as cryptographic keys.

In the shown example, the blockchain nodes 1210 and 1230 operate using both the TEE and REE. As shown, virtual machines 1214 and 1234 operate using the TEE, and caches 1216 and 1236 also operate using the TEE. Services 1212 and 1232, such as transactions, queries, distribution, and network services, operate in the REE. Unlike the caches that operate in the TEE, storages 1218 and 1238 operate in the REE.

TEE is a trusted environment within hardware (one or more processors, memory) that is isolated from the hardware's operating environment (e.g., operating system (OS), basic input/output system (BIOS)). In further detail, a TEE is a separate, secure area of a processor that ensures the confidentiality, and integrity of code executing, and data loaded within the main processor. Within a processor, the TEE runs in parallel with the OS. At least portions of so-called trusted applications (TAs) execute within the TEE, and have access to the processor and memory. Through the TEE, the TAs are protected from other applications running in the main OS. Further, the TEE cryptographically isolates TAs from one another inside the TEE

An example of a TEE includes Software Guard Extensions (SGX) provided by Intel Corporation of Santa Clara, California, United States. Although SGX is discussed herein by way of example, it is contemplated that embodiments of this specification can be realized using any appropriate TEE. SGX provides a hardware-based TEE. In SGX, the trusted hardware is the die of the central processing until (CPU), and a portion of physical memory is isolated to protect select code and data. The isolated portions of memory are referred to as enclaves. More particularly, an enclave is provided as an enclave page cache (EPC) in memory and is mapped to an application address space. The memory (e.g., DRAM) includes a preserved random memory (PRM) for SGX. The PRM is a continuous memory space in the lowest BIOS level and cannot be accessed by any software. Each EPC is a memory set (e.g., 4 KB) that is allocated by an OS to load application data and code in the PRM. EPC metadata (EPCM) is the entry address for respective EPCs and ensures that each EPC can only be shared by one enclave. That is, a single enclave can use multiple EPCs, while an EPC is dedicated to a single enclave.

The blockchain and TEE technologies described above can be used to generate highly reliable records related to online transactions. An online transaction typically involves multiple steps. Instead of generating a verified record of the end result of a transaction, such as generating a hash value of data generated at the end of the transaction, the novel systems described in this specification use data generated during multiple events that occurred throughout the multiple steps of the transaction to generate a record that can be used to verify the transaction. A verified record of the data derived from events associated with the multiple steps of a transaction is much more reliable than a verified record based on just the end result of the transaction. In some embodiments, for each piece of data that needs to be verified, not only is the piece of data itself verified, the process of generating the piece of data is also verified. The process of generating the piece of data can involve multiple steps, and each step of the process is verified. This ensures that the final piece of data is highly reliable because the probability that every step of the process has been fraudulently modified is very low. In some embodiments, a tool is provided for gathering evidence in the form of digital data. For each piece of evidence that needs to be verified, not only is the evidence itself verified, the process of collecting or generating the evidence is also verified. The process of collecting or generating the evidence can involve multiple steps, and each step of the process is verified. This ensures that the evidence collected or generated at the end of the process is highly reliable because the probability of someone fraudulently modifying the data in every step of the process is very low.

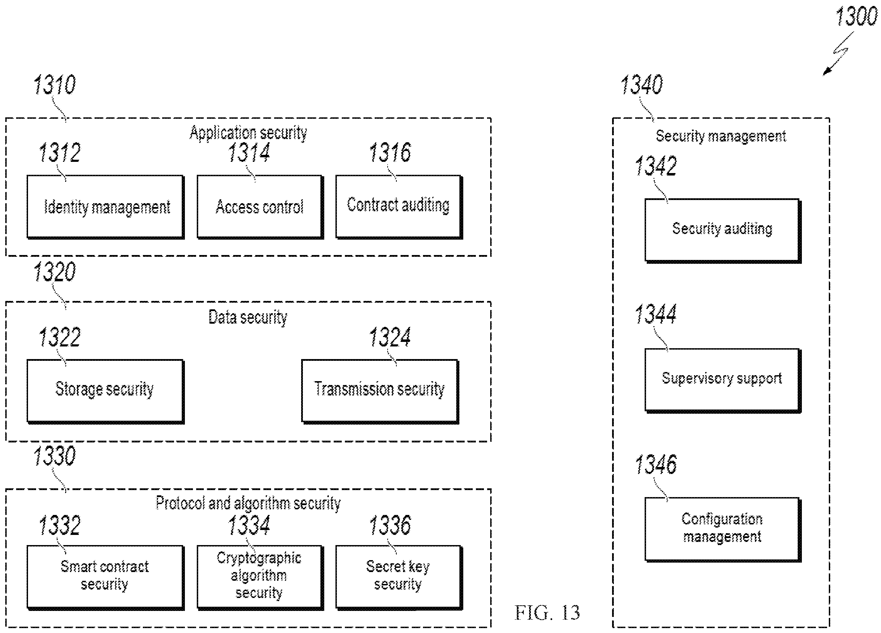

FIG. 13 is a diagram illustrating an example of an architecture 1300 for blockchain security in accordance with embodiments of this specification. The architecture 1300 can be implemented to provide security features to a blockchain-based trusted system, such as the blockchain-based trusted platform 312 of FIG. 3 or the blockchain-based trusted platform 800 of FIG. 8. In the shown example, the security architecture 1300 includes following components: application security component 1310, data security component 1320, protocol and algorithm security component 1330, and security management component 1340.

In some embodiments, the application security component 1310 can include features such as identity management feature 1312, access control feature 1314, and smart contract auditing feature 1316. In some embodiments, the identity management feature 1312 can include a certificate-based authentication mechanism for user authentication. In some example, the certificate-based authentication mechanism can include authentication between service systems and blockchain nodes, and between different blockchain nodes using TLS (transport layer security). In this example, the transmission of services on a reliable channel can be allowed after the authentication is successful. The communication between the service system and the blockchain nodes, and between the blockchain nodes can be encrypted by TLS to mitigate malicious cyber-attacks. In some embodiments, the blockchain-based trusted system can support TLS protocol and HTTPS (Hypertext Transfer Protocol Secure) protocol, where both protocols can support certificate-based two-way authentication. In some embodiments, HTTPS can be configured to support one-way authentication per user's requirement. In some embodiments, a handshake procedure can be implemented between the blockchain nodes. Reliable communication between the blockchain nodes can be achieved by requiring one blockchain node to verify a private-key signature of another blockchain node in the handshake procedure. In some embodiments, the access control feature 1314 can be configured to support access control for user accounts. In some example, the access control feature 1314 can support different access permissions of accounts with different levels/priorities. The access control feature 1314 can support different permissions of accounts in different categories. The access control feature 1314 can support mutual authorization of different accounts and modification to account permissions. The smart contract auditing feature 1316 can provide security to smart contracts in terms of process and implementation, and manage the entire life cycle of the smart contracts, including cooperation, audit, initialization, upgrade, revocation, etc., to reduce security risks caused by code and service vulnerabilities.

The data security component 1320 includes storage security feature 1322 and transmission security feature 1324. In some example, the storage security feature 1322 can provide support for multi-node data storage so that the loss of data in a single blockchain node does not affect the entire blockchain network. The storage security feature 1322 can provide a data synchronization mechanism between blockchain nodes to ensure proper replication of data, and to provide data archiving tools for data archive and backup. The transmission security feature 1324 can support private-key-based transaction signature to prevent the transaction content from being tampered. The transmission security feature 1324 can support a hash mechanism that improves data security of the transaction recorded in the blockchain. The transmission security feature 1324 can support confidential information invisibility through privacy transactions based on zero-knowledge proof to ensure that the confidential information cannot be obtained by third parties.

The protocol and algorithm security component 1330 includes smart contract security feature 1332, cryptographic algorithm security feature 1334, and secret key security feature 1336. In some embodiments, the smart contract security feature 1332 can provide support for code security, operating mechanism security, service logic security, and user security. In some example, the smart contract security feature 1332 can support loading and executing smart contract using virtual machines. In this example, an independent virtual machine can be created for each blockchain transaction. When a blockchain transaction is completed, the virtual machine for the blockchain transaction can be destroyed. The virtual machines can be configured to detect inappropriate smart contract content and interrupt execution of the smart contract with inappropriate content. In some embodiments, the cryptographic algorithm security feature 1334 can provide utility security for encryption, signature, and hash algorithms and functions. In some example, the cryptographic algorithm security feature 1334 can support multiple sets of cipher suites according to the needs of different service scenarios. Table 1 as below shows an example of specification of the cipher suites in accordance with embodiments of this specification.

**Table 1. Cipher suite specification**

| Cipher suite | Algorithm | Type | Parameter | Length |
|---|---|---|---|---|
| International commercial cipher suite | SHA256 | digest | N/A | 256 bits |
| | ECDSA | digital signature | Secp256k1 curve | 256 bits |
| | AES | block cipher | GCM mode | 128/256 bits |
| Chinese national standard cipher suite | SM2 | digital signature | National recommended | 256 bits |
| | SM3 | digest | National recommended | 256 bits |
| | SM4 | block cipher | National recommended | 128 bits |

The secret key security feature 1336 can provide security for secret keys, e.g., public keys and private keys, by maintaining a secret key management system. In some example, the secret key security feature 1336 can support life-cycle management of secret keys and certificates, including generation, importation, preservation, exportation, distribution, exchange, use, and update of the secret keys and certificates. The secret key security feature 1336 can support secure storage of private keys for generating digital signatures. The secret key security feature 1336 can provide user information protection and user account locking in case the loss of the secret keys occur. The secret key security feature 1336 can further support a private key loss report and a signature protection mechanism.

The security management component 1340 includes security auditing feature 1342, supervisory support feature 1344, and configuration management feature 1346. In some example, the security auditing feature 1342 can support security auditing based on application logs. In this example, the security auditing can be performed on definable log command rules, print format, alarm level, and save time. The security auditing can further include discovery, analysis, and tracking of abnormal events based on the access time, IP address, behavior, and other information recorded in the log. In some embodiments, the supervisory support feature 1344 can support admin permission that allows a user to access the blockchain network to obtain ledger data. In some embodiments, the configuration management feature 1346 can support configuration and building of genesis block to establish an initial trust by configuring trust roots and core parameters of the blockchain network.

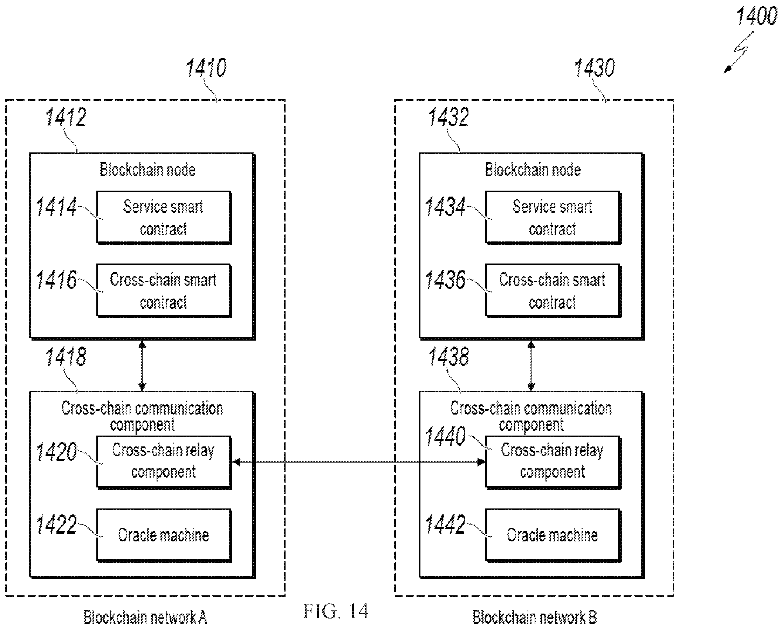

FIG. 14 is a diagram illustrating an example of a cross-chain communication system 1400 in accordance with embodiments of this specification. In some embodiments, the cross-chain system 1400 can be implemented to facilitate communication between different blockchain networks. For example, a judicial blockchain network can need to communicate with a public blockchain network to provide services to client accessing the public blockchain network. The judicial blockchain network and the public blockchain network can be implemented in the cross-chain system 1400 to ensure data security during data transmission and storage in and between the two blockchain networks. In the shown example, the cross-chain system 1400 includes a first blockchain network 1410 and a second blockchain network 1430. In some embodiments, each blockchain network can include a cross-chain communication component or node to facilitate communication between the blockchain nodes of the blockchain network and blockchain nodes of another blockchain network. In the above example, the first blockchain network includes a first blockchain node 1412 and a first cross-chain communication component 1418, and the second blockchain network includes a second blockchain node 1432 and a second cross-chain communication component 1438. Note that the each one of the blockchain nodes 1412 and 1432 is shown to include one blockchain node and one cross-chain communication component for illustrative purposes only. The blockchain nodes 1412 and 1432 can have any suitable number of blockchain nodes and cross-chain communication components.

In some embodiments, the cross-chain communication component can be configured as a communication interface that facilitates communication between a blockchain node in a same blockchain network as the cross-chain communication component and another cross-chain communication component in another blockchain network. In the shown example, the cross-chain communication component 1418 is configured to allow communication between blockchain node 1412 and cross-chain communication component 1438, and the cross-chain communication component 1438 is configured to allow communication between blockchain node 1432 and cross-chain communication component 1418. In this way, data communication can be achieved between the two blockchain nodes 1412 and 1432 in different blockchain networks 1410 and 1430 using the cross-chain communication components 1418 and 1438. In some embodiments, the cross-chain communication components can be configured to support data verification and data proof on a local blockchain network. The cross-chain communication components can be further configured to support unified data format conversion of cross-chain messages, cross-chain communication networking protocol, and routing of the cross-chain messages.

In the shown example, each blockchain node includes a service smart contract and a cross-chain smart contract. As shown, the blockchain node 1412 includes a service smart contract 1414 and a cross-chain smart contract 1416, and the blockchain node 1432 includes a service smart contract 1434 and a cross-chain smart contract 1436. In some embodiments, a service smart contract can be configured to allow a user to access the blockchain node and submit blockchain transactions, such as transactions for recording data to a blockchain, transactions for transferring data to another blockchain network, etc. A cross-chain contract can be configured to implement cross-chain protocols that facilitates communication between the blockchain node and the cross-chain communication component. In some example, the cross-chain smart contract can be configured to support definition of cross-chain message formats and cross-chain message communication protocols. In some embodiments, the cross-chain smart contract can be further configured to verify cross-chain proofs and parse formatted data.

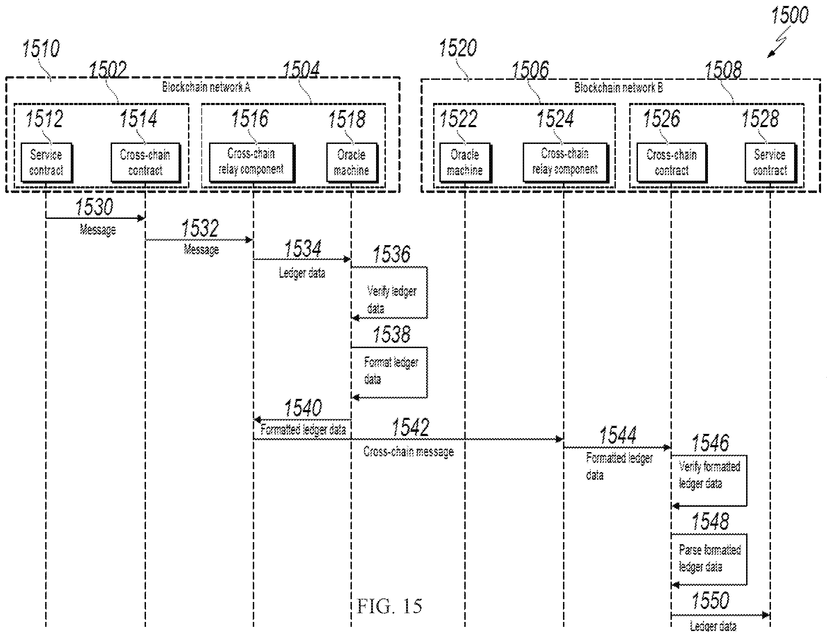

In the shown example, each cross-chain communication component includes a cross-chain relay component and an oracle machine. As shown, the cross-chain communication component 1418 includes a cross-chain relay component 1420 and an oracle machine 1422, and the cross-chain communication component 1438 includes a cross-chain relay component 1440 and an oracle machine 1442. In some embodiments, a cross-chain relay component can be configured to extract ledger data and ledger proof from a message received from a cross-chain smart contract. In the shown example, the cross-chain relay component 1420 can receive a message from the cross-chain smart contract 1416 and extract a ledger data and ledger proof from the message. In some embodiments, a cross-chain relay component can be configured to communicate with another cross-chain relay component in a different blockchain network. Continuing with the above example, the cross-chain relay component 1420 can process the message from the cross-chain smart contract 1416, extract the ledger data from the message, generate a cross-chain message based on the ledger data, and send the cross-chain message to the cross-chain relay component 1440. In some embodiments, the oracle machine, e.g., oracle machines 1422 and 1442, can be configured to perform signature verification, and perform unified data formatting on data received from the cross-chain relay component. In some embodiments, an oracle machine can include any suitable hardware and/or software to perform the methods as described herein. Cross-chain communication using the cross-chain relay components and the oracle machines will be discussed in greater detail below with reference to FIG. 15.

FIG. 15 depicts an example of a process 1500 for cross-chain communication that can be executed in accordance with embodiments of this specification. For convenience, the process 1500 will be described as being performed by a system of one or more computers, located in one or more locations, and programmed appropriately in accordance with this specification. For example, a blockchain-based system, e.g., the system 1400 of FIG. 14, appropriately programmed, can perform the process 1500. In some embodiments, blockchain networks 1510 and 1520 can be implemented as the blockchain networks 1410 and 1430 of FIG. 14 respectively. In the shown example, the blockchain network 1510 includes a blockchain node 1502 and a cross-chain communication component 1504, and the blockchain network 1520 includes a blockchain node 1508 and a cross-chain communication component 1506. As shown, the service smart contract 1512 and the cross-chain smart contract 1514 execute on the blockchain node 1502 of the blockchain network 1510, while the service smart contract 1528 and the cross-chain smart contract 1526 execute on the blockchain node 1508 of the blockchain network 1520. The cross-chain relay component 1516 and the oracle machine 1518 are implemented in the cross-chain communication component 1504, while the cross-chain relay component 1524 and the oracle machine 1522 are implemented in the cross-chain communication component 1506.

The process 1500 starts at step 1530 where the service smart contract 1512 sends a message including ledger data to the cross-chain smart contract 1514. In some examples, the ledger data can include legal documents, commercial contracts, etc. In some embodiments, a format of the ledger data can include images, video, web pages, spreadsheets, etc. In some embodiments, the ledger data can include plain-text data and/or a hash value of the plain-text data.

At step 1532, the cross-chain smart contract 1514 sends the message including the ledger data to the cross-chain relay component 1516 after receiving the message. In some embodiments, the cross-chain smart contract 1514 can send a ledger proof of the ledger data in the message. In some embodiments, the ledger proof includes a digital signature generated based on the ledger data according to a predetermined encryption or cryptographic algorithm. In some examples, the digital signature can be generated based on the ledger data using a private key of the blockchain node 1502 where the cross-chain smart contract 1514 is executed.

At step 1534, the cross-chain relay component 1516 sends the ledger data to the oracle machine 1518. In some embodiments, the cross-chain relay component 1516 obtains the ledger data from the message received from the cross-chain smart contract 1514. In some embodiments, the cross-chain relay component 1516 further obtains the ledger proof from the message. In some embodiments, the cross-chain relay component 1516 can send the ledger data and the ledger proof to the oracle machine 1518.

At step 1536, the oracle machine 1518 verifies the ledger data and determines whether the ledger data is valid. In some embodiments, the oracle machine 1518 can verify the ledger data based on the ledger proof In some examples, the oracle machine 1518 can verify a digital signature included in the ledger proof If the digital signature is valid, the oracle machine 1518 can determine that the ledger data is valid and continue to process the ledger data. If the digital signature is not valid, the oracle machine 1518 can discard the ledger data.

At step 1538, the oracle machine 1518 generates a formatted ledger data based on the ledger data. In some embodiments, the oracle machine can format the ledger data according to a unified data format in comply with a cross-chain communication protocol. In some embodiments, the oracle machine 1518 can generate the formatted ledger data based on the ledger data and the ledger proof.

At step 1540, the oracle machine 1518 returns the formatted ledger data to the cross-chain relay component 1516. In some embodiments, the oracle machine 1518 can generate a hash value of the formatted ledger data and send the hash value to the cross-chain relay component 1516.

At step 1542, the cross-chain relay component 1516 sends a cross-chain message to the cross-chain relay component 1524 after receiving the formatted ledger data from the oracle machine 1518. In some embodiments, the cross-chain relay component 1516 can generate the cross-chain message based on the formatted ledger data. In some embodiments, the cross-chain message can include the formatted ledger data and the hash value of the formatted ledger data.

At step 1544, the cross-chain relay component 1524 sends the formatted ledger data to the cross-chain smart contract 1526 after receiving the cross-chain message. In some embodiments, the cross-chain relay component 1524 obtains the formatted ledger data from the cross-chain message received from the cross-chain relay component 1516. In some embodiments, the cross-chain relay component 1524 can obtains the hash value of the formatted ledger data from the cross-chain message. In some embodiments, the cross-chain relay component 1524 can send the hash value along with the formatted ledger data to the cross-chain smart contract 1526.

At step 1546, the cross-chain smart contract 1526 verifies the formatted ledger data and determines whether the formatted ledger data is valid. In some embodiments, the cross-chain smart contract 1526 can verify the formatted ledger data based on hash value received from the cross-chain relay component 1524. In some examples, the cross-chain smart contract 1526 can compute a hash value of the formatted ledger data, and compares the computed hash value with the received hash value. If the two hash values match, the cross-chain smart contract 1526 can determine that the formatted ledger data is valid. If the two hash values do not match, the cross-chain smart contract 1526 can determine that the formatted ledger data is not valid and discard the formatted ledger data. In some embodiments, the cross-chain smart contract 1526 can determine whether a format of the formatted ledger data matches a predetermined data format. If the format of the formatted ledger data matches the predetermined data format, the cross-chain smart contract 1526 can determine that the formatted ledger data is valid. If the format of the formatted ledger data does not match the predetermined data format, the cross-chain smart contract 1526 can determine that the formatted ledger data is not valid.

At step 1548, the cross-chain smart contract 1526 parses the formatted ledger data. In some embodiments, the cross-chain smart contract 1526 can perform a predetermined parsing method on the formatted ledger data, for example, by converting the formatted ledger data to an original ledger data format. In some examples, the cross-chain smart contract 1526 can obtain the ledger data by converting the formatted ledger data to the original ledger data format.

At step 1550, the cross-chain smart contract 1526 sends the ledger data to the service smart contract 1528 after obtaining the ledger data by parsing the formatted ledger data. The service smart contract 1528 receives the ledger data and can make the ledger data available to users accessing the blockchain network 1520.

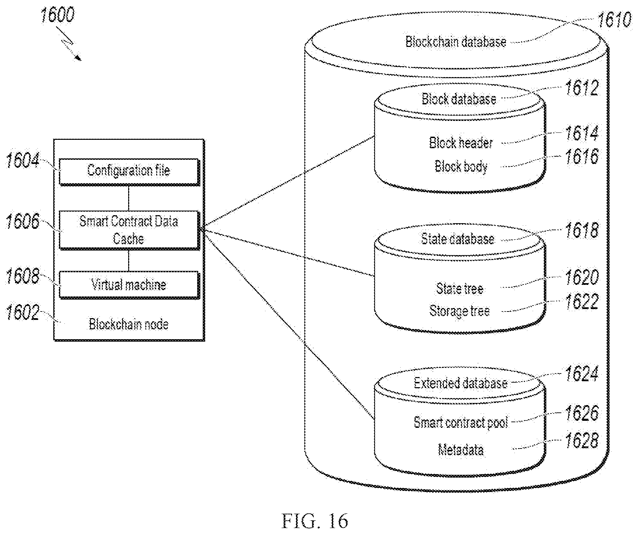

FIG. 16 depicts an example 1600 of data storage in a blockchain-based trusted platform in accordance with embodiments of this specification. At a high-level, data storage of a blockchain node 1602 can include a smart contract data cache 1606 and a blockchain database 1610. The smart contract data cache 1606 can be used to store mutable data managed by smart contracts, while the blockchain database 1610 can be used to store incremental, immutable blockchain data, such as smart contract codes, inputs, outputs, and execution logs of the smart contracts. The blockchain database 1610 can be a key-value database that includes a block database 1612, a state database 1618, and an extended database 1624. The block database 1612 can store blockchain data including block header 1614 and block body 1616. The state database 1618 can store state information associated with the blockchain data, including a state tree 1620 and a storage tree 1622. The extended database 1624 can store smart contract data including a plurality of smart contract pools 1626 and metadata 1628 associated with the plurality of smart contract pools 1626.

The blockchain node 1602 can invoke a virtual machine 1608 to execute smart contracts. In some embodiments, the virtual machine 1608 can be deployed in a trusted computing environment such as a TEE. In some embodiments, the virtual machine 1608 can be configured to perform smart contract operations by executing instructions of a smart contract programming language. In some examples, the virtual machine 1608 can access resources external of the TEE during execution of the operation, such as, for example, external servers, a blockchain, a database, or other resources indicated by the operation. In some embodiments, accessing external resources can be restricted or denied, such that the entirety of the execution of the operations depends only on data stored in the TEE (such as the smart contract states). This type of restriction can further reduce the possibility of tampering with the execution of the operations.

The smart contract operations can include an execution state for the smart contract associated with the request contract operation (e.g., add document, update document states, etc.). During execution of a smart contract, multiple blockchain nodes of a blockchain network can execute each instruction of the smart contract individually, and produce a result indicating an execution state of the smart contract after the completion of executing the instructions. The execution state can include data associated with the smart contract. Each executed instruction of the contract can change the contents of the data (e.g., to store a value to be used by a later instruction in the smart contract).

After execution of an instruction of the smart contract, the nodes of the blockchain network can reach a consensus on the new execution state after execution of the instruction. This consensus process is performed for each instruction executed in a smart contract, leading to a consensus as to the execution path of the smart contract. The execution path can be recorded as a corresponding smart contract execution event log recorded in the block database 1612. Finally, the final result (i.e., output) of the execution is also recorded in the block database 1612.

**In** general, the mutable data can include document type, document ID, document state, modifiable data of the document content, transaction hash that associates document data stored in the smart contract data cache 1606 and the blockchain database 1610, linkage information provided for linking different documents associated with the same order, encryption keys, and lists of authorized users to the documents, etc. In some embodiments, the smart contract data cache 1606 can also store index data for associating mutable data and immutable data associated with the same document or transaction. As discussed earlier, the index data can include document IDs associated with documents and transaction hashes associated with the transactions. The document IDs can be stored in both the smart contract data cache 1606 and the blockchain database 1610 to link mutable and immutable data associated with the same document. The transaction hashes can be stored in both the smart contract data cache 1606 and the blockchain database 1612 to link mutable and immutable data associated with the same transactions. As such, both mutable data and immutable data can be identified from two storage locations when a document or a transaction associated with the document is queried.

The document type and document ID can respectively indicate a type and an ID of the document. The document state can indicate a state of the document. The modifiable data of the document content can be certain content such as overhead inserted into the document by a creator of the document for data processing.

The transaction hash can be the hash value of the immutable blockchain data stored in the blockchain database 1610. The encryption keys can include a symmetric key for encrypting the document data before storing on the blockchain in the blockchain database 1610. The encryption keys can also include encryption keys associated with users of the blockchain-based trusted platform 300 as described in the description of FIG. 3. Data stored in the blockchain database 1610 can be encrypted to protect privacy of the document owners.

A document owner can provide access permission of the document in plaintext to another user of the blockchain-based trusted platform by issuing an encrypted version of the symmetric key using the other user's public key. The encrypted data is immutable and is stored in the blockchain database 1610, a hash value of the encrypted data (i.e., a transaction hash) can be generated and stored with the encrypted version of the symmetric key to the smart contract data cache 1606 under the same data structure. Generally, the transaction hash can be used to link the mutable data stored in the smart contract data cache 1606 with immutable blockchain data associated with the same order stored in the blockchain database 1610. For example, an order document and one or more logistics documents associated with an order can include mutable data stored in the smart contract data cache 1606 and encrypted documents stored in the blockchain database 1610. The transaction hashes of the encrypted documents stored in the blockchain database 1610 can be stored with the mutable data under the same data structure in the smart contract data cache 1606. As such, data stored in different locations can be linked when queried.

To query the data, a permitted user can search the smart contract data cache 1606 to obtain the hash value and the encrypted version of the symmetric key. The user can use her private key to decrypt the encrypted version of the symmetric key. If the symmetric key is successfully decrypted, the user can determine that she has access permission to the plaintext data. The user can then use the hash value to locate the encrypted data from the blockchain database 1610, and use the symmetric key to decrypt the encrypted data.

In some embodiments, mutable data in the smart contract data cache 1606 are stored as KVPs. The cache storage can be a relatively high-speed, high-cost, and low capacity storage medium, as compared to other storage media such as hard disk drives. When the volume of the KVPs exceeds a certain threshold (e.g., 5GB), a cache-miss state can incur. The cache miss is a state where the data requested for processing by a component or application is not found in the cache memory. Cache miss can cause execution delays by requiring the program or application to fetch the data from other cache levels or the main memory.

In some embodiments, a plurality of smart contract pools 1626 can be created in the blockchain database 1610 to store at least a portion of the mutable data managed by the smart contracts in the smart contract data cache 1606. The at least a portion of the mutable data can then be moved from the high-cost cache storage to the blockchain database 1610 to lower the overall storage cost and alleviate the cache-miss state.

In some embodiments, a new smart contract address can be added by the blockchain node 1602 to the configuration file 1604 to create a corresponding smart contract. The virtual machine 1608 can create a smart contract based on the smart contract address when the configuration file 1604 is executed. A smart contract pool corresponding to the smart contract can be automatically created in the extended database 1624 when the corresponding smart contract is created.

In some embodiments, data stored in the smart contract pools 1626 are also recorded in the block database 1612 through consensus. In some embodiments, data stored in the smart contract pool can be exclusively managed by the corresponding smart contract. A contract ID of the smart contract can be added to data stored in the corresponding smart contract pool, so that the data in the pool can be easily queried, retrieved, or otherwise managed by the smart contract.

In some embodiments, a document can be stored in one of the smart contract pools 1626 based on a hash value of one or more of the document ID or document type. A hash value range can be predetermined and assigned to each of the smart contract pools 1626. For example, for a document with document ID 000001, its md3 hash value is 769924EADBBF6F72C6581377419FCB77. Assume that 16 smart contract pools exist, the document can be stored in the seventh smart contract pool based on the first hexadecimal number of the hash value. Similarly, a document with document ID 000003 has a md3 hash value 4DE1F0F6DA993FC4AB439CDCA5E084F6. The document can be stored in the fourth smart contract pool based on the first hexadecimal number of the hash value.

In some embodiments, the order document, logistics documents, and payment documents associated with the same order can be assigned to a same document ID or tag. As such, they can be easily located when queried from the smart contract data cache 1606, the smart contract pools 1626, and the blockchain 814. To link documents associated with the same order stored in different smart contract pools 1626, the document IDs of the corresponding smart contracts can be added with the corresponding document ID to each document. As such, the documents can be retrieved from different smart contract pools 1626 according to the document IDs. In some embodiments, the document ID can be a transaction hash of the corresponding document. The transaction hash can be used to locate the corresponding immutable data stored in the block database 1612.

In some embodiments, new smart contract pools can be created periodically. For example, if a new smart contract pool is created every month, the smart contract can be associated with the time of creation expressed as MMYYYY, where MM represents the month of creation and YYYY represents the year of creation. As such, mutable data created during a particular month can be stored in the smart contract pool created in that month.

In some embodiments, the document can be stored in each of the smart contract pools 1626 in a round-robin manner. In some examples, after a smart contract pool reaches its storage capacity, mutable data of a new document can be stored in the next smart contract pool. In some examples, after a smart contract pool stores mutable data of a predetermined amount of documents, mutable data of a new document can be stored in the next smart contract pool.

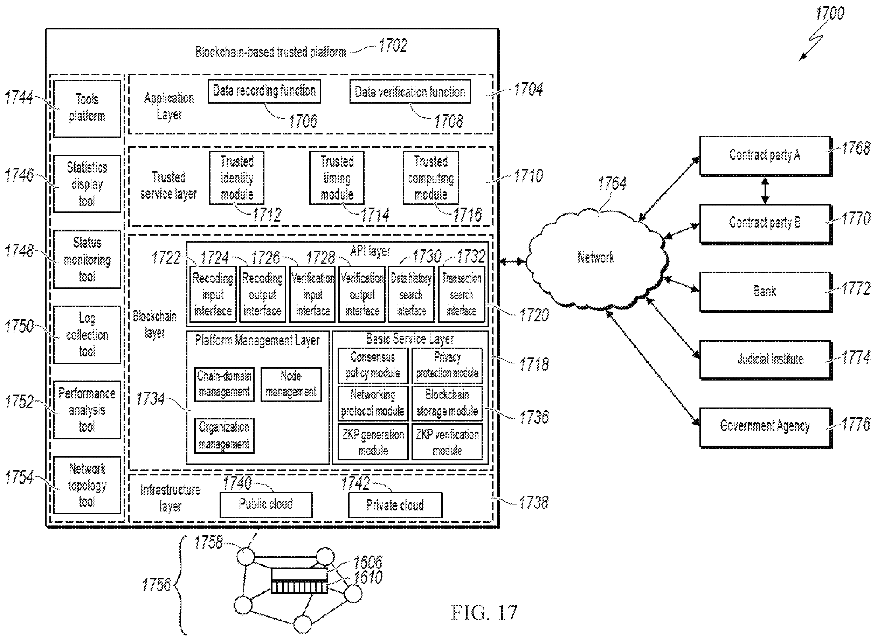

FIG. 17 depicts an example of a system 1700 for implementing a blockchain-based trusted platform 1702 in accordance with embodiments of this specification. The blockchain-based trusted platform 1702 provides an integrated interface that allows users to manage information used in various stages of the contract enactment and enforcement. In some embodiments, the blockchain-based trusted platform 1702 provides services to one or more contract parties, such as contract party A 1768 and contract party B 1770, so that the contracts negotiated and signed by the contract parties can be securely stored (e.g., in the blockchain database 1610 and smart contract data caches 1606 as described in the description of FIG. 16). In some embodiments, the blockchain-based trusted platform 1702 can also provide services to other entities associated with contracts, such as one or more banks 1772, one or more judicial institutes 1774, and one or more government agencies 1776 through a network 1764 (e.g., the Internet).

The contract party A 1768 can be a buyer who purchases services or goods from the contract party B 1770. The contract party A 1768 and the contract party B 1770 can negotiate a contract that defines the goods or services to be purchased, delivery date, payment methods, penalty of payment defaults, etc. When both parties of the contract agree on the terms of the contract, they can sign the contract, and either contract party A 1768 or contract party B 1770 can send a copy of the contract to the blockchain-based trusted platform 1702 for record keeping, e.g., by storing the copy of the contract in the blockchain database 1610 and/or the smart contract data caches 1606.

The banks 1772 can maintain bank accounts for the contract parties as well as send and receive payments among the contract parties. The banks 1772 can provide payment information associated with contracts to the blockchain-based trusted platform 1702. The banks can generate payment documents that include payment information related to the contracts, and send the payment documents to the blockchain-based trusted platform 1702.

The judicial institute 1774 can resolve disputes during enforcements of contracts. For example, contract part), A 1768 can default payments to contract party B 1770. The judicial institute 1774 can issue a court order identifying contract party A 1768 as a debtor, contract party B 1770 as a creditor, and a judgement amount. The judicial institute 1774 can send a copy of the court order to the blockchain-based trusted platform 1702 for record keeping, e.g., by storing the copy of the court order in the blockchain database 1610 and/or the smart contract data caches 1606. Contract party B 1770 can then send a request to the blockchain-based trusted platform 1702 for collecting the judgement amount from contract party A 1768. After verifying that the request is associated with an authentic court order stored in the blockchain, the blockchain-based trusted platform 1702 can identify one or more bank accounts associated with contract party A 1768 having an aggregated balance not less than the judgement amount and transfer the judgement amount from the one or more bank accounts associated with contract party A 1768 to one or more bank accounts associated with contract party B.

The government agency 1776 can be a government agency that is responsible for overseeing and regulating activities associated with contracts, such as determining whether a contract complies with laws, codes, or regulations, and assessing and collecting the duties, taxes, and fees associated with exportation and importation of goods. The government agency 1776 can also be responsible for detecting fraudulent activities associated with contracts. The government agency 1776 can access and retrieve contracts stored in the blockchain-based trusted platform 1702. The blockchain-based trusted platform 1702 can provide services to the government agency 1776, such as examining the contracts for potential incompliances or fraudulent activities.

The blockchain-based trusted platform 1702 interacts with a blockchain network 1756 that includes a plurality of blockchain nodes 1758 to securely record contract information in the blockchain database 1610 and the smart contract data cache 1606. As discussed above, the smart contract data cache 1606 can store mutable data in the form of smart contract data, and the blockchain database 1610 can store incremental, immutable, permanent blockchain data. This provides a good balance between processing efficiency and storage cost of the blockchain data.

In some embodiments, the blockchain-based trusted platform 1702 includes an application layer 1704, a trusted service layer 1710, a blockchain layer 1718, an infrastructure layer 1738, and a tools platform 1744.

The application layer 1704 can provide functions that enable the one or more contract parties, such as contract party A 1768 and contract party B 1770, one or more banks 1772, one or more judicial institutes 1774, and one or more government agencies 1776 to conveniently and securely access and process contract data. For example, the application layer 1704 can include a data recording function 1706 that enables recording contract data on a blockchain. The application layer 1704 can also include a data verification function 1708 that enables verifying whether certain contract data is recorded on the blockchain. The application layer 1704 can invoke the other layers of the blockchain-based trusted platform 1702.

The trusted service layer 1710 can provide trusted blockchain services to the application layer 1704 to ensure that the data recorded on the blockchain is trustworthy. The trusted service layer 1710 can include a trusted identity module 1712, a trusted timing module 1714, and a trusted computing module 1716.

The blockchain layer 1718 can provide core functionalities for the blockchain-based trusted platform 1702 and can include an API layer 1720, a platform management layer 1734, and a basic service layer 1736. The API layer 1720 can include interfaces that are used to input data to and output data from the blockchain-based trusted platform 1702. The API layer 1720 can include a recording input interface 1722 for receiving data to be recorded on a blockchain, a recording output interface 1724 for outputting a result of recording data on the blockchain, a verification input interface 1726 for receiving data to be verified based on data recorded on the blockchain, a verification output interface 1728 for outputting a result of verifying data based on data recorded on the blockchain, a data history search interface 1730 for querying data recorded on the blockchain, a transaction search interface 1732 for querying a transaction recorded on the blockchain. The platform management layer 1734 can provide management functionalities, such as chain-domain management, node management, and organization management. The chain-domain management can provide network management and configuration management at the blockchain level. The node management can manage the joining or exit of a consensus node. The organization management can specify the access rights of the entities that access the platform. The basic service layer 1736 can include modules that provide essential functionalities for the blockchain-based trusted platform 1702, such as consensus policy module, privacy protection module, networking protocol module, blockchain storage module, ZKP generation module, and ZKP verification module. The consensus policy module can enable the blockchain nodes to reach consensus on data to be recorded on the blockchain. The privacy protection module can protect the privacies of the identities and the transactions of the entities that access the platform. The networking protocol module can enable reliable communications between blockchain nodes. The blockchain storage module can enable to store data on the blockchain reliably. The ZKP generation module can be used to generate one or more ZKPs based on data that is intended to hide. The ZKP verification module can be used to verify one or more ZKPs based on input proofs.

The infrastructure layer 1738 can provide computing and communications functionalities for the blockchain-based trusted platform 1702. The infrastructure layer 1738 can provide cloud services such as public cloud 1740 and private cloud 1742. The infrastructure layer 1738 can ensure secure data storage, analytics, and computing.

The tools platform 1744 can provide tools for the monitoring, management, and operation and maintenance of the blockchain-based trusted platform 1702. The tools platform 1744 can include statistics display tool 1746, status monitoring tool 1748, log collection tool 1750, performance analysis tool 1752, and network topology tool 1754.

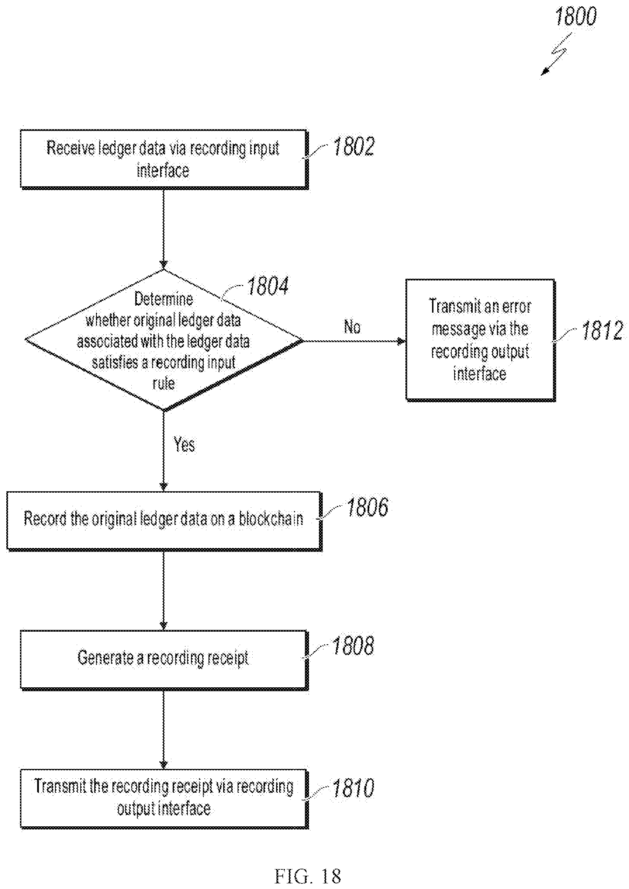

FIG. 18 depicts an example of a process 1800 for recording ledger data in accordance with embodiments of this specification. The process 1800 can be performed by a blockchain-based trusted platform (e.g., the blockchain-based trusted platform 1722) implemented on one or more blockchain nodes or one or more computing devices communicably coupled to the one or more blockchain nodes. For clarity of presentation, the description that follows generally describes process 1800 in the context of the other figures in this description. However, it will be understood that process 1800 can be performed, for example, by any system, environment, software, and hardware, or a combination of systems, environments, software, and hardware, as appropriate. In some embodiments, various steps of process 1800 can be run in parallel, in combination, in loops, or in any order.

At 1802, ledger data to be recorded on the blockchain can be received from a client device and via a recording input interface (e.g., the recording input interface 1722). In some embodiments, the blockchain-based trusted platform includes a data recording function (e.g., the data recording function 1706) for recording ledger data on a blockchain, a data verification function (e.g., the data verification function 1708) for verifying ledger data recorded on the blockchain, a trusted service layer (e.g., the trusted service layer 1710) for providing trusted computations, and a blockchain layer (e.g., the blockchain layer 1718) comprising the recording input interface and a recording output interface (e.g., the recording output interface 1724).

In some embodiments, the client device is associated with a second blockchain that is different from a first blockchain that the data is to be recorded. In some embodiments, the first blockchain can adopt a first standardized format to store blockchain data, while the second blockchain can adopt a second standardized format that is different from the first standardized format to store blockchain data. For example, the first blockchain can be a public blockchain, and a corresponding transaction has a standardized format that includes data fields such as total input, total output, fees, etc, while the second blockchain can be a consortium blockchain, and a corresponding transaction has a standardized format that includes data fields such as value, nonce, gas limit, etc. If the client device encapsulates the data to be recorded in a consortium blockchain transaction and sends the consortium blockchain transaction to the public blockchain node for recording, the public blockchain node may not be able to parse the consortium blockchain transaction because, e.g., the data fields of a consortium blockchain transaction are different from the data fields of a public blockchain transaction. In some embodiments, the client device sends a cross-chain message that includes the ledger data to the first blockchain based on the process discussed in FIG. 15.

In some embodiments, the ledger data includes one or more recording input parameters that are defined in a recording rule and are accepted by the recording input interface. In some embodiments, the ledger data includes one or more recording input parameters that are associated with structured data. The structured data can be, e.g., data that has a standardized format having one or more predetermined data fields. For example, a data record in a key-value table can be structured data. As another example, a blockchain transaction that has predetermined data fields, such as total input, total output, fees, can also be structured data. In some embodiments, at least one of a position of a data field in the structured data or a number of bits associated with a data field are pre-determined in the standardized format.

In some embodiments, the ledger data includes one or more recording input parameters that are associated with unstructured data. The unstructured data can be, e.g., data that cannot be presented in a multi-dimensional table. For example, the unstructured data can be a data file, such as a text file, an image file, a video file, an audio file, etc.

If the ledger data is associated with structured data, the one or more recording input parameters can include one or more of data information of the structured data, service information of the structured data, a timestamp of the structured data, signature data of the structured data, and a blockchain consensus result of the structured data. The data information of the structured data can include one or more of a unique ID of the structured data and/or a hash value of the structured data computed based on a hash function and at least a portion of the structured data. The service information of the structured data can include, e.g., an ID of a contract associated with the structured data, one or more IDs associated with the parties of the contract, a name of the contract, etc. The timestamp of the structured data can indicate a time that the structured data is created or last modified. The signature data of the structured data can be the structured data that is signed by using a private key of a user of the client device. The blockchain consensus result of the structured data can indicate whether a blockchain consensus has been reached on the structured data.

If the ledger data is associated with a data file, the one or more recording input parameters can include one or more of a hash value of the data file, attribute information of the data file, service information of the data file, a timestamp of the data file, and signature data of the data file. The hash value of the data file can be computed based on a hash function and at least a portion of the data file. The attribute information of the data file can include one or more of a type, an origin, a status, a name, a size, a user associated with the client device, and an updated time of the data file. The service information of the data file can include, e.g., an ID of a contract associated with the data file, one or more IDs associated with the parties of the contract, a name of the contract, etc. The timestamp of the data file can indicate a time that the data file was created or last modified. The signature data of the data file can be the data file that is signed by using a private key of a user of the client device.

In some embodiments, a secure communication channel is established between the client device and the blockchain-based trusted platform before the client device sends the ledge data to the blockchain-based trusted platform. The secure communication channel can be established based on at least one of a two-way transport layer security (TLS) protocol, a two-way hypertext transfer protocol secure (HTTPS) protocol, or a one-way HTTPS protocol.

At 1804, it can be determined whether original ledger data associated with the ledger data satisfies a recording rule.

In some embodiments, the original ledger data is the ledger data itself. In some embodiments, the ledger data includes a bit stream and the original ledger data is obtained by converting the bit stream based on a conversion rule. The conversion rule can be included in the recording rule. In some embodiments, before the ledger data is received via the recording input interface, the client device can generate raw data that includes the one or more recording input parameters and converts the raw data to the bit stream based on the conversion rule. The conversion rule can include at least one of a coding schemes corresponding to each recording input parameter of the one or more recording input parameters, or an order to arrange the one or more recording input parameters in the bit stream. For example, the client device can generate raw data that includes the one or more recording input parameters, encode each data value of the respective recording input parameter into a respective small bit stream, determine an order to arrange the one or more recording input parameters in the bit stream, and splice the respective small bit streams to generate the bit stream.

For example, the raw data includes three recording input parameters: recording input parameter 1, recording input parameter 2, and recording input parameter 3. A value of the recording input parameter 1 is x. A value of the recording input parameter 2 is y. A value of the recording input parameter 3 is z. The coding schemes of the conversion rule can provide that x is encoded as 1000, y is encoded as 1001, and z is encoded as 1101. The conversion rule can further specify that an order to arrange the three recording input parameters in the bit stream is {recording input parameter 1, recording input parameter 3, recording input parameter 2}. The bit stream obtained is then 100011011001.

After the ledger data is received, the bit stream included in the ledger data can then be converted to the raw data which includes the one or more recording input parameters based on the conversion rule. For example, assuming that a bit stream of 100011011001 is received, it can then be determined that recording input parameter 1, recording input parameter 2, and recording input parameter 3 are received and that their respective values are x, y, and z.

In some embodiments, the recording rule defines one or more recording input parameters accepted by the recording input interface. In some embodiments, for each recording input parameter of the one or more recording input parameters, the recording rule provides an input format adopted by a corresponding recording input parameter. For example, the recording input parameter can be a variable accepted by the recording input interface, the ledger data can include a value corresponding to the variable, and the input format of the recording input parameter can be a data type of the variable, a size limit of the variable, characters excluded from being used in the variable, etc. In some embodiments, if the original ledger data includes at least one of the one or more recording input parameters and satisfies the input formats of the one or more recording input parameters, it is determined that the original ledger data satisfies the recording rule and the process 1800 proceeds to 1806. Otherwise, it is determined that the original ledger data does not satisfy the recording rule and the process 1800 proceeds to 1812.

At 1806, the original ledger data can be recorded on a blockchain. In some embodiments, the trusted service layer can include a trusted timing module (e.g., the trusted timing module 1712), a trusted identity module (e.g., the trusted identity module 1714), and a trusted computing module (e.g., the trusted computing module 1716). In some embodiments, the data recording function can invoke the trusted timing module to generate a first recording timestamp representing a time that the ledger data is received by the data recording function. In some embodiments, the data recording function can invoke the trusted identity module to verify a user identity associated with the client device, and invoke the trusted timing module to generate a second recording timestamp. The second recording timestamp can represent a time that the original ledger data is recorded on the blockchain. In some embodiments, the data recording function can invoke the trusted computing module to generate a blockchain transaction comprising the original ledger data, the user identity, the first recording timestamp, and the second recording timestamp. The blockchain transaction can then be shared with one or more blockchain nodes to perform a blockchain consensus, and the blockchain transaction can be added to the blockchain upon reaching a blockchain consensus.

At 1808, a recording receipt can be generated. In some embodiments, the recording receipt indicates that the original ledger data has been successfully recorded on the blockchain.

At 1810, the recording receipt can be transmitted via a recording output interface (e.g., the recording output interface 1724).

At 1812, an error message can be transmitted via the recording output interface. In some embodiments, the error message indicates that the original ledger data does not satisfy the recording rule. In some embodiments, the error message can further include one or more reasons that the recording rule is not satisfied by the original ledger data.

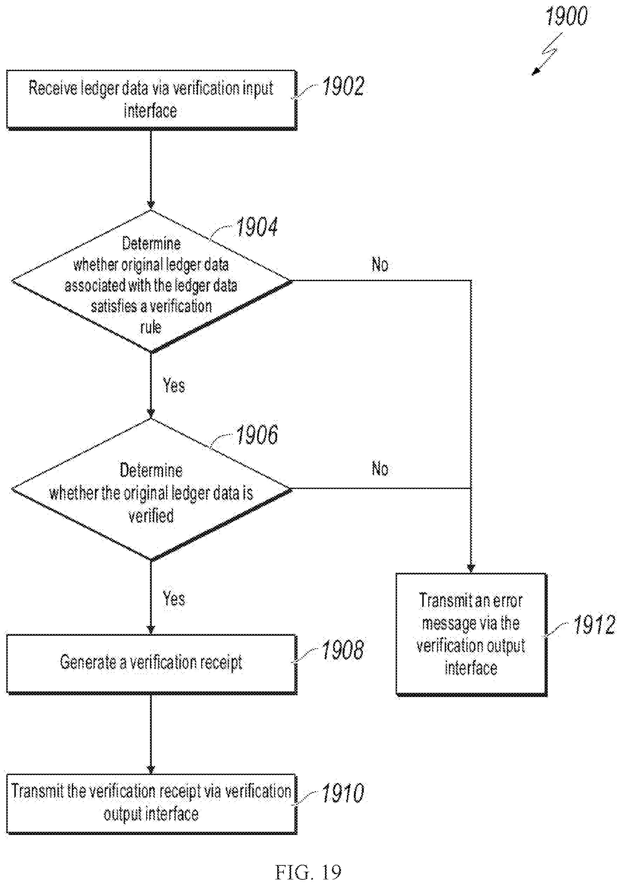

FIG. 19 depicts an example of a process 1900 for verifying ledger data in accordance with embodiments of this specification. The process 1900 can be performed by a blockchain-based trusted platform (e.g., the blockchain-based trusted platform 1722) implemented on one or more blockchain nodes or one or more computing devices communicably coupled to the one or more blockchain nodes. For clarity of presentation, the description that follows generally describes process 1900 in the context of other figures in this description. However, it will be understood that process 1900 can be performed, for example, by any system, environment, software, and hardware, or a combination of systems, environments, software, and hardware, as appropriate. In some embodiments, various steps of process 1900 can be run in parallel, in combination, in loops, or in any order.

At 1902, ledger data can be received from a client device and via a verification input interface (e.g., the verification input interface 1726). In some embodiments, the client device obtains raw data, such as a contract document, and intends to verify whether the raw data is tampered with. The client device can then calculate a hash value of the raw data, generate the ledger data including the hash value, and send the ledger data to the blockchain-based trusted platform for verification. The blockchain-based trusted platform can compare the hash value received from the client device with hash values recorded on the blockchain. If the blockchain-based trusted platform finds a hash value recorded on the blockchain that matches the hash value received from the client device, the blockchain-based trusted platform can verify that the raw data is not tampered with. The blockchain-based trusted platform can then send a verification receipt to the client device indicating that the contract document is not tampered with.

In some embodiments, the client device is associated with a second blockchain that is different from a first blockchain that receives the ledger data. In some embodiments, the first blockchain can adopt a first standardized format to store blockchain data, while the second blockchain can adopt a second standardized format that is different from the first standardized format to store blockchain data. For example, the first blockchain can be a public blockchain, and a corresponding transaction has a standardized format that includes data fields such as total input, total output, fees, etc, while the second blockchain can be a consortium blockchain, and a corresponding transaction has a standardized format that includes data fields such as value, nonce, gas limit, etc. If the client device encapsulates the data to be recorded in a consortium blockchain transaction and sends the consortium blockchain transaction to the public blockchain node for recording, the public blockchain node may not be able to parse the consortium blockchain transaction because, e.g., the data fields of a consortium blockchain transaction are different from the data fields of a public blockchain transaction. In some embodiments, the client device sends a cross-chain message that includes the ledger data to the first blockchain based on the process discussed in FIG. 15.

In some embodiments, the ledger data includes one or more verification input parameters that are defined in a verification rule and are accepted by the verification input interface. The ledger data can include one or more verification input parameters that are associated with the structured data or the unstructured data that are discussed in FIG. 18.

If the ledger data is associated with structured data, the one or more verification input parameters can include one or more of a selection of a verification method for the ledger data, a unique ID of the structured data, service information of the structured data, a timestamp of the structured data, and signature data of the structured data. In some embodiments, the blockchain-based trusted platform provides a plurality of verification methods for the client device to choose from. For example, the plurality of verification methods can include a bit stream verification method and a plaintext verification method. Under the bit stream verification method, the ledger data includes a bit stream and the bit stream needs to be converted to data values of the one or more verification input parameters before the ledger data can be verified. Under the plaintext verification method, the ledger data includes data values of the one or more verification input parameters directly that do not require a conversion. The unique ID of the structured data can be a hash value of the structured data computed based on a hash function and at least a portion of the structured data. The service information of the structured data can include, e.g., an ID of a contract associated with the structured data, one or more IDs associated with the parties of the contract, a name of the contract, etc. The timestamp of the structured data can indicate a time that the structured data is created or last modified. The signature data of the structured data can be the structured data that is signed by using a private key of a user of the client device.

If the ledger data is associated with a data file, the one or more verification input parameters can include one or more of a hash value of the data file, service information of the data file, a timestamp of the data file, and signature data of the data file. The hash value of the data file can be computed based on a hash function and at least a portion of the data file. The service information of the data file can include, e.g., an ID of a contract associated with the data file, one or more IDs associated with the parties of the contract, a name of the contract, etc. The timestamp of the data file can indicate a time that the data file was created or last modified. The signature data of the data file can be the data file that is signed by using a private key of a user of the client device.

At 1904, it can be determined whether original ledger data associated with the ledger data satisfies a verification rule. In some embodiments, the original ledger data is the ledger data itself. In some embodiments, the ledger data includes a bit stream and the original ledger data is obtained by converting the bit stream based on a conversion rule. The conversion rule can be included in the verification rule. In some embodiments, the conversion between the bit stream and the raw data follows similar process as discussed in FIG. 18.

In some embodiments, the verification rule defines one or more verification input parameters accepted by the verification input interface. In some embodiments, for each verification input parameter of the one or more verification input parameters, the verification rule provides an input format adopted by a corresponding verification input parameter. For example, the verification input parameter can be a variable accepted by the verification input interface, the ledger data can include a value corresponding to the variable, and the input format of the verification input parameter can be a data type of the variable, a size limit of the variable, characters excluded from being used in the variable, etc. In some embodiments, if the original ledger data includes at least one of the one or more verification input parameters and satisfies the input formats of the one or more verification input parameters, it is determined that the original ledger data satisfies the verification rule and the process 1900 proceeds to 1906. Otherwise, it is determined that the original ledger data does not satisfy the verification rule and the process 1900 proceeds to 1912.

At 1906, it can be determined whether the original ledger data is verified. In some embodiments, the original ledger data is verified if the original ledger data matches a first ledger data recorded on the blockchain. In some embodiments, both the original ledger data and the first ledger data include a hash value of a data file or a hash value of structured data, the original ledger data is determined to correspond to the first ledger data if the hash value included in the original ledger data matches the hash value included in the first ledger data. If it is determined that the original ledger data is verified, the process 1900 proceeds to 1908. Otherwise, the process 1900 proceeds to 1912.

At 1908, a verification receipt can be generated. In some embodiments, the verification receipt indicates that raw data associated with the ledger data is not tampered with.

At 1910, the verification receipt can be transmitted to the client device and via a verification output interface (e.g., the verification output interface 1726).

At 1912, an error message can be transmitted via the verification output interface. In some embodiments, the error message indicates that the original ledger data does not satisfy the verification rule and one or more reasons why the original ledger data does not satisfy the verification rule. In some embodiments, the error message indicates that raw data associated with the ledger data is tampered with.

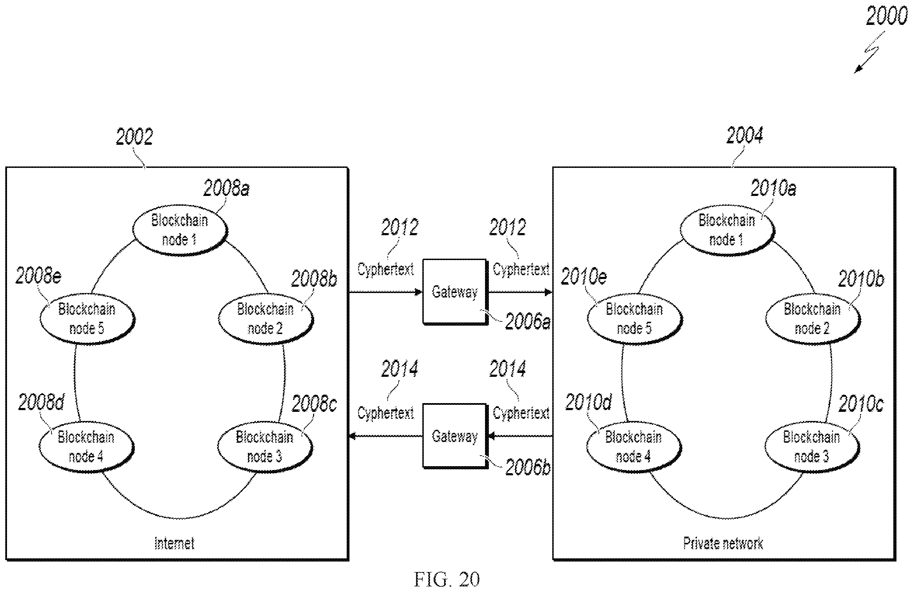

FIG. 20 depicts an example 2000 of cross-chain and cross-network data transmission in accordance with embodiments of this specification. The example 2000 includes the Internet 2002, a private network 2004, and gateways 2006a and 2006b. In some embodiments, the gateways 2006a and 2006b are two different gateways, where the gateway 2006a handles data sent from the Internet 2002 to the private network 2004, while the gateway 2006b handles data sent from the private network 2004 to the Internet 2002. In some embodiments, the gateway 2006a and the gateway 2006b are the same gateway. In some embodiments, the only physical network paths between the Internet 2002 and the private network 2004 are via the gateways 2006a and 2006b.

In some embodiments, a first plurality of blockchain nodes of a first blockchain network, e.g., blockchain node 1 2008a to blockchain node 5 2008e, are connected by the Internet 2002. For example, the first plurality of blockchain nodes can be associated with one or more parties of a contract. In some embodiments, a second plurality of blockchain nodes of a second blockchain network (e.g., blockchain node 1 2010a to blockchain node 5 2010e) are connected by the private network 2004. The second plurality of blockchain nodes can be associated with, e.g., a judicial institution, a financial institution, a government agency, etc. In some embodiments, each blockchain node of the first plurality of blockchain nodes and the second plurality of blockchain nodes can access the blockchain-based trusted platform 1702 via the API layer 1720.

In some embodiments, the gateway 2006a includes at least one network device and at least one server. The at least one network device can interconnect a router of the Internet 2002 and a router of the private network 2004. In some embodiments, the gateway 2006a allows one-way data transfer either from the Internet to the private network or from the private network to the Internet, while disallowing two-way data transfer between the Internet and the private network.

In some embodiments, to perform the one-way data transfer, the gateway 2006a employs a single fiber, rather than a pair of fibers, to connect the at least one network device of the gateway 2006a and the router of the Internet. The gateway 2006a can employ another single fiber to connect the at least one network device of the gateway 2006a and the router of the private network. The at least one network device of the gateway 2006a can be equipped with an optical receiver for the single fiber connecting the Internet 2002 and an optical transmitter for the single fiber connecting the private network 2004, such that the data transfer is allowed on a single direction from the Internet 2002 to the private network 2004. In some embodiments, the at least one network device of the gateway 2006a employs an optical receiver for the single fiber connecting the private network 2004 and an optical transmitter for the single fiber connecting the Internet 2002, such that the data transfer is allowed on a single direction from the private network 2004 to the Internet 2002.

In some embodiments, the at least one server of the gateway 2006a stores cyphertext 2012 sent from a blockchain node of the first blockchain network, such that a second blockchain node of the second blockchain network can obtain the cyphertext 2012 from the at least one server of the gateway 2006a. In some embodiments, the at least one server of the gateway 2006b stores cyphertext 2014 sent from a blockchain node of the second blockchain network, such that a blockchain node of the first blockchain network can obtain the cyphertext 2014 from the at least one server of the gateway 2006b.

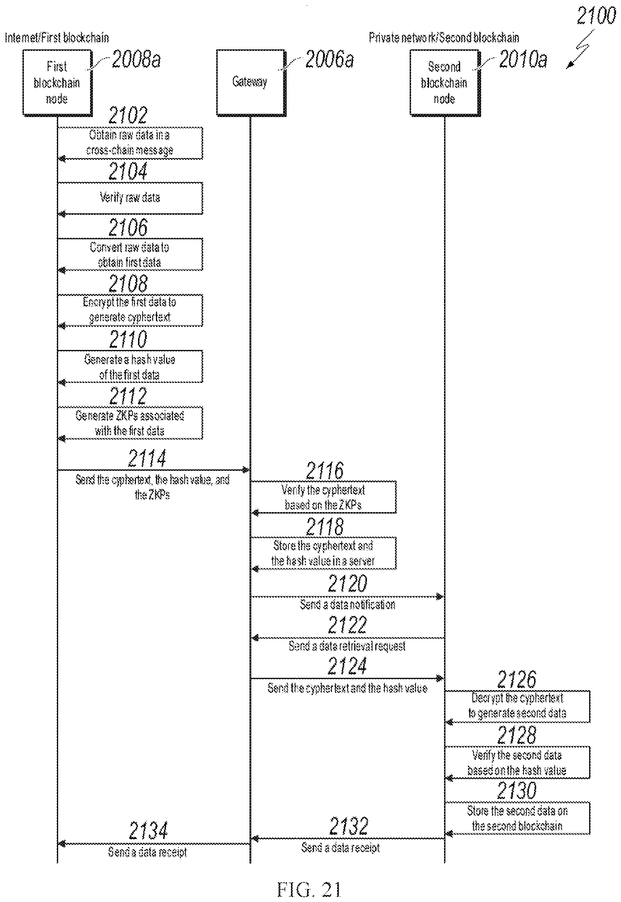

FIG. 21 depicts an example of a process 2100 of cross-chain and cross-network data transmission in accordance with embodiments of this specification. At a high-level, the participants of the process 2100 include a first blockchain node 2008a, a gateway 2006a, and a second blockchain node 2010a. The process 2100 can be performed to send data from the first blockchain node 2008a to the second blockchain node 2010a. As discussed in the description of FIG. 20, the first blockchain node 2008a is associated with the first blockchain network and is connected with other blockchain nodes of the first blockchain network by the Internet 2002, and the second blockchain node 2010a is associated with the second blockchain network and is connected with other blockchain nodes of the second blockchain network by the private network 2004. The blockchain nodes of the first blockchain network can record blockchain data on a first blockchain, and the blockchain nodes of the second blockchain network can record blockchain data on a second blockchain.

At 2102, the first blockchain node 2008a can obtain raw data in a cross-chain message. The raw data can be data recorded on the first blockchain. In some embodiments, before the first blockchain node 2008a obtains the raw data, a third blockchain node of the first blockchain network retrieves the raw data from the first blockchain, generates the cross-chain message, and sends the cross-chain message to the first blockchain node. In some embodiments, before the third blockchain node retrieves the raw data, the third blockchain node can receive a data request from the private network requesting for the raw data. In some embodiments, the raw data is a contract document recorded on the first blockchain, and the third blockchain node can send the contract document to the private network to be recorded on the second blockchain or verified by the second blockchain network.

At 2104, the first blockchain node can verify that the raw data is stored in the first blockchain. The raw data can be verified by using a process as discussed in FIG. 19.

At 2106, the first blockchain node can convert the raw data to obtain first data.

In some embodiments, the raw data includes one or more data values associated with one or more data fields arranged using a first standardized format of the first blockchain network. The first blockchain network may need to convert the raw data into a second standardized format that can be parsed by the second blockchain network. For example, the conversion is performed based on a conversion rule. The conversion rule can provide at least one of an order of data fields to be arranged in the first data or a coding scheme to convert each data value included in each data field. In some embodiments, the conversion rule is predetermined by the first blockchain network and the second blockchain network. In some embodiments, the second blockchain network determines an input rule according to at least one of a recording rule as discussed in FIG. 18 or a verification rule as discussed in FIG. 19, where the input rule provides at least one of a plurality of input parameters of an input to the second blockchain network, a coding scheme corresponding to each input parameter of the plurality of input parameters, or an order to arrange the plurality of input parameters in the input. The first blockchain network can then determine the conversion rule according to the input rule. For example, the first blockchain node does not include a data field in the first data, if the data field is not included in the plurality of input parameters provided by the input rule.

In some embodiments, the first data includes a bit stream obtained by encoding each data value of the respective data field into a respective small bit stream, determine an order to arrange the one or more data values in the bit stream, and splice the respective small bit streams to generate the bit stream.

At 2108, the first blockchain node can encrypt the first data to generate cyphertext. The encryption algorithm can be a symmetric encryption algorithm or an asymmetric encryption algorithm.

At 2110, the first blockchain node can generate a hash value of the first data.

At 2112, the first blockchain node can generate one or more ZKPs associated with the first data. The one or more ZKPs can be generated by using the ZKP generation module as discussed in FIG. 17 and based on a ZKP algorithm such as zero-knowledge succinct non-interactive argument of knowledge (zk-SNARK) algorithm, or zero-knowledge scalable transparent argument of knowledge (zk-STARK) algorithm. The one or more ZKPs can be used by the gateway 2006a to determine whether the cyphertext is secure without decrypting the cyphertext.

ZKP is a cryptography technique. Using this technique, a prover can convince one or more verifiers to believe that a certain assertion is correct without providing any sensitive information to the one or more verifiers.

The ZKP algorithm generally includes a key generation algorithm, a proof generation algorithm, and a proof verification algorithm. The key generation algorithm is responsible for calculating a proving key (which can be used as input data for generating the proof) and a verification key (which can be used as input data for verifying the proof). The proof generation algorithm is responsible for generating the proof. The proof verification algorithm is responsible for verifying the proof and obtaining a binary verification result of either true or false.

Taking the zk-SNARK algorithm for example, the zk-SNARK algorithm comprises three algorithms: G, P, and V. The G algorithm represents a key generator, which is responsible for generating a proving key and a verification key. The P algorithm is responsible for generating the proof. The V algorithm is responsible for verifying the proof generated with the P algorithm, and obtaining a verification result of either true or false.

It should be noted that, when the proof is to be calculated by a blockchain node based on the proof generation algorithm, content of input data to the proof generation algorithm generally depends on the assertion to be verified using the proof.

In some embodiments, the gateway 2006 determines that the cyphertext is secure when at least one of the following assertion is true.

Assertion 1: data to be decrypted from the cyphertext does not include any key word defined in a restricted list maintained by the gateway 2006a. To determine whether this assertion is true, a ZKP can be generated by inputting at least the raw data, the cyphertext, and the restricted list into the proof generation algorithm.

Assertion 2: data to be decrypted from the cyphertext satisfies an input rule of the second blockchain network. To determine whether this assertion is true, a ZKP can be generated by inputting the raw data, the cyphertext, and the input rule of the second blockchain network into the proof generation algorithm.

Assertion 3: a file to be decrypted from the cyphertext has a file type acceptable to the second blockchain network. To determine whether this assertion is true, a ZKP can be generated by inputting the raw data, the cyphertext, and the list of file types acceptable to the second blockchain network into the proof generation algorithm.

Assertion 4: data to be decrypted from the cyphertext does not comprise a malware or virus. To determine whether this assertion is true, a ZKP can be generated by inputting at least the raw data, the cyphertext, and the code of the malware or virus into the proof generation algorithm.

At 2114, the first blockchain node can send the cyphertext, the hash value, and the one or more ZKPs to the gateway 2006a.

At 2116, the gateway 2006a can verify the cyphertext based on the one or more ZKPs.

Specifically, as a verifier of the one or more ZKPs, the gateway 2006a can input at least the one or more ZKPs and the cyphertext as input data into the proof verification algorithm, and then determine whether the cyphertext is secure based on the assertions discussed above.

Taking again the zk-SNARK algorithm for example, when a zero-knowledge verification is to be performed on a ZKP of the one or more ZKPs, the ZKP and the cyphertext can be input as input data into the V algorithm of the zk-SNARK algorithm for calculation. If an output result from the V algorithm is true, the assertion is verified to be true using the ZKP. On the contrary, if the output result from the V algorithm is false, the assertion is verified to be false using the ZKP.

At 2118, when the gateway 2006a determines that the cyphertext is secure based on the one or more ZKPs, the gateway 2006a stores the received cyphertext and the received hash value in the at least one server included in the gateway 2006a.

At 2120, the gateway 2006a can send a data notification to the second blockchain node 2010a. The data notification can notify the second blockchain node that the cyphertext is stored in the at least one server.

At 2122, in response to the data notification, the second blockchain node 2010a can send a data retrieval request to the gateway 2006a. In response to the data retrieval request, a network connection can be established between the gateway 2006a and the second blockchain node 2010a.

At 2124, the gateway 2006a can send the cyphertext and the hash value to the second blockchain node 2010a.

At 2126, the second blockchain node 2010a. can decrypt the cyphertext to generate second data. If the first data or the cyphertext is not tampered with in the data transfer, the second data can be the same as the first data. Otherwise, the second data can be different from the first data.

At 2128, the second blockchain node 2010a can verify the second data based on the hash value. For example, the second blockchain node 2010a can calculate a second hash value of the second data and compare the second hash value with the hash value. If the second hash value and the hash value are the same, the second blockchain node 2010a can determine that the first data or the cyphertext is not tampered with. Otherwise, the second blockchain node 2010a can determine that the first data or the cyphertext is tampered with.

At 2130, the second blockchain node 2010a can store one or more input parameters included in the second data on the second blockchain. In some embodiments, the second data includes one or more input parameters as defined in the input rule of the second blockchain network. In some embodiments, the second data includes a bit stream and the second blockchain node 2010a converts the bit stream to the one or more input parameters based on the conversion rule used by the first blockchain node in converting the raw data to the first data.

At 2132, the second blockchain node 2010a can send a data receipt to the gateway 2006a. In some embodiments, the data receipt indicates that the cyphertext is successfully received and that the second data is stored on the second blockchain. In some embodiments, the data receipt indicates that the second data is not stored on the second blockchain and one or more reasons that the second data is not stored on the second blockchain. The one or more reasons can include, e.g., the cyphertext fails to be received by the second blockchain node 2010a, the hash value of the cyphertext does not match the received hash value, the second data does not satisfy the input rule of the second blockchain network, etc.

At 2134, the gateway 2006a can send the data receipt to the first blockchain node 2008a. In some embodiments, if the data receipt indicates that the second data is not stored on the second blockchain, the first blockchain node 2008a. can restart the process 2100.

In some embodiments, the first blockchain node 2008a can obtain additional cyphertext from the gateway 2006a, where the gateway 2006 receives the additional cyphertext from a blockchain node of the second blockchain network. The first blockchain node can then decrypt the additional cyphertext to generate third data, and then store the third data in the first blockchain.

In some embodiments, process 2100 can be performed to transfer data from the private network to the Internet. That is, the first blockchain node 2008a can be associated with the private network while the second blockchain node 2010a can be associated with the Internet.

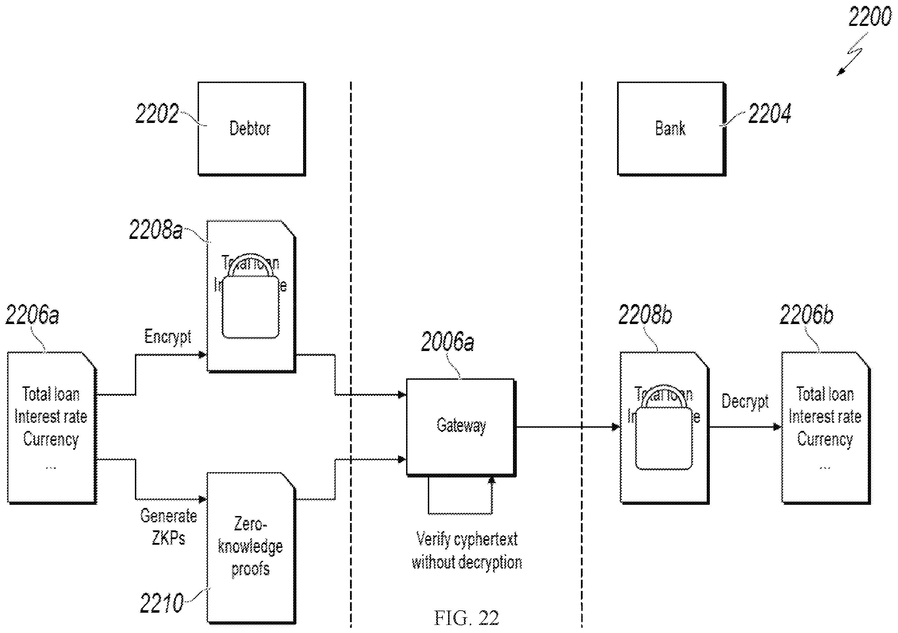

FIG. 22 depicts an example 2200 of cross-network and cross-chain data communications, in accordance with embodiments of this specification. At a high level, the example 2200 shows a process of sending a loan contract 2206a from a debtor 2202, who is associated with a first blockchain node of a first blockchain network, to a bank 2204, who is associated with a second blockchain node of a second blockchain network. The first blockchain network can be connected by the Internet and the second blockchain network can be connected by a private computer network that is air gapped from the Internet.

The first blockchain node associated with the debtor can encrypt the loan contract 2206a to generate cyphertext 2208a, and generate one or more ZKPs 2210 in order to prove that the cyphertext 2208a is secure. The first blockchain node can send the cyphertext 2208a and the one or more ZKPs 2210 to the gateway 2006a. The gateway 2006a can then verify that the cyphertext 2208a is secure based on the one or more ZKPs 2210, while the cyphertext 2208a remains encrypted in the verification process. Upon successful verification, the gateway 2006a can then store the cyphertext 2208a in a server of the gateway 2006a. The second blockchain node associated with the bank 2204 can then obtain cyphertext 2208b from the server of the gateway 2006a. The bank 2204 can then decrypt the cyphertext 2208b to obtain the original loan contract 2206b, and perform subsequent operations on the loan contract 2206b.

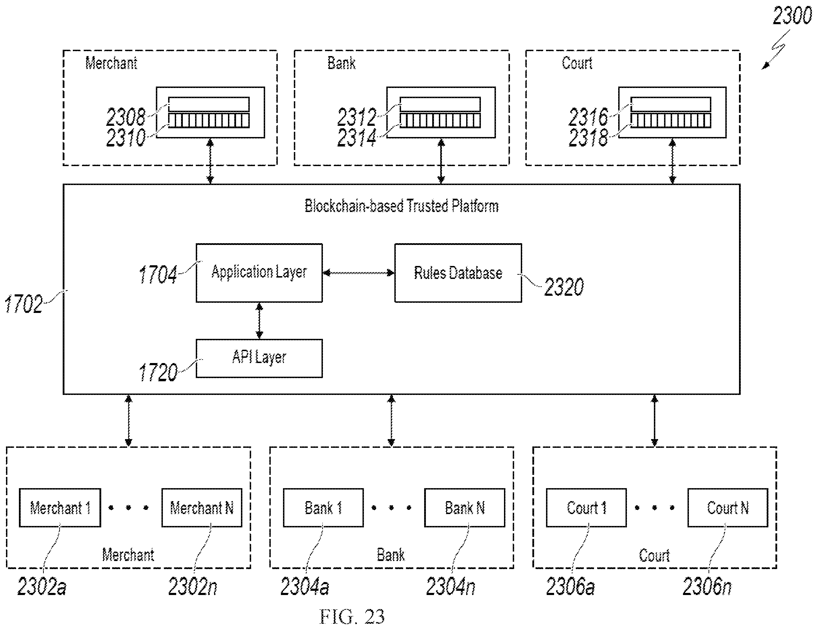

FIG. 23 depicts an example 2300 of a blockchain-based trusted platform, in accordance with embodiments of this specification. In some embodiments, the blockchain-based trusted platform 1702 can provide services to users in multiple computer networks by adopting to the data security rules in respective computer networks. In this example, the merchants, e.g., merchant 1 2302a. to merchant N 2302n, are associated with a merchant blockchain network connected using the Internet. The banks, e.g., bank 1 2304a to merchant N 2304n, are associated with a bank blockchain network connected using a private bank network. The courts, e.g., court 1 2306a to court N 2306n, are associated with a court blockchain network connected using a private court network.

For example, the merchant 1 2302a. wishes to send a contract to the bank 1 2304a to record the contract on a bank blockchain associated the banks. A first blockchain node associated with the merchant 1 2302a obtains the contract from a merchant blockchain database 2310 or a smart contract data cache 2308 and sends a cross-chain and cross-network message that includes the contract to a second blockchain node associated with the bank 1 2304a based on the process 2100 discussed in FIG. 21. The bank 1 2304a invokes the services of the blockchain-based trusted platform 1702 to record the contract in the bank blockchain based on the process discussed in FIG. 18. The data security rules of the private bank network can require that the data of the contract be stored in computer servers located in the private bank network that is air gapped from the Internet. When the blockchain-based trusted platform 1702 detects that the contract is to be recorded in the bank blockchain, the blockchain-based trusted platform 1702 records the contract in a bank blockchain database 2312 managed by the bank blockchain network and a bank smart contract data cache 2312 located in the private bank network.

In a similar manner, the merchant 1 2302a may need to send a court order to the court 1 2306a to execute the court order. The first blockchain node associated with the merchant 1 2302a sends a cross-chain and cross-network message that includes the court order to a third blockchain node associated with the court 1 2306a based on the process 2100 discussed in FIG. 21. The court 1 2306a invokes the services of the blockchain-based trusted platform 1702 to verify the authenticity of the court order based on a process discussed in FIG. 19. The data security rules of the private court network can require that the data of the court be stored in computer servers located in the private court network that is air gapped from the Internet. When the blockchain-based trusted platform 1702 detects that the court order is to be verified based on the data of the court, the blockchain-based trusted platform 1702 accesses the data of the court in a court blockchain database 2316 managed by the court blockchain network and a court smart contract data cache 2318 located in the private court network, so as to verify the court order based on the data of the court.

For another example, the blockchain-based trusted platform 1702 can treat the data of the merchant, data of the bank, and data of the court differently. For example, each of the private bank network and the private court network can have data security rules governing the procedures for handling sensitive data, and the privacy protections applied to the sensitive data. In some embodiments, the blockchain-based trusted platform 1702 provides the same APIs to the merchants, banks, and courts, but the application layer 1704 will process the sensitive data differently depending on the computer network that the sensitive data is associated with.

For example, the blockchain-based trusted platform 1702 includes a rules database 2320 that includes information about the regulations of the various computer networks in which the blockchain-based trusted platform 1702 operates. The application layer 1704 can access the rules database 2320 and operate in compliance with the regulations of each computer network. For example, when the bank 1 2304a invokes the blockchain-based trusted platform 1702 to send a bank statement of merchant 1 2302a to court 1 2306a, the application layer 1704 can access the rules database 2320 to determine a data security rule of the private bank network specifying that the social security number of the bank statement be redacted when the bank statement is to be sent outside the private bank network, the blockchain-based trusted platform 1702 can then redact the social security number of the bank statement and send the redacted bank statement to court 1 2306a.

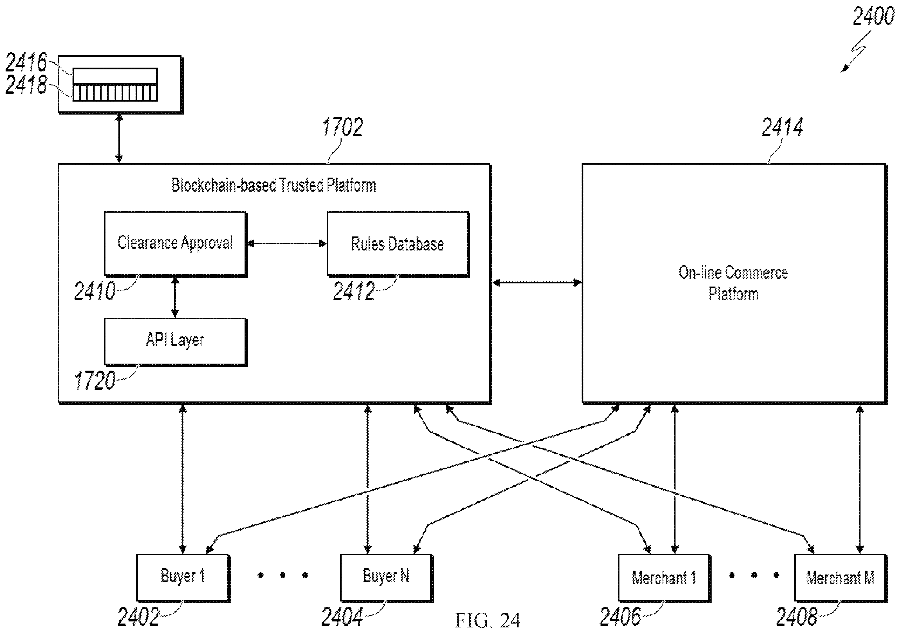

FIG. 24 depicts another example 2400 of a blockchain-based trusted platform, in accordance with embodiments of this specification. A blockchain-based trusted platform 1702 can be used to process customized clearance data based on a set of customized rules agreed upon by a group of people. For example, when a first group of people of a country agree to follow a set of rules regarding taxation on importation of goods, the blockchain-based trusted platform 1702 can be used to process import custom clearance data.

For example, a second group of environmentally conscious members can decide to buy products mostly from sustainable sources and to donate a certain percentage of the purchase price of merchandise purchased from non-sustainable sources to environmental causes. It can be difficult for individuals to keep track of what products are from sustainable sources or non-sustainable sources. The blockchain-based trusted platform 1702 allows the second group of members to easily set up rules to help achieve their goals. For example, the blockchain-based trusted platform 1702 can include a rules database 2412 specifying which consumer products are from sustainable sources, which farm products are produced using environmentally friendly methods, and which seafood products are produced by harvesting marine wildlife in a sustainable manner. An administrator can update the rules database 2412 from time to time. Members of the second group (e.g., first buyer 2402, ..., N-th buyer 2404) can purchase products from merchants (e.g., first merchant 2406, ..., M-th merchant 2408) through an on-line commerce system 2414.

When a buyer purchases a product through the on-line commerce system 2414 and indicates that the buyer belongs to the second group of members, the on-line commerce system 2414 sends purchase data to the blockchain-based trusted platform 1702, and indicates, e.g., with an ID associated with the second group, that the purchase data are associated with the second group. The blockchain-based trusted platform 1702 records the purchase data on a blockchain database 2418 and/or a smart contract data cache 2416. The blockchain-based trusted platform 1702 includes a clearance approval module 2410 that analyzes the purchase data to determine, based on the rules database 2412, whether the product being purchased is from a sustainable source. If the product is not from a sustainable source, the clearance approval module 2410 determines the amount of donation that the buyer should contribute (this is similar to the customs authority determining the amount of import tax to be applied to import goods).

For example, the clearance approval module 2410 can send a message to the buyer indicating that the product is not from a sustainable source, and that the buyer should give a donation of a certain amount based on the agreement among the second group of members. The blockchain-based trusted platform 1702 can communicate with a bank of the buyer, request payment from the bank, and send the payment to, e.g., an environmental non-profit organization as donation. The transactions performed by the blockchain-based trusted platform 1702 can be recorded in the blockchain database 2418 that can be verified by the relevant parties. The services provided by the blockchain-based trusted platform 1702 can be automated through the use of smart contracts.

In some embodiments, the blockchain-based trusted platform 1702 can be used to process clearance data (e.g., import custom clearance data) in a virtual world, e.g., in a gaming platform. For example, a gaming platform can allow players to establish virtual nations or kingdoms, recruit other players to be citizens or subjects of the virtual nations or kingdoms, and establish their own rules or laws for the virtual nations or kingdoms. The citizens or subjects of a nation or kingdom can trade goods with others. The nation or kingdom can raise funds (in virtual currency) by imposing a tax on trade. The operations of the blockchain-based trusted platform 1702 can be automated by using smart contracts so as to implement virtual customs clearance and taxation in the virtual world. This allows the players of the online gaming platform to establish their own rules for taxation on trade, making the online gaming platform more realistic and interesting.

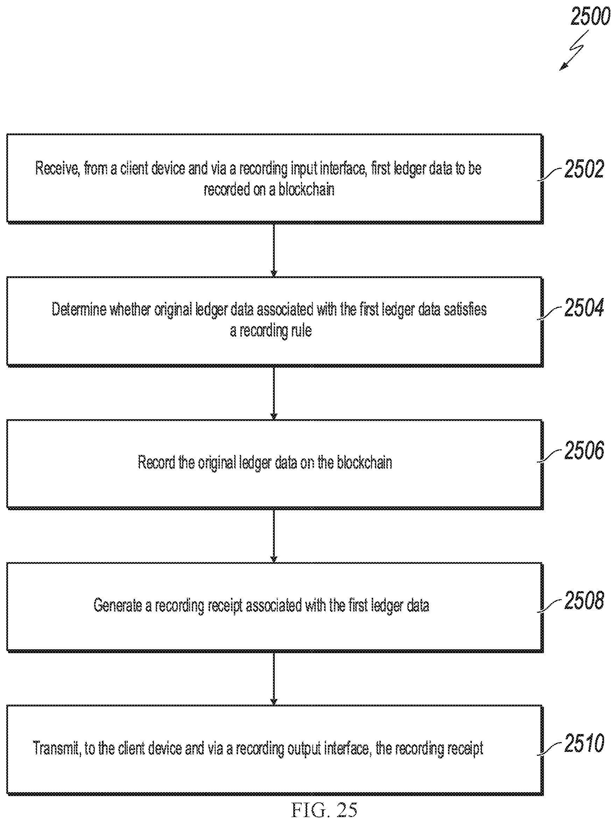

FIG. 25 is a flowchart of an example of a process 2500 for recording and verifying ledger data. For convenience, the process 2500 will be described as being performed by a system of one or more computers, located in one or more locations, and programmed appropriately in accordance with this specification. For example, a blockchain-based system, e.g., the blockchain-based trusted system 1702 of FIG. 17, appropriately programmed, can perform the process 2500.

At 2502, the blockchain-based trusted system receives first ledger data to be recorded on a blockchain from a client device and via a recording input interface. In some embodiments, the first ledger data includes a bit stream. In some embodiments, before receiving the first ledger data, the client device converts the original ledger data to the bit stream based on a conversion rule. In some embodiments, the blockchain-based trusted system converts, based on the conversion rule, the bit stream to obtain the original ledger data. In some embodiments, the conversion rule includes at least one of: a coding scheme corresponding to each recording input parameter of the one or more recording input parameters; or an order to arrange the one or more recording input parameters in the bit stream. In some embodiments, before receiving the first ledger data, the blockchain-based trusted system establishes a secure communication channel with the client device based on at least one of a two-way transport layer security (TLS) protocol, a two-way hypertext transfer protocol secure (HTTPS) protocol, or a one-way HTTPS protocol. In some embodiments, the first ledger data is associated with a first data file, where the one or more recording input parameters include one or more of a hash value of the first data file, attribute information of the first data file, service information of the first data file, a timestamp of the first data file, and signature data of the first data file. In some embodiments, the client device is associated with an additional blockchain that is different from the blockchain.

At 2504, the blockchain-based trusted system determines whether original ledger data associated with the first ledger data satisfies a recording rule, where the recording rule includes one or more recording input parameters associated with the recording input interface. In some embodiments, determining whether the second ledger data corresponds to the original ledger data includes determining whether a first hash value included in the original ledger data matches a second hash value included in the second ledger data.

At 2506, in response to determining that the original ledger data associated with the first ledger data satisfies the recording rule, the blockchain-based trusted system records the original ledger data on the blockchain.

At 2508, the blockchain-based trusted system generates a recording receipt associated with the first ledger data.

At 2510, the blockchain-based trusted system transmits, to the client device and via a recording output interface, the recording receipt.

In some embodiments, the blockchain-based trusted system receives, from the client device and via a verification input interface, second ledger data. The blockchain-based trusted system can then determine whether the second ledger data satisfies a verification rule, where the verification rule includes one or more verification input parameters associated with the verification input interface. In response to determining that the second ledger data satisfies the verification rule, the blockchain-based trusted system can then determine whether the second ledger data corresponds to the original ledger data recorded on the blockchain. In response to determining that the second ledger data corresponds to the original ledger data recorded on the blockchain, the blockchain-based trusted system can then generate a verification receipt associated with the second ledger data, where the verification receipt indicates that raw data associated with the second ledger data is not tampered with. The blockchain-based trusted system can then transmit, to the client device and via a verification output interface, the verification receipt. In some embodiments, the second ledger data is associated with a second data file, and the one or more verification input parameters include one or more of a hash value of the second data file, service information of the second data file, a timestamp of the second data file, and signature data of the second data file.

In some embodiments, the blockchain-based trusted system invokes a trusted timing module to generate a first recording timestamp representing a time that the first ledger data is received. The blockchain-based trusted system can then invoke a trusted identity module to verify a user identity associated with the client device. The blockchain-based trusted system can then invoke the trusted timing module to generate a second recording timestamp representing a time that the original ledger data is recorded on the blockchain. The blockchain-based trusted system can then invoke a trusted computing module to generate a blockchain transaction comprising the original ledger data, the user identity, the first recording timestamp, and the second recording timestamp.

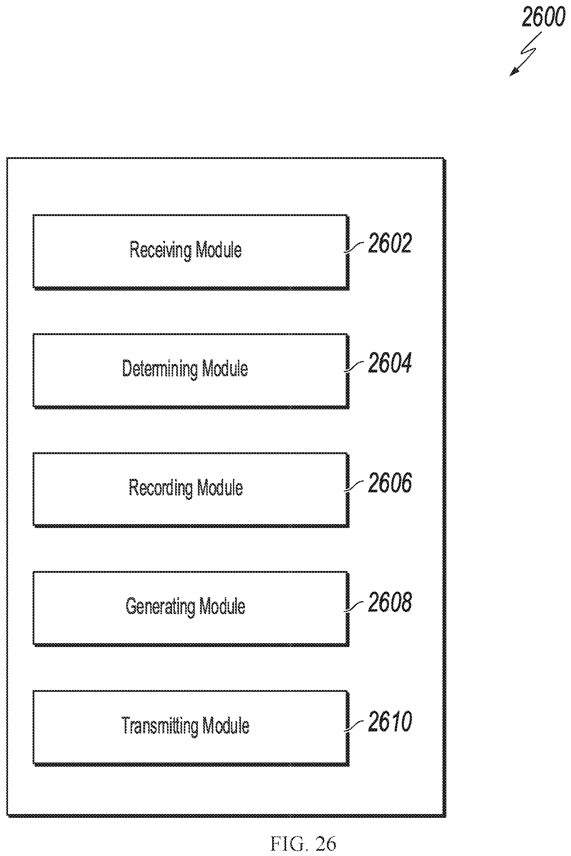

FIG. 26 is a diagram of on example of modules of an apparatus 2600 in accordance with embodiments of this specification.

The apparatus 2600 can be an example of an embodiment of a computer system configured for recording and verifying ledger data in a blockchain-based trusted system. The apparatus 2600 can correspond to the embodiments described above, and the apparatus 2600 includes the following: a receiving module 2602 for receiving, from a client device and via a recording input interface, first ledger data to be recorded on a blockchain; a determining module 2604 for determining whether original ledger data associated with the first ledger data satisfies a recording rule, where the recording rule includes one or more recording input parameters associated with the recording input interface; a recording module 2606 for recording the original ledger data on the blockchain, in response to determining that the original ledger data associated with the first ledger data satisfies the recording rule; a generating module 2608 for generating a recording receipt associated with the first ledger data; and a transmitting module 2610 for transmitting, to the client device and via a recording output interface, the recording receipt.

In an optional embodiment, the apparatus 2600 further includes the following: a second receiving module for receiving, from the client device and via a verification input interface, second ledger data; a second determining module for determining whether the second ledger data satisfies a verification rule, where the verification rule includes one or more verification input parameters associated with the verification input interface; a third determining module for determining whether the second ledger data corresponds to the original ledger data recorded on the blockchain, in response to determining that the second ledger data satisfies the verification rule; a second generating module for generating a verification receipt associated with the second ledger data in response to determining that the second ledger data corresponds to the original ledger data recorded on the blockchain, where the verification receipt indicates that raw data associated with the second ledger data is not tampered with; and a second transmitting module for transmitting, to the client device and via a verification output interface, the verification receipt.

In an optional embodiment, determining whether the second ledger data corresponds to the original ledger data includes determining whether a first hash value included in the original ledger data matches a second hash value included in the second ledger data.

In an optional embodiment, the first ledger data includes a bit stream, where before receiving the first ledger data, the client device converts the original ledger data to the bit stream based on a conversion rule, and the apparatus 2600 further includes the following: a converting module for converting, based on the conversion rule, the bit stream to obtain the original ledger data.

In an optional embodiment, the conversion rule includes at least one of: a coding scheme corresponding to each recording input parameter of the one or more recording input parameters; or an order to arrange the one or more recording input parameters in the bit stream.

In an optional embodiment, the apparatus 2600 further includes the following: a first invoking module for invoking a trusted timing module to generate a first recording timestamp representing a time that the first ledger data is received; a second invoking module for invoking a trusted identity module to verify a user identity associated with the client device; a third invoking module for invoking the trusted timing module to generate a second recording timestamp representing a time that the original ledger data is recorded on the blockchain; and a fourth invoking module for invoking a trusted computing module to generate a blockchain transaction comprising the original ledger data, the user identity, the first recording timestamp, and the second recording timestamp.

In an optional embodiment, the apparatus 2600 further includes the following: an establishing module for, before receiving the first ledger data, establishing a secure communication channel with the client device based on at least one of a two-way transport layer security (TLS) protocol, a two-way hypertext transfer protocol secure (HTTPS) protocol, or a one-way HTTPS protocol.

In an optional embodiment, the first ledger data is associated with a first data file, where the one or more recording input parameters include one or more of a hash value of the first data file, attribute information of the first data file, service information of the first data file, a timestamp of the first data file, and signature data of the first data file.

In an optional embodiment, the second ledger data is associated with a second data file, and the one or more verification input parameters include one or more of a hash value of the second data file, service information of the second data file, a timestamp of the second data file, and signature data of the second data file.

In an optional embodiment, the client device is associated with an additional blockchain that is different from the blockchain.

The system, apparatus, module, or unit illustrated in the previous embodiments can be implemented by using a computer chip or an entity, or can be implemented by using a product having a certain function. A typical embodiment device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

For an embodiment process of functions and roles of each module in the apparatus, references can be made to an embodiment process of corresponding steps in the previous method. Details are omitted here for simplicity.

Because an apparatus embodiment basically corresponds to a method embodiment, for related parts, references can be made to related descriptions in the method embodiment. The previously described apparatus embodiment is merely an example. The modules described as separate parts may or may not be physically separate, and parts displayed as modules may or may not be physical modules, may be located in one position, or may be distributed on a number of network modules. Some or all of the modules can be selected based on actual demands to achieve the objectives of the solutions of the specification. A person of ordinary skill in the art can understand and implement the embodiments of the present application without creative efforts.

Referring again to FIG. 26, it can be interpreted as illustrating an internal functional module and a structure of a blockchain data recordation and verification apparatus. The blockchain data recordation and verification apparatus can be an example of a computer system configured to record and verify ledger data in a blockchain-based trusted system. An execution body in essence can be an electronic device, and the electronic device includes the following: one or more processors; and one or more computer-readable memories configured to store an executable instruction of the one or more processors. In some embodiments, the one or more computer-readable memories are coupled to the one or more processors and have programming instructions stored thereon that are executable by the one or more processors to perform algorithms, methods, functions, processes, flows, and procedures, as described in this specification. This specification also provides one or more non-transitory computer-readable storage media coupled to one or more processors and having instructions stored thereon which, when executed by the one or more processors, cause the one or more processors to perform operations in accordance with embodiments of the methods provided herein.

This specification further provides a system for implementing the methods provided herein. The system includes one or more processors, and a computer-readable storage medium coupled to the one or more processors having instructions stored thereon which, when executed by the one or more processors, cause the one or more processors to perform operations in accordance with embodiments of the methods provided herein.

Embodiments of the subject matter and the actions and operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions, encoded on a computer program carrier, for execution by, or to control the operation of, data processing apparatus. For example, a computer program carrier can include one or more computer-readable storage media that have instructions encoded or stored thereon. The carrier may be a tangible non-transitory computer-readable medium, such as a magnetic, magneto optical, or optical disk, a solid state drive, a random access memory (RAM), a read-only memory (ROM), or other types of media. Alternatively, or in addition, the carrier may be an artificially generated propagated signal, e.g., a machine-generated electrical, optical, or electromagnetic signal that is generated to encode information for transmission to suitable receiver apparatus for execution by a data processing apparatus. The computer storage medium can be or be part of a machine-readable storage device, a machine-readable storage substrate, a random or serial access memory device, or a combination of one or more of them. A computer storage medium is not a propagated signal.

A computer program, which may also be referred to or described as a program, software, a software application, an app, a module, a software module, an engine, a script, or code, can be written in any form of programming language, including compiled or interpreted languages, or declarative or procedural languages; and it can be deployed in any form, including as a stand-alone program or as a module, component, engine, subroutine, or other unit suitable for executing in a computing environment, which environment may include one or more computers interconnected by a data communication network in one or more locations.

A computer program may, but need not, correspond to a file in a file system. A computer program can be stored in a portion of a file that holds other programs or data, e.g., one or more scripts stored in a markup language document, in a single file dedicated to the program in question, or in multiple coordinated files, e.g., files that store one or more modules, sub programs, or portions of code.

Processors for execution of a computer program include, by way of example, both general- and special-purpose microprocessors, and any one or more processors of any kind of digital computer. Generally, a processor will receive the instructions of the computer program for execution as well as data from a non-transitory computer-readable medium coupled to the processor.

The term "data processing apparatus" encompasses all kinds of apparatuses, devices, and machines for processing data, including by way of example a programmable processor, a computer, or multiple processors or computers. Data processing apparatus can include special-purpose logic circuitry, e.g., an FPGA (field programmable gate array), an ASIC (application specific integrated circuit), or a GPU (graphics processing unit). The apparatus can also include, in addition to hardware, code that creates an execution environment for computer programs, e.g., code that constitutes processor firmware, a protocol stack, a database management system, an operating system, or a combination of one or more of them.

The processes and logic flows described in this specification can be performed by one or more computers or processors executing one or more computer programs to perform operations by operating on input data and generating output. The processes and logic flows can also be performed by special-purpose logic circuitry, e.g., an FPGA, an ASIC, or a GPU, or by a combination of special-purpose logic circuitry and one or more programmed computers.

Computers suitable for the execution of a computer program can be based on general or special-purpose microprocessors or both, or any other kind of central processing unit. Generally, a central processing unit will receive instructions and data from a read only memory or a random access memory or both. Elements of a computer can include a central processing unit for executing instructions and one or more memory devices for storing instructions and data. The central processing unit and the memory can be supplemented by, or incorporated in, special-purpose logic circuitry.

Generally, a computer will also include, or be operatively coupled to receive data from or transfer data to one or more storage devices. The storage devices can be, for example, magnetic, magneto optical, or optical disks, solid state drives, or any other type of non-transitory, computer-readable media. However, a computer need not have such devices. Thus, a computer may be coupled to one or more storage devices, such as, one or more memories, that are local and/or remote. For example, a computer can include one or more local memories that are integral components of the computer, or the computer can be coupled to one or more remote memories that are in a cloud network. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Components can be "coupled to" each other by being commutatively such as electrically or optically connected to one another, either directly or via one or more intermediate components. Components can also be "coupled to" each other if one of the components is integrated into the other. For example, a storage component that is integrated into a processor (e.g., an L2 cache component) is "coupled to" the processor.

To provide for interaction with a user, embodiments of the subject matter described in this specification can be implemented on, or configured to communicate with, a computer having a display device, e.g., a LCD (liquid crystal display) monitor, for displaying information to the user, and an input device by which the user can provide input to the computer, e.g., a keyboard and a pointing device, e.g., a mouse, a trackball or touchpad. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser, or by interacting with an app running on a user device, e.g., a smartphone or electronic tablet. Also, a computer can interact with a user by sending text messages or other forms of message to a personal device, e.g., a smartphone that is running a messaging application, and receiving responsive messages from the user in return.

This specification uses the term "configured to" in connection with systems, apparatus, and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. For special-purpose logic circuitry to be configured to perform particular operations or actions means that the circuitry has electronic logic that performs the operations or actions.

While this specification contains many specific embodiment details, these should not be construed as limitations on the scope of what is being claimed, which is defined by the claims themselves, but rather as descriptions of features that may be specific to particular embodiments. Certain features that are described in this specification in the context of separate embodiments can also be realized in combination in a single embodiment. Conversely, various features that are described in the context of a single embodiments can also be realized in multiple embodiments separately or in any suitable subcombination. Moreover, although features may be described above as acting in certain combinations and even initially be claimed as such, one or more features from a claimed combination can in some cases be excised from the combination, and the claim may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A computer-implemented method performed by a blockchain node of a blockchain-based trusted platform, the computer-implemented method comprising:
receiving (1802), from a client device and via a recording input interface of the blockchain node, a bit stream generated by the client device by converting original ledger data based on a conversion rule, wherein the original ledger data is to be recorded on a blockchain;
converting, by the blockchain node and based on the conversion rule, the bit stream to obtain the original ledger data;
determining (1804) whether the original ledger data associated with the bit stream satisfies a recording rule, wherein the recording rule comprises one or more recording input parameters associated with the recording input interface;
in response to determining that the original ledger data satisfies the recording rule, recording (1806) the original ledger data on the blockchain;
generating (1808) a recording receipt associated with the bit stream; and
transmitting (1810), to the client device and via a recording output interface, the recording receipt.

2. The computer-implemented method of claim 1, further comprising:
receiving, from the client device and via a verification input interface, second ledger data;
determining whether the second ledger data satisfies a verification rule, wherein the verification rule comprises one or more verification input parameters associated with the verification input interface;
in response to determining that the second ledger data satisfies the verification rule, determining whether the second ledger data corresponds to the original ledger data recorded on the blockchain;
in response to determining that the second ledger data corresponds to the original ledger data recorded on the blockchain, generating a verification receipt associated with the second ledger data, wherein the verification receipt indicates that raw data associated with the second ledger data is not tampered with; and
transmitting, to the client device and via a verification output interface, the verification receipt.

3. The computer-implemented method of claim 2, wherein determining whether the second ledger data corresponds to the original ledger data comprises determining whether a first hash value comprised in the original ledger data matches a second hash value comprised in the second ledger data.

4. The computer-implemented method of any preceding claim, wherein the conversion rule comprises at least one of:
a coding scheme corresponding to each recording input parameter of the one or more recording input parameters; or
an order to arrange the one or more recording input parameters in the bit stream.

5. The computer-implemented method of any preceding claim, further comprising:
invoking a trusted timing module to generate a first recording timestamp representing a time that the bit stream is received;
invoking a trusted identity module to verify a user identity associated with the client device;
invoking the trusted timing module to generate a second recording timestamp representing a time that the original ledger data is recorded on the blockchain; and
invoking a trusted computing module to generate a blockchain transaction comprising the original ledger data, the user identity, the first recording timestamp, and the second recording timestamp.

6. The computer-implemented method of any preceding claim, further comprising:
before receiving the bit stream, establishing a secure communication channel with the client device based on at least one of a two-way transport layer security protocol, a two-way hypertext transfer protocol secure, HTTPS, protocol, or a one-way HTTPS protocol.

7. The computer-implemented method of any preceding claim, wherein the bit stream is associated with a first data file, and wherein the one or more recording input parameters comprise one or more of a hash value of the first data file, attribute information of the first data file, service information of the first data file, a timestamp of the first data file, and signature data of the first data file.

8. The computer-implemented method of claim 2, wherein the second ledger data is associated with a second data file, and wherein the one or more verification input parameters comprise one or more of a hash value of the second data file, service information of the second data file, a timestamp of the second data file, and signature data of the second data file.

9. A computer-implemented system, comprising:
at least one processor; and
a non-transitory computer-readable storage medium coupled to the at least one processor and storing programming instructions for execution by the at least one processor, the programming instructions instruct the at least one processor to perform operations according to the method of any one of claims 1 to 8.

10. An apparatus, the apparatus comprising a plurality of modules for performing the method of any of claims 1 to 8.

## Patentansprüche

1. Computerimplementiertes Verfahren, das durch einen Blockchain-Knoten einer Blockchain-basierten vertrauenswürdigen Plattform durchgeführt wird, wobei das computerimplementierte Verfahren Folgendes umfasst:
Empfangen (1802) von einer Client-Einrichtung und mittels einer Aufzeichnungseingabeschnittstelle des Blockchain-Knotens eines Bitstroms, der durch die Client-Einrichtung durch Umwandeln von ursprünglichen Kassenbuchdaten auf der Grundlage einer Umwandlungsregel erzeugt wird, wobei die ursprünglichen Kassenbuchdaten in einer Blockchain aufgezeichnet werden sollen;
Umwandeln durch den Blockchain-Knoten und auf der Grundlage der Umwandlungsregel des Bitstroms, um die ursprünglichen Kassenbuchdaten zu erhalten;
Bestimmen (1804), ob die ursprünglichen Kassenbuchdaten, die dem Bitstrom zugeordnet sind, eine Aufzeichnungsregel erfüllen, wobei die Aufzeichnungsregel einen oder mehrere Aufzeichnungseingabeparameter umfasst, die der Aufzeichnungseingabeschnittstelle zugeordnet sind;
in Reaktion auf ein Bestimmen, dass die ursprünglichen Kassenbuchdaten die Aufzeichnungsregel erfüllen, Aufzeichnen (1806) der ursprünglichen Kassenbuchdaten in der Blockchain;
Erzeugen (1808) eines Aufzeichnungsbelegs, der dem Bitstrom zugeordnet ist; und
Senden (1810) zur Client-Einrichtung und mittels einer Aufzeichnungsausgabeschnittstelle des Aufzeichnungsbelegs.

2. Computerimplementiertes Verfahren nach Anspruch 1, das ferner Folgendes umfasst:
Empfangen von der Client-Einrichtung und mittels einer Überprüfungseingabeschnittstelle zweiter Kassenbuchdaten;
Bestimmen, ob die zweiten Kassenbuchdaten eine Überprüfungsregel erfüllen, wobei die Überprüfungsregel einen oder mehrere Überprüfungseingabeparameter umfasst, die der Überprüfungseingabeschnittstelle zugeordnet sind;
in Reaktion auf ein Bestimmen, dass die zweiten Kassenbuchdaten die Überprüfungsregel erfüllen, Bestimmen, ob die zweiten Kassenbuchdaten den ursprünglichen Kassenbuchdaten, die in der Blockchain aufgezeichnet sind, entsprechen;
in Reaktion auf ein Bestimmen, dass die zweiten Kassenbuchdaten den ursprünglichen Kassenbuchdaten, die in der Blockchain aufgezeichnet sind, entsprechen, Erzeugen eines Überprüfungsbelegs, der den zweiten Kassenbuchdaten zugeordnet ist, wobei der Überprüfungsbeleg angibt, dass Rohdaten, die den zweiten Kassenbuchdaten zugeordnet sind, nicht manipuliert wurden; und
Senden zur Client-Einrichtung und mittels einer Überprüfungsausgabeschnittstelle des Überprüfungsbelegs.

3. Computerimplementiertes Verfahren nach Anspruch 2, wobei das Bestimmen, ob die zweiten Kassenbuchdaten den ursprünglichen Kassenbuchdaten entsprechen, ein Bestimmen umfasst, ob ein erster Hash-Wert, der in den ursprünglichen Kassenbuchdaten enthalten ist, mit einem zweiten Hash-Wert, der in den zweiten Kassenbuchdaten enthalten ist, übereinstimmt.

4. Computerimplementiertes Verfahren nach einem vorhergehenden Anspruch, wobei die Umwandlungsregel mindestens eines der Folgenden umfasst:
ein Codierungsschema, das jedem Aufzeichnungseingabeparameter des einen oder der mehreren Aufzeichnungseingabeparameter entspricht; oder
eine Reihenfolge, um den einen oder die mehreren Aufzeichnungseingabeparameter im Bitstrom anzuordnen.

5. Computerimplementiertes Verfahren nach einem vorhergehenden Anspruch, das ferner Folgendes umfasst:
Aufrufen eines vertrauenswürdigen Zeitablaufmoduls, um einen ersten Aufzeichnungszeitstempel zu erzeugen, der eine Zeit repräsentiert, zu der der Bitstrom empfangen wurde;
Aufrufen eines vertrauenswürdigen Identitätsmoduls, um eine Anwenderidentität zu überprüfen, die der Client-Einrichtung zugeordnet ist;
Aufrufen des vertrauenswürdigen Zeitablaufmoduls, um einen zweiten Aufzeichnungszeitstempel zu erzeugen, der eine Zeit repräsentiert, zu der die ursprünglichen Kassenbuchdaten in der Blockchain aufgezeichnet wurden; und
Aufrufen eines vertrauenswürdigen Rechenmoduls, um eine Blockchain-Transaktion zu erzeugen, die die ursprünglichen Kassenbuchdaten, die Anwenderidentität, den ersten Aufzeichnungszeitstempel und den zweiten Aufzeichnungszeitstempel umfasst.

6. Computerimplementiertes Verfahren nach einem vorhergehenden Anspruch, das ferner Folgendes umfasst:
vor dem Empfangen des Bitstroms Aufbauen eines sicheren Kommunikationskanals mit der Client-Einrichtung auf der Grundlage mindestens eines eines bidirektionalen Transportschichtsicherheitsprotokolls, eines bidirektionalen Hypertext-Übertragungsprotokollsicherheitsprotokolls, HTTPS-Protokoll, oder eines unidirektionalen HTTPS-Protokolls.

7. Computerimplementiertes Verfahren nach einem vorhergehenden Anspruch, wobei der Bitstrom einer ersten Datendatei zugeordnet ist und der eine oder die mehreren Aufzeichnungseingabeparameter eines oder mehrere von einem Hash-Wert der ersten Datendatei, Merkmalsinformationen der ersten Datendatei, Dienstinformationen der ersten Datendatei, einem Zeitstempel der ersten Datendatei und Signaturdaten der ersten Datendatei umfassen.

8. Computerimplementiertes Verfahren nach Anspruch 2, wobei die zweiten Kassenbuchdaten einer zweiten Datendatei zugeordnet sind und der eine oder die mehreren Überprüfungseingabeparameter eines oder mehrere von einem Hash-Wert der zweiten Datendatei, Dienstinformationen der zweiten Datendatei, einem Zeitstempel der zweiten Datendatei und Signaturdaten der zweiten Datendatei umfassen.

9. Computerimplementiertes System, das Folgendes umfasst:
mindestens einen Prozessor; und
ein nicht transitorisches computerlesbares Speichermedium, das an den mindestens einen Prozessor gekoppelt ist und Programmierbefehle zur Ausführung durch den mindestens einen Prozessor speichert, wobei die Programmierbefehle den mindestens einen Prozessor anweisen, Operationen gemäß dem Verfahren nach einem der Ansprüche 1 bis 8 durchzuführen.

10. Vorrichtung, wobei die Vorrichtung mehrere Module zum Durchführen des Verfahrens nach einem der Ansprüche 1 bis 8 umfasst.

## Revendications

1. Procédé mis en œuvre par ordinateur réalisé par un nœud de chaîne de blocs d'une plate-forme de confiance basée sur une chaîne de blocs, le procédé mis en œuvre par ordinateur comprenant :
la réception (1802), en provenance d'un dispositif client et par l'intermédiaire d'une interface d'entrée d'enregistrement du nœud de chaîne de blocs, d'un flux binaire généré par le dispositif client en convertissant des données de registre d'origine sur la base d'une règle de conversion, les données de registre d'origine devant être enregistrées sur une chaîne de blocs ;
la conversion, par le nœud de chaîne de blocs et sur la base de la règle de conversion, du flux binaire pour obtenir les données de registre d'origine ;
le fait de déterminer (1804) si les données de registre d'origine associées au flux binaire satisfont à une règle d'enregistrement, la règle d'enregistrement comprenant un ou plusieurs paramètres d'entrée d'enregistrement associés à l'interface d'entrée d'enregistrement ;
en réponse à la détermination du fait que les données de registre d'origine satisfont à la règle d'enregistrement, l'enregistrement (1806) des données de registre d'origine sur la chaîne de blocs ;
la génération (1808) d'un récépissé d'enregistrement associé au flux binaire ; et
la transmission (1810), au dispositif client et par l'intermédiaire d'une interface de sortie d'enregistrement, du récépissé d'enregistrement.

2. Procédé mis en œuvre par ordinateur selon la revendication 1, comportant en outre :
la réception, en provenance de l'équipement client et par l'intermédiaire d'une interface d'entrée de vérification, de secondes données de registre ;
le fait de déterminer si les secondes données de registre satisfont une règle de vérification, la règle de vérification comprenant un ou plusieurs paramètres d'entrée de vérification associés à l'interface d'entrée de vérification ;
en réponse à la détermination du fait que les secondes données de registre satisfont à la règle de vérification, le fait de déterminer si les secondes données de registre correspondent aux données de registre d'origine enregistrées sur la chaîne de blocs ;
en réponse à la détermination du fait que les secondes données de registre correspondent aux données de registre d'origine enregistrées sur la chaîne de blocs, la génération d'un récépissé de vérification associé aux secondes données de registre, le récépissé de vérification indiquant que des données brutes associées aux secondes données de registre ne sont pas altérées ; et
la transmission, à l'équipement client et par l'intermédiaire d'une interface de sortie de vérification, du récépissé de vérification.

3. Procédé mis en œuvre par ordinateur selon la revendication 2, le fait de déterminer si les secondes données de registre correspondent aux données de registre d'origine comprenant le fait de déterminer si une première valeur de hachage comprise dans les données de registre d'origine correspond à une seconde valeur de hachage comprise dans les secondes données de registre.

4. Procédé mis en œuvre par ordinateur selon l'une quelconque des revendications précédentes, la règle de conversion comprenant au moins une règle parmi
un schéma de codage correspondant à chaque paramètre d'entrée d'enregistrement du ou des paramètres d'entrée d'enregistrement ; ou
un ordre d'agencement du ou des paramètres d'entrée d'enregistrement dans le flux binaire.

5. Procédé mis en œuvre par ordinateur selon l'une quelconque des revendications précédentes, comportant en outre :
l'invocation d'un module de minutage de confiance pour générer un premier horodatage d'enregistrement représentant un instant auquel le flux binaire est reçu ;
l'invocation d'un module d'identité de confiance pour vérifier une identité d'utilisateur associée au dispositif client ;
l'invocation du module de minutage de confiance pour générer un second horodatage d'enregistrement représentant un instant auquel les données du registre d'origine sont enregistrées sur la chaîne de blocs ; et
l'invocation d'un module informatique de confiance pour générer une transaction de chaîne de blocs comprenant les données de registre d'origine, l'identité de l'utilisateur, le premier horodatage d'enregistrement et le second horodatage d'enregistrement.

6. Procédé mis en œuvre par ordinateur selon l'une quelconque des revendications précédentes, comportant en outre :
avant de recevoir le flux binaire, l'établissement d'un canal de communication sécurisé avec le dispositif client sur la base d'au moins un protocole parmi un protocole de sécurité de couche de transport bidirectionnel, un protocole de transfert hypertexte bidirectionnel sécurisé, HTTPS, ou un protocole HTTPS unidirectionnel.

7. Procédé mis en œuvre par ordinateur selon l'une quelconque des revendications précédentes, le flux binaire étant associé à un premier fichier de données, et le ou les paramètres d'entrée d'enregistrement comprenant un ou plusieurs paramètres parmi une valeur de hachage du premier fichier de données, des informations d'attribut du premier fichier de données, des informations de service du premier fichier de données, un horodatage du premier fichier de données, et des données de signature du premier fichier de données.

8. Procédé mis en œuvre par ordinateur selon la revendication 2, les secondes données de registre étant associées à un second fichier de données, et le ou les paramètres d'entrée de vérification comprenant un ou plusieurs paramètres parmi une valeur de hachage du second fichier de données, des informations de service du second fichier de données, un horodatage du second fichier de données, et des données de signature du second fichier de données.

9. Système mis en œuvre par ordinateur, comprenant :
au moins un processeur ; et
un support de stockage non transitoire lisible par ordinateur couplé au(x) processeur(s) et stockant des instructions de programmation destinées à être exécutées par le ou les processeurs, les instructions de programmation donnant comme consigne au(x) processeur(s) de réaliser des opérations selon le procédé de l'une quelconque des revendications 1 à 8.

10. Appareil, l'appareil comportant une pluralité de modules destinés à réaliser le procédé selon l'une quelconque des revendications 1 à 8.
